(19) Europäisches Patentamt
European Patent Office
Office européen des brevets

(11) EP 3 303 518 B1

(12) **EUROPÄISCHE PATENTSCHRIFT**

(45) Veröffentlichungstag und Bekanntmachung des Hinweises auf die Patenterteilung:
**10.06.2020 Patentblatt 2020/24**

(21) Anmeldenummer: **16723249.5**

(22) Anmeldetag: **12.05.2016**

(51) Int Cl.:
***C09K 19/34*** (2006.01) ***C09K 19/30*** (2006.01)
***C09K 19/02*** (2006.01) ***C09K 19/12*** (2006.01)

(86) Internationale Anmeldenummer:
**PCT/EP2016/000780**

(87) Internationale Veröffentlichungsnummer:
**WO 2016/192834 (08.12.2016 Gazette 2016/49)**

# (54) FLÜSSIGKRISTALLINES MEDIUM

LIQUID-CRYSTAL MEDIUM

MILIEU CRISTAL LIQUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.05.2015 EP 15001611**

(43) Veröffentlichungstag der Anmeldung:
**11.04.2018 Patentblatt 2018/15**

(73) Patentinhaber: **Merck Patent GmbH**
**64293 Darmstadt (DE)**

(72) Erfinder:
- **ENGEL, Martin**
  **64291 Darmstadt (DE)**
- **KODEK, Thorsten**
  **64546 Moerfelden-Walldorf (DE)**
- **ALMEROTH, Ingo**
  **64625 Bensheim (DE)**
- **FORTTE, Rocco**
  **65933 Frankfurt am Main (DE)**
- **HEPPERT, Oliver**
  **64331 Weiterstadt (DE)**

(56) Entgegenhaltungen:
**EP-A2- 2 514 800** **EP-A2- 2 722 380**
**EP-A2- 2 722 381** **WO-A1-2016/031744**
**WO-A1-2016/031745** **DE-A1-102009 015 692**
**DE-A1-102011 117 937**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 303 518 B1

## Beschreibung

Die vorliegende Erfindung betrifft Flüssigkristallmedien, die Verwendung dieser Flüssigkristallmedien in Flüssigkristallanzeigen sowie diese Flüssigkristallanzeigen, besonders Flüssigkristallanzeigen, die den ECB-(electrically controlled birefringence) Effekt mit dielektrisch negativen Flüssigkristallen in einer homöotropen Ausgangsorientierung verwenden. Die erfindungsgemäßen Flüssigkristallmedien zeichnen sich durch eine besonders niedrige Schaltzeit in den erfindungsgemäßen Anzeigen bei gleichzeitig hohem Spannungshaltevermögen (Englisch "voltage holding ratio", kurz VHR oder auch nur HR) aus.

Das Prinzip der elektrisch kontrollierten Doppelbrechung, der ECB-Effekt oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, daß flüssigkristalline Phasen hohe Werte für das Verhältnis der elastischen Konstanten $K_3/K_1$, hohe Werte für die optische Anisotropie $\Delta n$ und Werte für die dielektrische Anisotropie $\Delta\varepsilon \leq -0{,}5$ aufweisen müssen, um für hochinformative Anzeigeelemente basierend auf dem ECB-Effekt eingesetzt werden zu können. Auf dem ECB-Effekt basierende elektrooptische Anzeigeelemente weisen eine homöotrope Randorientierung auf (VA-Technologie = Vertical Aligned). Auch bei Anzeigen, die den so genannten IPS- (In Plane Switching) Effekt verwenden, können dielektrisch negative Flüssigkristallmedien zum Einsatz kommen (S.H.Lee, S. L. Lee, H. Y. Kim, Appl. Phys. Lett. 1998, 73(20), 2881-2883).

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrischen Gleich- und Wechselfeldern.

Ferner wird von technisch verwendbaren FK-Phasen eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als FK-Phasen verwendbare Substanzen zu erhalten.

Matrix-Flüssigkristallanzeigen (MFK-Anzeigen) sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei im Allgemeinen Dünnfilm-Transistoren (TFT) verwendet werden, die in der Regel auf einer Glasplatte als Substrat angeordnet sind.

Man unterscheidet zwei Technologien: TFT's aus Verbindungshalbleitern wie z.B. CdSe oder TFT's auf der Basis von polykristallinem und u. a. amorphem Silizium. Letztere Technologie hat derzeit weltweit die größte kommerzielle Bedeutung.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, daß je ein Filterelement einem schaltbaren Bildelement gegenüber liegt.

Die bisher am meisten verwendeten TFT-Anzeigen arbeiten üblicherweise mit gekreuzten Polarisatoren in Transmission und sind von hinten beleuchtet. Für TV Anwendungen werden IPS-Zellen oder ECB- (bzw. VAN-) Zellen verwendet, wohingegen für Monitore meist IPS-Zellen oder TN- (Twisted Nematic) Zellen und für "Note Books", "Lap Tops" und für mobile Anwendungen meist TN-Zellen Verwendung finden.

Der Begriff MFK-Anzeigen umfaßt hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen, Monitore und "Note Books" oder für Displays mit hoher Informationsdichte z.B. in Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im Allgemeinen über die Lebenszeit einer MFK-Anzeige abnimmt, ist ein hoher (Anfangs)-Widerstand sehr wichtig für Anzeigen die akzeptable Widerstandswerte über eine lange Betriebsdauer aufweisen müssen.

Anzeigen, die den ECB-Effekt verwenden haben sich als so genannte VAN- (Vertically Aligned Nematic) Anzeigen neben IPS-Anzeigen (z.B.: Yeo, S.D., Vortrag 15.3: "A LC Display for the TV Application", SID 2004 International Symposium, Digest of Technical Papers, XXXV, Buch II, S. 758 und 759) und den lange bekannten TN-Anzeigen, als eine der drei zur Zeit wichtigsten neueren Typen von Flüssigkristallanzeigen insbesondere für Fernsehanwendungen etabliert.

Als wichtigste Bauformen sind hier zu nennen: MVA (Multi-Domain Vertical Alignment, z. B.: Yoshide, H. et al., Vortrag 3.1: "MVA LCD for Notebook or Mobile PCs ...", SID 2004 International Symposium, Digest of Technical Papers, XXXV, Buch I, S. 6 bis 9 und Liu, C.T. et al., Vortrag 15.1: "A 46-inch TFT-LCD HDTV Technology ...", SID 2004 International Symposium, Digest of Technical Papers, XXXV, Buch II, S. 750 bis 753), PVA (Patterned Vertical Alignment, z. B.: Kim, Sang Soo, Vortrag 15.4: "Super PVA Sets New State-of-the-Art for LCD-TV", SID 2004 International Symposium, Digest of Technical Papers, XXXV, Buch II, S. 760 bis 763) und ASV (Avanced Super View, z. B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757).

In allgemeiner Form werden die Technologien z.B. in Souk, Jun, SID Seminar 2004, Seminar M-6: "Recent Advances in LCD Technology", Seminar Lecture Notes, M-6/1bis M-6/26 und Miller, Ian, SID Seminar 2004, Seminar M-7: "LCD-Television", Seminar Lecture Notes, M-7/1 bis M-7/32, verglichen. Obwohl die Schaltzeiten moderner ECB-Anzeigen durch Ansteuerungsmethoden mit Übersteuerung (overdrive) bereits deutlich verbessert wurden, z.B.: Kim, Hyeon Kyeong et al., Vortrag 9.1: "A 57-in. Wide UXGA TFT-LCD for HDTV Application", SID 2004 International Symposium, Digest of Technical Papers, XXXV, Buch I, S. 106 bis 109, ist die Erzielung von videotauglichen Schaltzeiten insbesondere beim Schalten von Graustufen immer noch ein noch nicht zufriedenstellend gelöstes Problem.

Lee, H.S., Lee, S.L. und Kim, H.Y. beschreiben IPS und FFS-Anzeigen, die dielektrisch negative Flüssigkristalle verwenden. Diese, insbesondere die letzteren werden im Folgenden als UB FFS Anzeigen (ultra bright FFS) bezeichnet. Derartig Anzeigen wurde auch in entsprechenden Vorträgen von Seung Hee Lee bei der Display week im Mai 2013 und im Jahr 2014 vorgestellt.

FFS Anzeigen, die dielektrisch negative Flüssigkristallmedien verwenden, werden im folgenden auch als UB-FFS (ultra bright fringe field switching) Anzeigen bezeichent.

ECB-Anzeigen verwenden wie ASV-Anzeigen flüssigkristalline Medien mit negativer dielektrischer Anisotropie ($\Delta\varepsilon$), wohingegen TN- und bislang alle gebräuchlichen IPS-Anzeigen flüssigkristalline Medien mit positiver dielektrischer Anisotropie verwenden.

In derartigen Flüssigkristallanzeigen werden die Flüssigkristalle als Dielektrika verwendet, deren optische Eigenschaften sich bei Anlegen einer elektrischen Spannung reversibel ändern.

Da bei Anzeigen im allgemeinen, also auch bei Anzeigen nach diesen erwähnten Effekten, die Betriebsspannung möglichst gering sein soll, werden Flüssigkristallmedien eingesetzt, die in der Regel überwiegend aus Flüssigkristallverbindungen zusammengesetzt sind, die alle das gleiche Vorzeichen der dielektrischen Anisotropie aufweisen und einen möglichst großen Betrag der dielektrischen Anisotropie haben. Es werden in der Regel allenfalls geringere Anteile an neutralen Verbindungen und möglichst keine Verbindungen mit einem Vorzeichen der dielektrischen Anisotropie, das dem des Mediums entgegengesetzt ist, eingesetzt. Bei den Flüssigkristallmedien mit negativer dielektrischer Anisotropie für ECB-Anzeigen werden somit überwiegend Verbindungen mit negativer dielektrischer Anisotropie eingesetzt. Die eingesetzten Flüssigkristallmedien bestehen in der Regel überwiegend und meist sogar weitestgehend aus Flüssigkristallverbindungen mit negativer dielektrischer Anisotropie.

Bei den gemäß der vorliegenden Anmeldung verwendeten Medien werden typischerweise allenfalls nennenswerte Mengen an dielektrisch neutralen Flüssigkristallverbindungen und in der Regel nur sehr geringe Mengen an oder gar keine dielektrisch positiven Verbindungen eingesetzt, da generell die Flüssigkristallanzeigen möglichst niedrige Ansteuerspannungen haben sollen.

Für viele praktische Anwendungen in Flüssigkristallanzeigen sind die bekannten Flüssigkristallmedien jedoch nicht stabil genug. Insbesondere ihre Stabilität gegen die Bestrahlung mit UV, aber auch bereits mit den üblichen Hintergrundbeleuchtungen führt zu einer Verschlechterung insbesondere der elektrischen Eigenschaften. So nimmt z. B. die Leitfähigkeit signifikant zu.

Zur Stabilisierung von Flüssigkristallmischungen wurde bereits die Verwendung von sogenannten "Hindered Amine Light Stabilizers", kurz HALS, vorgeschlagen.

Nematische Flüssigkristallmischungen mit negativer dielektrischer Anisotropie, die eine geringe Menge an TINUVIN®770, einer Verbindung der Formel

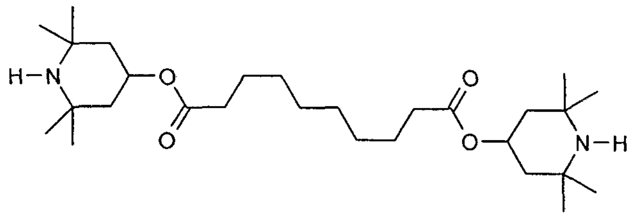

,

als Stabilisatoren enthalten, werden z.B. in WO 2009/129911 A1 vorgeschlagen. Die entsprechenden Flüssigkristallmischungen haben jedoch für einige praktische Anwendungen nicht ausreichende Eigenschaften. Unter anderem sind sie nicht genügend stabil gegen die Belastung durch die Bestrahlung mit typischen CCFL- (Cold Cathode Fluorescent Lamp) Hintergrundbeleuchtungen.

Ähnliche Flüssigkristallmischungen sind z.B. auch aus EP 2 182 046 A1, WO 2008/009417 A1, WO 2009/021671 A1 und WO 2009/115186 A1 bekannt. Diese Flüssigkristallmischungen können gemäß der dortigen Offenbarung optional auch Stabilisatoren verschiedener Arten, wie z. B. Phenole und sterisch gehinderte Amine (Englisch: hindered amine light stabilizers, kurz: HALS) enthalten.

Diese Flüssigkristallmischungen können, je nach Anwendung in unterschiedlichem Ausmaß, ggf. eine Verschlechterung eines oder mehrerer beim Betrieb einer Flüssigkristallanzeige relevanter Parameter zeigen: Insbesondere sinkt deren "Voltage Holding Ratio" nach Belastung. Außerdem kann bei extremen Belastungen eine gelbliche Verfärbung auftreten.

Die Verwendung verschiedener Stabilisatoren in flüssigkristallinen Medien wird z. B. in JP (S)55-023169 (A), JP (H)05-117324 (A), WO 02/18515 A1 und JP (H) 09-291282 (A) beschrieben.

Mesogene Verbindungen mit einer oder zwei HALS-Einheiten werden in EP 1 1784 442 A1 offenbart.

HALS mit verschiedenen Substituenten am Stickstoffatom werden in Ohkatsu, Y., J. of Japan Petroleum Institute, 51, 2008, Seiten 191-204 bezüglich ihrer $pK_B$-Werte verglichen. Dabei werden die folgenden Typen von Strukturformeln offenbart.

| Typ | Aktive Gruppe des Stabilisators |
|---|---|
| "HALS" | 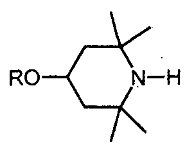 |
| "R-HALS" oder "NR-HALS" | 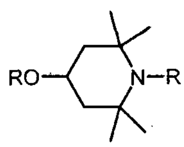 |
| "NOR-HALS" | 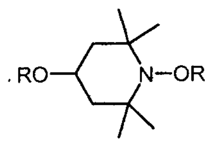 |

Aus dem Stand der Technik sind Verbindungen zur Anwendung in Flüssigkristallmischungen bekannt, die zwei n-Alkoxygruppen enthalten, wie z.B. Bis-(1-oktyloxy-2,2,6,6-tetramethyl-4-piperidinyl) sebacat (auch Dekandisäurebis(2,2,6,6-tetramethyl-4-piperidinyl) ester u.a. auch bekannt als das Tinuvin® 123)

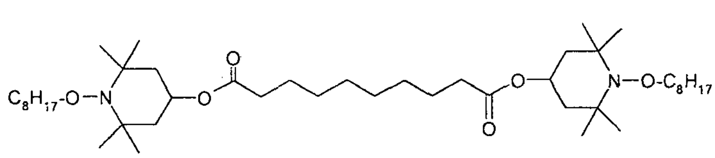

Weiterhin sind aus dem Stand der Technik Verbindungen zur Anwendung in Flüssigkristallmischungen bekannt, die zwei verzweigte Alkoxygruppen enthalten, wie z.B. die in EP 2514800 B1 und WO 2013/182271 A1 offengelegten

Verbindungen der Formeln:

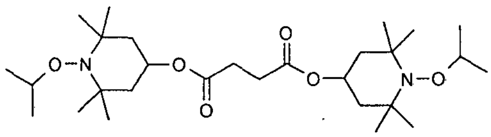

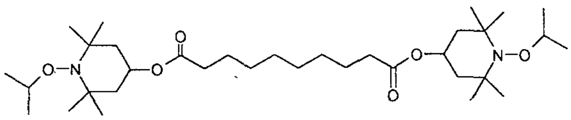

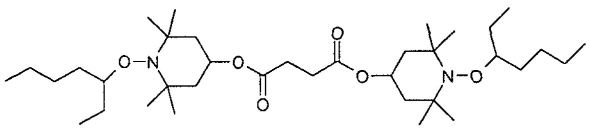

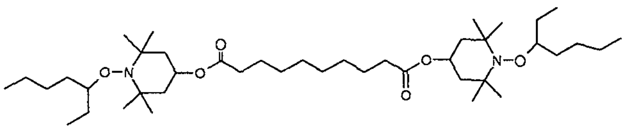

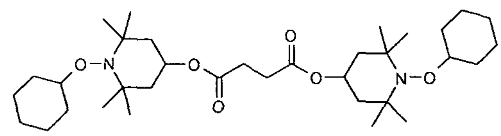

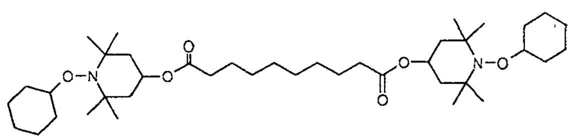

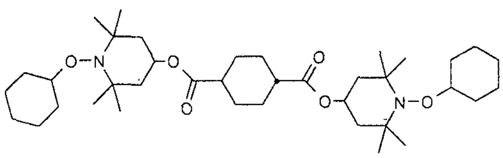

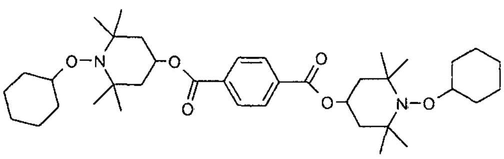

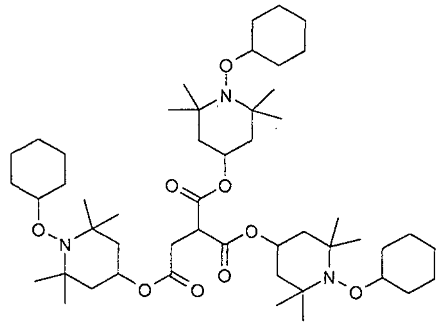

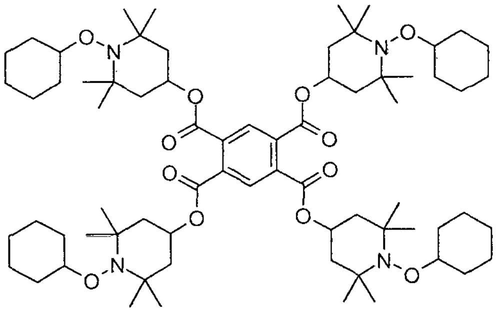

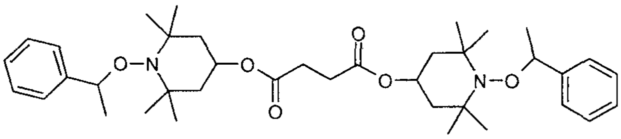

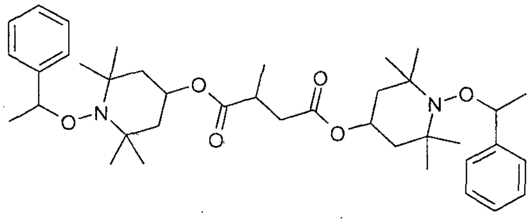

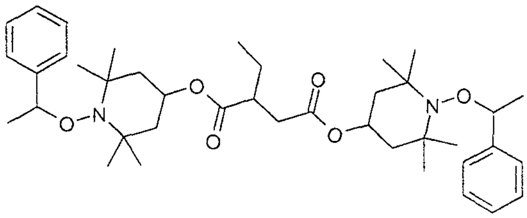

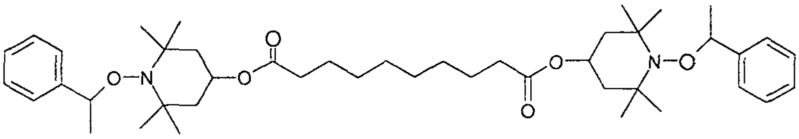

Die Flüssigkristallmedien des Standes der Technik mit entsprechend niedrigen Ansteuerspannungen haben relativ geringe elektrische Widerstände bzw. eine noch nicht ausreichende, weil zu geringe VHR und führen in den Anzeigen oft zu unerwünschtem "Flicker" und/oder ungenügender Transmission. Außerdem sind sie nicht ausreichend stabil gegen Temperatur- und/oder UV-Belastung, zumindest dann, wenn sie eine entsprechend hohe Polarität aufweisen, wie sie für niedrige Ansteuerspannungen nötig ist.

Andererseits ist die Ansteuerspannung der Anzeigen des Standes der Technik, die eine hohe VHR aufweisen, oft zu groß, insbesondere für Anzeigen die nicht direkt oder nicht durchgehend an das Stromversorgungsnetz angeschlossen werden wie z. B. Anzeigen für mobile Anwendungen.

Außerdem muß der Phasenbereich der Flüssigkristallmischung ausreichend breit für die beabsichtigte Anwendung der Anzeige sein.

Die Schaltzeiten der Flüssigkristallmedien in den Anzeigen müssen verbessert, also verringert, werden. Dies ist besonders für Anzeigen für Fernseh- oder Multi-Media Anwendungen wichtig. Zur Verbesserung der Schaltzeiten ist in der Vergangenheit wiederholt vorgeschlagen worden, die Rotationsviskosität der Flüssigkristallmedien ($\gamma_1$) zu optimieren, also Medien mit einer möglichst geringen Rotationsviskosität zu realisieren. Die dabei erzielten Ergebnisse sind jedoch nicht ausreichend für viele Anwendungen und lassen es daher wünschenswert erscheinen, weitere Optimierungsansätze aufzufinden.

Ganz besonders wichtig ist eine ausreichende Stabilität der Medien gegen extreme Belastungen, insbesondere gegen UV- und Temperaturbelastung. Besonders bei Anwendungen in Anzeigen in mobilen Geräten wie z. B. Mobiltelefonen kann dieses entscheidend sein. Der Nachteil der bisher bekannten MFK-Anzeigen beruht auf ihrem vergleichsweise niedrigen Kontrast, der relativ hohen Blickwinkelabhängigkeit und der Schwierigkeit in diesen Anzeigen Graustufen zu erzeugen, sowie ihrer ungenügenden VHR und ihrer ungenügenden Lebensdauer.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung, mit deren Hilfe verschiedene Graustufen erzeugt werden können und die insbesondere eine gute und stabile VHR aufweisen.

Der Erfindung liegt die Aufgabe zugrunde MFK-Anzeigen, nicht nur für Monitor- und TV-Anwendungen, sondern auch für Mobiltelefone und Navigationssysteme, welche auf dem ECB- oder auf dem IPS- oder FFS-Effekt beruhen, bereitzustellen, die die oben angegebenen Nachteile nicht oder nur in geringerem Maße und gleichzeitig sehr hohe spezifische Widerstände aufweisen. Insbesondere muß für Mobiltelefone und Navigationssysteme gewährleistet sein, daß diese auch bei extrem hohen und extrem niedrigen Temperaturen arbeiten.

Besonders problematisch ist in vielen Fälllen auch die mangelnde Stabilität, insbesondere der Voltage Holding Ration, gegen belasung mit UV und selbst mit einer Hintergrundbeleuchtung.

Überraschend wurde gefunden, daß Flüssigkristallanzeigen realisiert werden können, die insbesondere in ECB-Anzeigen und in "UB FFS" Anzeigen eine niedrige Schwellenspannung bei geringen Schaltzeiten aufweisen und gleichzeitig eine ausreichend breite nematische Phase, eine günstige, relativ niedrige Doppelbrechung ($\Delta n$), gute Stabilität gegen Zersetzung durch thermische und durch UV-Belastung und eine stabile hohe VHR aufweisen, wenn man in diesen Anzeigeelementen nematische Flüssigkristallmischungen, wie in Anspruch 1 und nachfolgend definiert, verwendet, die mindestens eine Verbindung der Formel I, sowie jeweils mindestens eine Verbindung der Formel II, bevorzugt ausgewählt aus der Gruppe der Verbindungen der Unterformeln II-1 bis II-4, besonders bevorzugt der Unterformeln II-1 und/oder II-2, und bevorzugt zusätzlich mindestens eine Verbindung ausgewählt aus der Gruppe der Verbindungen der Formeln II-1 bis II-4, bevorzugt der Formel II-3, enthalten und/oder mindestens eine Verbindung der Formeln IV und/oder V und eine Verbindung der Formel III, bevorzugt der Formel III-3.

Derartige Medien sind insbesondere für elektrooptische Anzeigen mit einer Aktivmatrix-Adressierung basierend auf dem ECB-Effekt sowie für IPS-Anzeigen und insbesondere für (UB) FFS Anzeigen zu verwenden.

Gegenstand der Erfindung ist somit ein flüssigkristallines Medium auf der Basis eines Gemisches von polaren Verbindungen, welches mindestens eine Verbindung der Formel I und eine oder mehrere Verbindungen der Formel II und bevorzugt zusätzlich eine oder mehrere Verbindungen ausgewählt aus der Gruppe der Verbindungen der Formeln II-1 bis II-4 und/oder zusätzlich eine oder mehrere Verbindungen der Formeln IV und/oder V enthält.

Die erfindungsgemäßen Mischungen zeigen sehr breite nematische Phasenbereiche mit Klärpunkten $\geq 70°C$, sehr günstige Werte für die kapazitive Schwelle, relativ hohe Werte für die Holding Ratio und gleichzeitig gute Tieftemperaturstabilitäten bei -20°C und -30°C, sowie sehr geringe Rotationsviskositäten. Weiterhin zeichnen sich die erfindungsgemäßen Mischungen durch ein gutes Verhältnis von Klärpunkt und Rotationsviskosität und durch eine hohe negative dielektrische Anisotropie aus.

Überraschenderweise wurde nun gefunden, daß flüssigkristalline Medien mit einem geeignet hohen $\Delta\varepsilon$, einem geeigneten Phasenbereich und $\Delta n$ verwirklicht werden können, welche die Nachteile der Materialien des Standes der Technik nicht oder zumindest nur in erheblich geringerem Maße aufweisen. Hier wurde überraschend gefunden, daß die Verbindungen der Formel I, auch wenn sie alleine ohne zusätzliche Temperaturstabilisatoren verwendet werden, zu einer erheblichen, in vielen Fällen ausreichenden, Stabilisierung von Flüssigkristallmischungen sowohl gegen UV-Belastung als auch gegen Temperaturbelastung führen.

Eine ausreichende Stabilisierung von Flüssigkristallmischungen sowohl gegen UV-Belastung, als auch gegen Temperaturbelastung kann aber auch insbesondere dann erreicht werden, wenn zusätzlich zu der Verbindung der Formel I oder den Verbindungen der Formel I eine oder mehrere weitere Verbindungen, bevorzugt phenolische Stabilisatoren, in der Flüssigkristallmischung zugegen sind. Diese weiteren Verbindungen sind als Stabilisatoren gegen thermische Belastungen geeignet.

Die Erfindung betrifft somit die Verwendung der Verbindungen der Formel I, sowie ein flüssigkristallines Medium mit einer nematischen Phase und einer negativen dielektrischen Anisotropie, welches

a) eine oder mehrere Verbindungen der Formel I, bevorzugt in einer Konzentration im Bereich von 1 ppm bis zu 1.000 ppm, bevorzugt im Bereich von 50 ppm bis zu 500 ppm, besonders bevorzugt im Bereich von 150ppm bis zu 350 ppm,

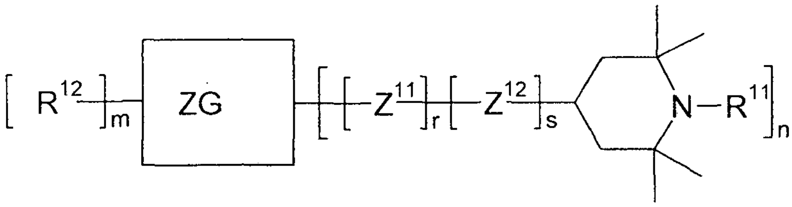

I

worin

n 2 oder 3, bevorzugt 2,

m (4-n),

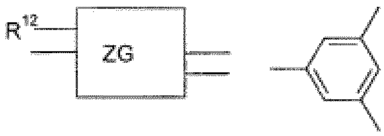

(Benzol-1,3,5-triyl) oder

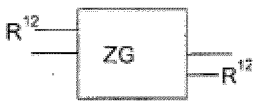

$-(CH_2-)_2$, $-(CH_2-)_4$, $-(CH_2-)_6$, $-(CH_2-)_8$, Oktan-1,8-diyl, Propan-1,3-diyl, Butan-1,4-diyl, Ethan-1,2-diyl,

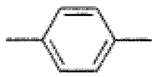

(1,4-Phenylen),

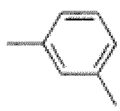

(1,3-Phenylen),

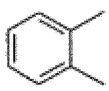

(1,2-Phenylen) oder

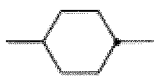

(*trans*-1,4-Cyclohexylen)

$Z^{11}$ und $Z^{12}$ unabhängig voneinander -O-, -(C=O)- oder eine Einfachbindung, jedoch nicht beide gleichzeitig -O-,

r und s unabhängig voneinander 0 oder 1,

$R^{11}$ bei jedem Auftreten unabhängig voneinander eine geradkettige oder verzweigte Alkylkette mit 1-20 C-Atomen, in der eine $-CH_2-$ -Gruppe oder mehrere $-CH_2-$-Gruppen durch -O- oder -C(=O)- ersetzt sein können, jedoch nicht zwei benachbarte $-CH_2-$ -Gruppen durch -O- ersetzt sein können, eine Cycloalkyl- oder eine Alkylcycloalkyleinheit, einen Kohlenwasserstoffrest, der eine Cycloalkyl- oder eine Alkylcycloalkyleinheit enthält, und, in dem eine $-CH_2-$ -Gruppe oder mehrere $-CH_2-$-Gruppen durch -O- oder -C(=O)- ersetzt sein können, jedoch nicht zwei benachbarte $-CH_2-$ -Gruppen durch -O- ersetzt sein können, eine Aryl- oder eine Arylalkyleinheit, einen Kohlenwasserstoffrest, der eine Aryl- oder eine Arylalkyleinheit enthält, und, in dem eine $-CH_2-$ -Gruppe oder mehrere $-CH_2-$ -Gruppen durch -O-oder -C(=O)- ersetzt sein können, jedoch nicht zwei benachbarte $-CH_2-$ -Gruppen durch -O- ersetzt sein können, oder

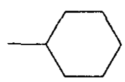

(-Cyclohexyl), worin eine oder mehrere $-CH_2-$-Gruppen durch -O- oder -CO- ersetzt sein können, oder ein Acetophenyl-, Methyl-, *iso*-Propyl- oder 3-Heptylrest sein kann, und

$R^{12}$ bei jedem Auftreten unabhängig voneinander H, F, eine geradkettige oder verzweigte Alkylkette mit 1-20 C-Atomen, in der eine $-CH_2-$ -Gruppe oder mehrere $-CH_2-$-Gruppen durch -O- oder -C(=O)- ersetzt sein können, jedoch nicht zwei benachbarte $-CH_2-$ -Gruppen durch -O- ersetzt sein können, einen Kohlenwasserstoffrest, der eine Cycloalkyl- oder eine Alkylcycloalkyleinheit enthält, und, in dem eine $-CH_2-$ -Gruppe oder mehrere-$CH_2-$ -Gruppen durch -O- oder -C(=O)- ersetzt sein können, jedoch nicht zwei benachbarte $-CH_2-$ -Gruppen durch -O- ersetzt sein können, oder ein aromatischer oder heteroaromatischen Kohlenwasserstoffrest,

bedeutet,

b) eine oder mehrere Verbindungen der Formel II

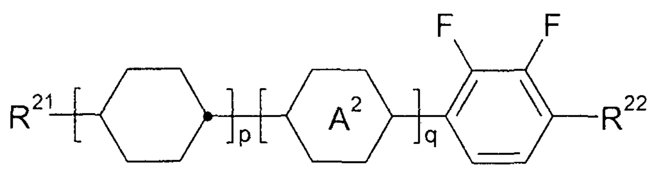

II

enthält,
worin

$R^{21}$ einen unsubstituierten Alkenylrest mit 2 bis 7 C-Atomen,

$R^{22}$ einen unsubstituierten Alkylrest mit 1 bis 7 C-Atomen oder einen unsubstituierten Alkoxyrest mit 1 bis 6 C-Atomen,

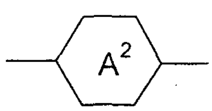

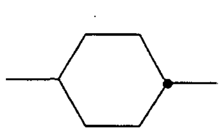

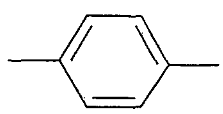

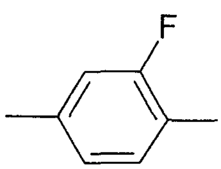

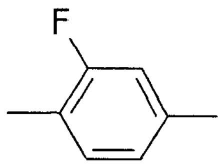 oder 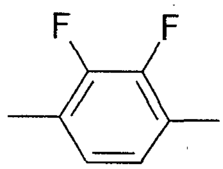 ,

p und q jeweils unabhängig voneinander 0, 1 oder 2 und

(p + q) 1, 2 oder 3,

bedeutet,

c) eine oder mehrere Verbindungen der Formel III

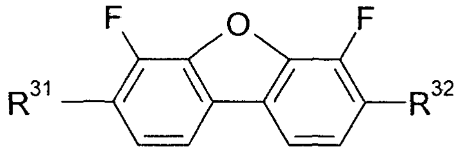

III

worin

$R^{31}$, $R^{32}$ unabhängig voneinander einen unsubstituierten Alkylrest mit 1 bis 7 C-Atomen, bevorzugt einen n-Alkylrest, besonders bevorzugt mit 2 bis 5 C-Atomen, oder einen unsubstituierten Alkoxyrest mit 2 bis 7 C-Atomen, besonders bevorzugt mit 2 bis 5 C-Atomen,

bedeuten,
wobei bevorzugt mindestens einer der Reste $R^{31}$ und $R^{32}$ Alkoxy bedeutet,
und

d) optional, bevorzugt obligatorisch, eine oder mehrere Verbindungen ausgewählt aus der Gruppe der Verbindungen der Formeln IV und V, bevorzugt der Formel IV,

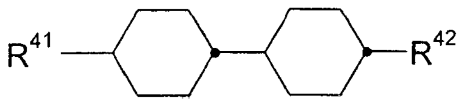

IV

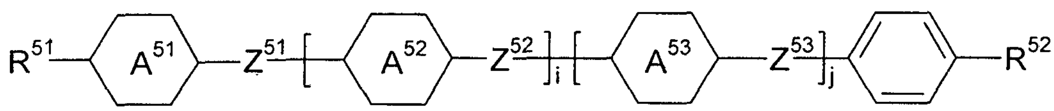

V

worin

$R^{41}$ einen unsubstituierten Alkylrest mit 1 bis 7 C-Atomen oder einen unsubstituierten Alkenylrest mit 2 bis 7 C-Atomen, bevorzugt einen n-Alkylrest, besonders bevorzugt mit 2, 3, 4 oder 5 C-Atomen, und

$R^{42}$ einen unsubstituierten Alkylrest mit 1 bis 7 C-Atomen oder einen unsubstituierten Alkoxyrest mit 1 bis 6 C-Atomen, beide bevorzugt mit 2 bis 5 C-Atomen, einen unsubstituierten Alkenylrest mit 2 bis 7 C-Atomen, bevorzugt mit 2, 3 oder 4 C-Atomen, stärker bevorzugt einen Vinylrest oder einen 1-Propenylrest und insbesondere einen Vinylrest,

$R^{51}$ und $R^{52}$ unabhängig voneinander eine der für $R^{21}$ und $R^{22}$ gegebenen Bedeutungen haben und bevorzugt Alkyl mit 1 bis 7 C-Atomen, bevorzugt *n*-Alkyl, besonders bevorzugt *n*-Alkyl mit 1 bis 5 C-Atomen, Alkoxy mit 1 bis 7 C-Atomen, bevorzugt *n*-Alkoxy, besonders bevorzugt *n*-Alkoxy mit 2 bis 5 C-Atomen, Alkoxyalkyl, Alkenyl oder Alkenyloxy mit 2 bis 7 C-Atomen, bevorzugt mit 2 bis 4 C-Atomen, bevorzugt Alkenyloxy,

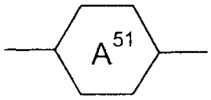

bis

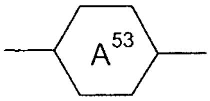

,

soweit vorhanden, jeweils unabhängig voneinander

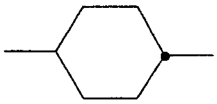

,

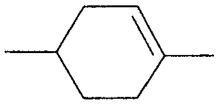

,

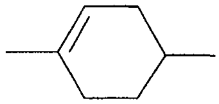

,

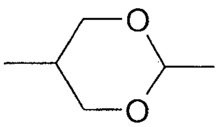

,

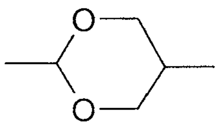

,

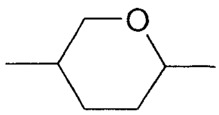

,

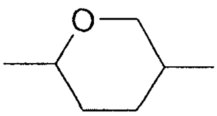

,

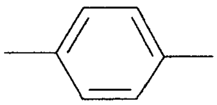

,

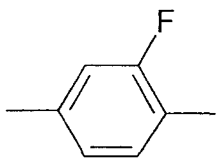

,

oder

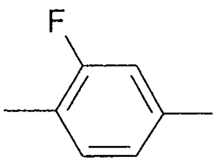

,

bevorzugt

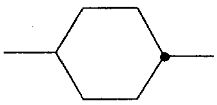

,

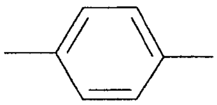

,

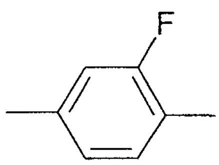

,

oder

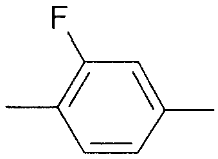

,

bevorzugt

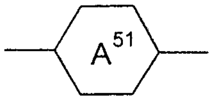 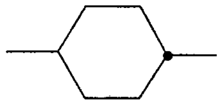

und, wenn vorhanden,

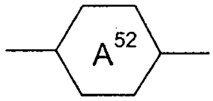

bevorzugt

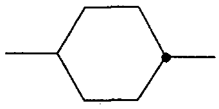

,

$Z^{51}$ bis $Z^{53}$ jeweils unabhängig voneinander $-CH_2-CH_2-$, $-CH_2-O-$, -CH=CH-, -C=C-, -COO- oder eine Einfachbindung, bevorzugt $-CH_2-CH_2-$, $-CH_2-O-$ oder eine Einfachbindung und besonders bevorzugt eine Einfachbindung,

i und j jeweils unabhängig voneinander 0 oder 1,

(i + j) bevorzugt 0 oder 1,

bedeuten,
enthält.

In der vorliegenden Erfindung bedeutet bei den Verbindungen der Formel I

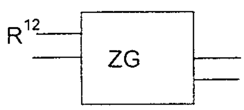 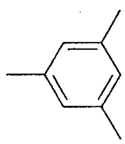

(Benzol-1,3,5-triyl) oder

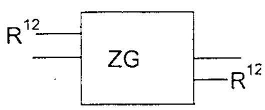

$-(CH_2-)_2$, $-(CH_2-)_4$, $-(CH_2-)_6$, $-(CH_2-)_8$,
Oktan-1,8-diyl, Propan-1,3-diyl, Butan-1,4-diyl, Ethan-1,2-diyl,

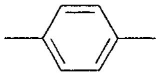

(1,4-Phenylen),

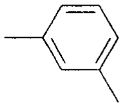

(1,3-Phenylen),

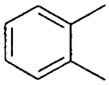

(1,2-Phenylen) oder

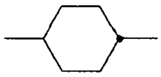

(*trans*-1,4-Cyclohexylen) und/oder

$-[Z^{11}-]_r-[Z^{12}-]_s$ bei jedem Auftreten unabhängig voneinander -O-, -(C=O)-O- oder -O-(C=O)-, $-(N-R^{14})-$ oder eine Einfachbindung, bevorzugt -O- oder -(C=O)-O- oder -O-(C=O)-, und/oder

$R^{11}$ bevorzugt: $-CH(-CH_3)_2$, $-CH(-CH_3)(-CH_2)_3-CH_3$, $-CH(-C_2H_5)(-CH_2)_3-CH_3$,

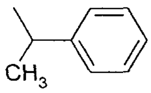

oder

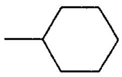

und/oder

$R^{12}$, wenn vorhanden, Alkyl oder Alkoxy.

Bevorzugt sind die folgenden Ausführungsformen in denen die Parameter die folgenden Bedeutungen haben

n 2 und

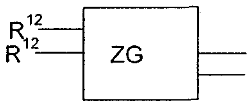

,

mit $R^{12}$ substituiertes geradkettiges oder verzweigtes zweibindiges Alkyl mit 2 bis 24 C-Atomen,

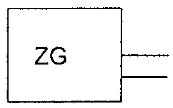

ein organischer Rest mit 2 Bindungsstellen, bevorzugt eine Alkandiyleinheit mit 1 bis 20 C-Atomen in der zusätzlich zu den im Molekül vorhandenen m Gruppen $R^{12}$, aber unabhängig davon, ein weiteres H-Atom durch $R^{12}$ ersetzt sein kann oder mehrere weitere H-Atome durch $R^{12}$ ersetzt sein können und worin eine-$CH_2$- -Gruppe oder mehrere -$CH_2$- -Gruppen durch -O-oder -(C=O)- so ersetzt sein können, daß nicht zwei O-Atome direkt miteinander verbunden sind, oder ein substituierter oder unsubstituierter aromatischer oder heteroaromatischer Kohlenwasserstoffrest mit 2 Bindungsstellen, bevorzugt $-CH_2-[CH_2]_p-CH_2-$ (mit p $\in$ {0, 1, 2, 3, 4, 5 to 18}), Oktan-1,8-diyl, Propan-1,3-diyl, Butan-1,4-diyl, Ethan-1,2-diyl,

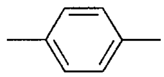

(1,4-Phenylen),

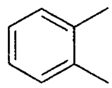

(1,2-Phenylen) oder

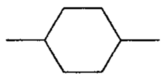

(1,4-Cyclohexylen)

oder

n 3, und

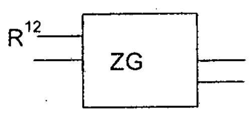

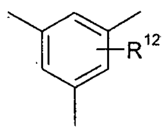

(Benzol-1,3,5-triyl) oder
mit $R^{12}$ substituiertes geradkettiges oder verzweigtes dreibindiges Alkyl mit 2 bis 24 C-Atomen.

In der vorliegenden Anmeldung bedeutet "dreibindiges Alkyl" eine Alkylgruppe, die an drei Positionen weitere Substituenten tragen kann. Ebenso bedeutet "vierbindiges Alkyl" eine Alkylgruppe, die an vier weiteren Positionen weitere Substituenten tragen kann.

In der vorliegenden Anmeldung umfassen die Elemente alle ihre jeweiligen Isotope. Insbesondere können in den Verbindungen ein oder mehrere H durch D ersetzt sein und dieses ist in einigen Ausführungsformen auch besonders bevorzugt. Ein entsprechend hoher Deuterierungsgrad der entsprechenden Verbindungen ermöglicht z.B. eine Detektion und Wiedererkennung der Verbindungen. Dieses ist insbesondere bei den Verbindungen der Formel I in einigen Fällen sehr hilfreich.

In der vorliegenden Anmeldung bedeutet

Alkyl besonders bevorzugt geradkettiges Alkyl, insbesondere $CH_3$-, $C_2H_5$-, *n*-$C_3H_7$, *n*-$C_4H_9$- oder *n*-$C_5H_{11}$-, und

Alkenyl besonders bevorzugt $CH_2$=CH-, *E*-$CH_3$-CH=CH-, $CH_2$=CH-$CH_2$-$CH_2$-, *E*-$CH_3$-CH=CH-$CH_2$-$CH_2$- oder *E*-(*n*-$C_3H_7$)-CH=CH-,

Alkoxy besonders bevorzugt geradkettiges Alkoxy, insbesondere $CH_3O$-, $C_2H_5O$-, *n*-$C_3H_7O$-, *n*-$C_4H_9O$- oder *n*-$C_5H_{11}O$-,

Bevorzugt enthalten die flüssigkristallinen Medien gemäß der vorliegenden Anmeldung insgesamt 1 ppm bis 1.000 ppm, bevorzugt 50 ppm bis 500 ppm, noch stärker bevorzugt 150 bis 450 ppm, bevorzugt bis 400 ppm, und, ganz besonders bevorzugt, 250 ppm bis 350 ppm an Verbindungen der Formel I.

Bevorzugt beträgt die Konzentration der Verbindungen der Formel I in den erfindungsgemäßen Medien 900 ppm oder weniger, besonders bevorzugt 500 ppm oder weniger. Ganz besonders bevorzugt beträgt die Konzentration der Verbindungen der Formel I in den erfindungsgemäßen Medien 10 ppm oder mehr bis 400 ppm oder weniger.

In einer bevorzugten Ausführungsform der vorliegenden Erfindung bedeutet bei den Verbindungen der Formel I

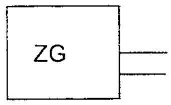

$-CH_2-[CH_2]_p-CH_2-$ (mit $p \in \{0, 1, 2, 3, 4, 5$ to $18\}$), Oktan-1,8-diyl, Propan-1,3-diyl, Butan-1,4-diyl, Ethan-1,2-diyl,

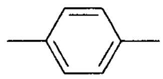

(1,4-Phenylen),

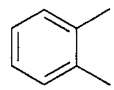

(1,2-Phenylen) oder

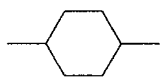

(1,4-Cyclohexylen) und

$-[Z^{11}-]_r-[Z^{12}-]_s$ bei jedem Auftreten unabhängig voneinander -O-, -(C=O)-O- oder -O-(C=O)-, und

$R^{11}$ Methyl, 1-Methyl-ethyl oder 1-Phenyl-ethyl, bevorzugt 1-Methyl-ethyl oder 1-Phenyl-ethyl, bedeutet.

In einer bevorzugten Ausführungsform der vorliegenden Erfindung bedeutet bei den Verbindungen der Formel I die Gruppierung

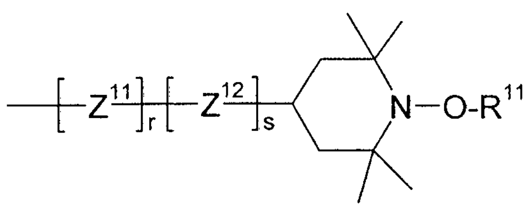

bei jedem Auftreten

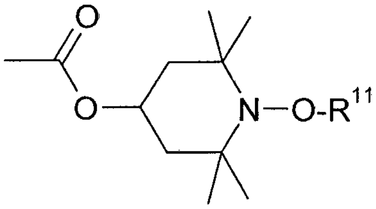

Diese Verbindungen eignen sich hervorragend als Stabilisatoren in Flüssigkristallmischungen. Insbesondere stabilisieren sie die VHR der Mischungen gegen UV-Belastung.

In einer bevorzugten Ausführungsform der vorliegenden Erfindung enthalten die erfindungsgemäßen Medien jeweils eine oder mehrere Verbindungen der Formel I ausgewählt aus den Verbindungen der Formeln I-1 bis I-4 bzw. I-5, bevorzugt ausgewählt aus der Gruppe der Verbindungen der Formeln I-1 und I-2 und/oder I-5,

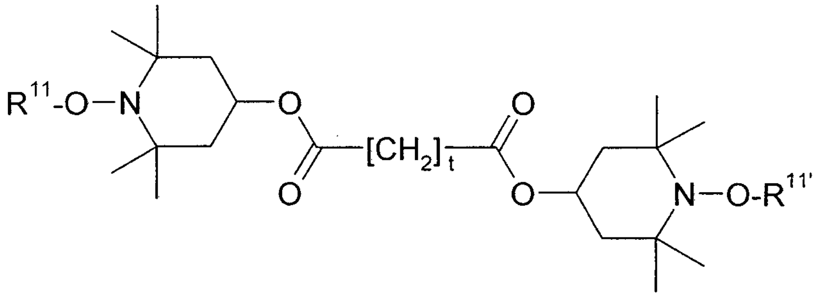

I-1

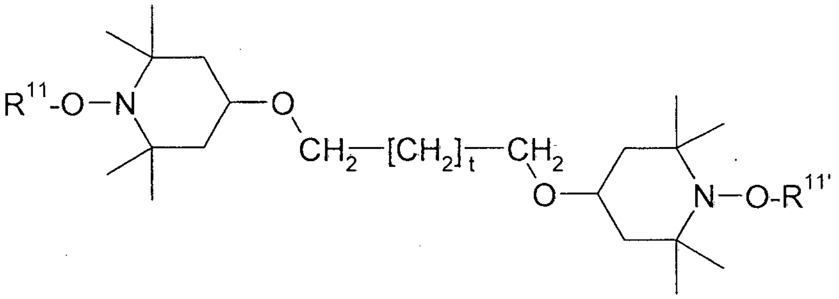

I-2

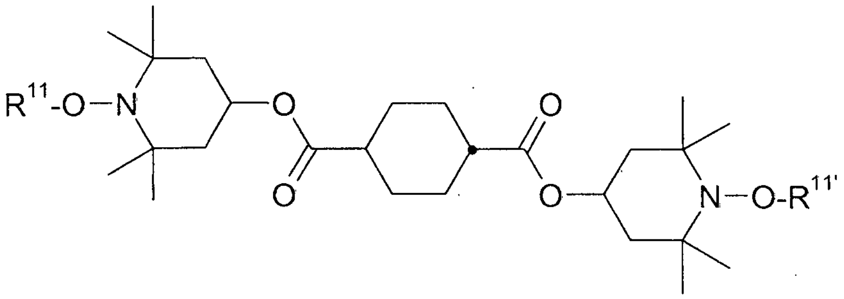

I-3

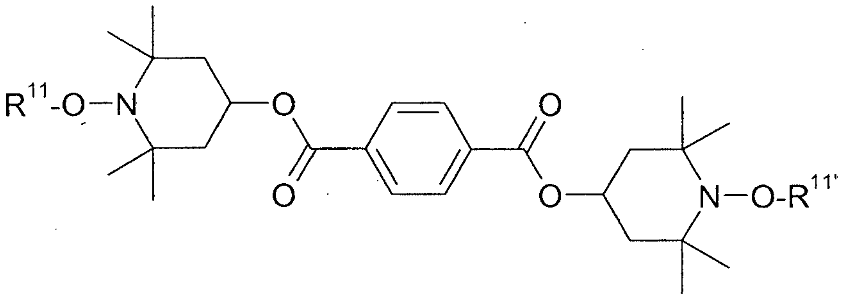

I-4

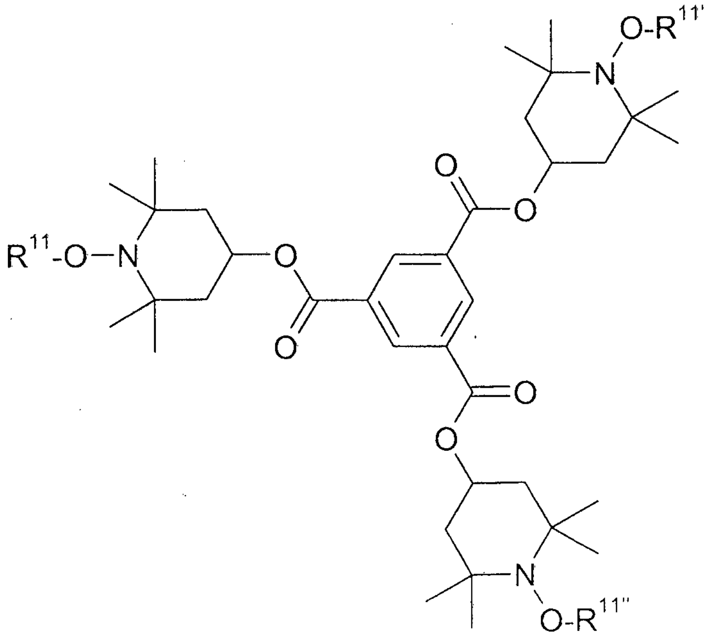

I-5

worin die Parameter die oben unter Formel I angegebenen Bedeutungen haben und

t eine ganze Zahl von 1 bis12

bedeutet und
bei Formeln I-1 bis I-4

$R^{11}$ und $R^{11'}$ jeweils unabhängig voneinander einer der oben bei Formel I für $R^{11}$ gegebenen Bedeutungen haben, bevorzugt Methyl, 1-Methyl-ethyl oder 1-Phenyl-ethyl bedeuten und, besonders bevorzugt, beide die gleiche Bedeutung haben.

bei Formel I-5

$R^{11}$ bis $R^{11''}$ jeweils unabhängig voneinander einer der oben bei Formel I für $R^{11}$ gegebenen Bedeutungen haben, bevorzugt Methyl, 1-Methyl-ethyl oder 1-Phenyl-ethyl bedeuten und, besonders bevorzugt, alle die gleiche Bedeutung haben.

Die erfindungsgemäßen flüssigkristallinen Medien enthalten bevorzugt eine oder mehrere Verbindungen der Formel II ausgewählt aus der Gruppe der Formeln II-1 bis II-4, bevorzugt der Formel II-3,

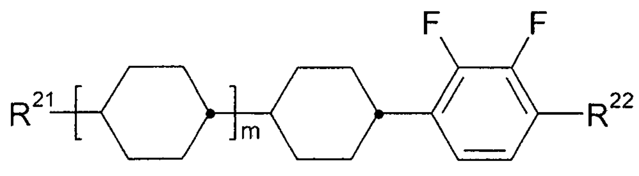

II-1

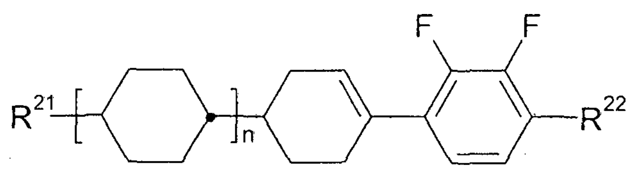

II-2

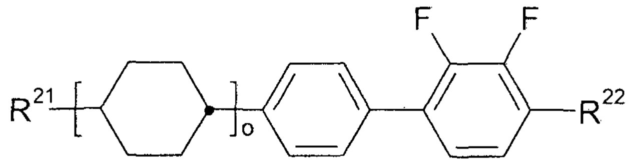

II-3

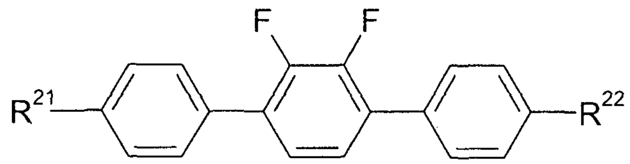

II-4

worin

| | |
|---|---|
| $R^{21}$ | einen unsubstituierten Alkylrest mit 1 bis 7 C-Atomen, bevorzugt einen n-Alkylrest, besonders bevorzugt mit 2 bis 5 C-Atomen, oder einen unsubstituierten Alkenylrest mit 2 bis 7 C-Atomen, bevorzugt einen geradkettigen Alkenylrest, besonders bevorzugt mit 2 bis 5 C-Atomen, |
| $R^{22}$ | einen unsubstituierten Alkylrest mit 1 bis 7 C-Atomen, bevorzugt mit 2 bis 5 C-Atomen oder einen unsubstituierten Alkoxyrest mit 1 bis 6 C-Atomen, bevorzugt mit 2, 3 oder 4 C-Atomen, und |
| m, n und o | jeweils unabhängig voneinander 0 oder 1, |

bedeuten.

Vorzugsweise enthält das erfindungsgemäße Medium eine oder mehrere Verbindungen ausgewählt aus der Gruppe der Formeln II-1 bis II-4 in einer Gesamtkonzentration im Bereich von 10 % oder mehr bis 80 % oder weniger, bevorzugt von 15 % oder mehr bis 70 % oder weniger, besonders bevorzugt von 20 % oder mehr bis 60 % oder weniger.

In einer weiteren bevorzugten Ausführungsform enthält das erfindungsgemäße Medium zusätzlich zu den Verbindungen ausgewählt aus der Gruppe der Formeln II-1 bis II-4 eine oder mehrere Verbindungen der Formel III-3 in einer Gesamtkonzentration im Bereich von 1 % oder mehr bis 20 % oder weniger, bevorzugt von 2 % oder mehr bis 15 % oder weniger, besonders bevorzugt von 3 % oder mehr bis 10 % oder weniger.

Vorzugsweise enthalten die Medien gemäß der vorliegenden Erfindung zusätzlich zu den Verbindungen der Formel I, bzw. deren bevorzugter Unterformeln, eine oder mehrere dielektrisch neutrale Verbindungen der Formel IV in einer Gesamtkonzentration im Bereich von 5 % oder mehr bis 90 % oder weniger, bevorzugt von 10 % oder mehr bis 80 % oder weniger, besonders bevorzugt von 20 % oder mehr bis 70 % oder weniger.

In einer noch stärker bevorzugten Ausführungsform der vorliegenden Erfindung enthalten die erfindungsgemäßen Medien jeweils eine oder mehrere Verbindungen der Formel I ausgewählt aus der Gruppe der folgenden Verbindungen, der Formeln I-1-1 bis I-1-3

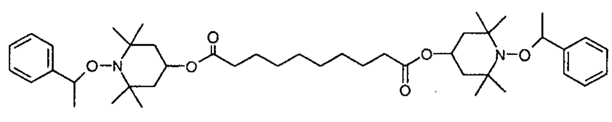

I-1-1

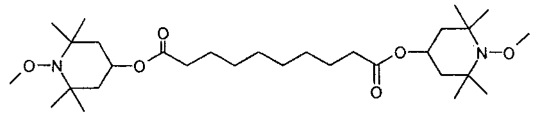

I-1-2

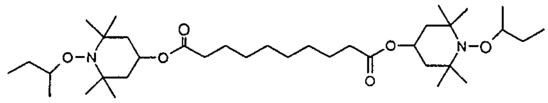

I-1-3

In einer alternativen, bevorzugten Ausführungsform der vorliegenden Erfindung enthalten die erfindungsgemäßen Medien jeweils eine oder mehrere Verbindungen der Formel I ausgewählt aus der Gruppe der folgenden Verbindungen, der Formeln I-1-4 und I-1-5

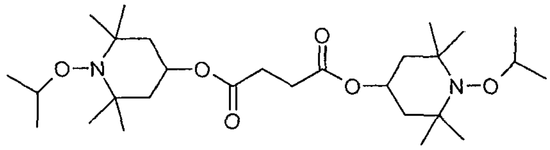

I-1-4

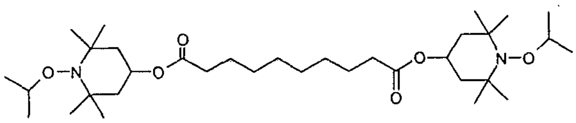

I-1-5

In einer alternativen, bevorzugten Ausführungsform der vorliegenden Erfindung enthalten die erfindungsgemäßen Medien jeweils eine oder mehrere Verbindungen der Formel I ausgewählt aus der Gruppe der folgenden Verbindungen, der Formeln I-1-6 und I-1-7

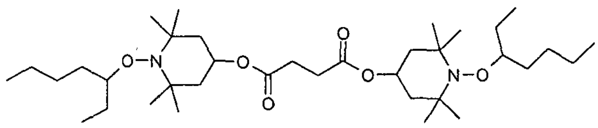

I-1-6

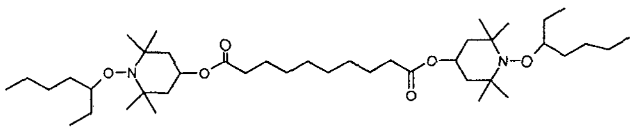

I-1-7

In einer weiteren alternativen, bevorzugten Ausführungsform der vorliegenden Erfindung enthalten die erfindungsgemäßen Medien jeweils eine oder mehrere Verbindungen der Formel I ausgewählt aus der Gruppe der folgenden Verbindungen, der Formeln I-1-8 bis I-1-10

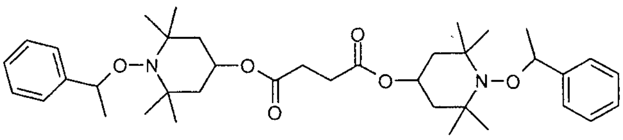

I-1-8

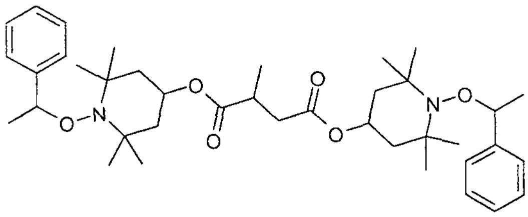

I-1-9

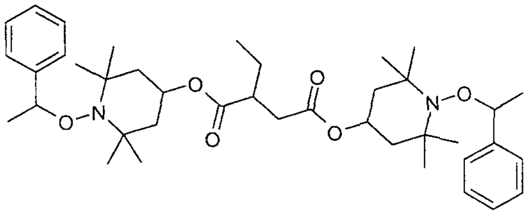

I-1-10

In einer weiteren alternativen, bevorzugten Ausführungsform der vorliegenden Erfindung enthalten die erfindungsgemäßen Medien jeweils eine oder mehrere Verbindungen der Formel I ausgewählt aus der Gruppe der folgenden Verbindungen, der Formeln I-1-11 und 1-1-12

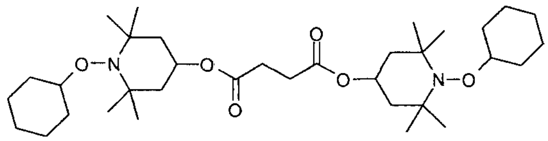

I-1-11

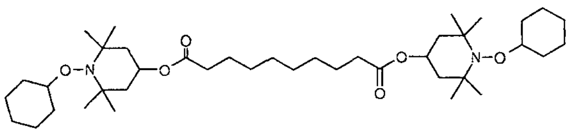

I-1-12

In einer weiteren alternativen, bevorzugten Ausführungsform der vorliegenden Erfindung enthalten die erfindungsgemäßen Medien jeweils eine oder mehrere Verbindungen der Formel I ausgewählt aus der Gruppe der folgenden Verbindungen, der Formeln I-1-13 bis I-1-14

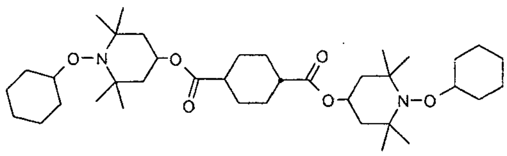

I-1-13

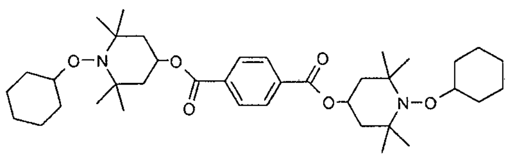

I-1-14

In einer weiteren alternativen, bevorzugten Ausführungsform der vorliegenden Erfindung enthalten die erfindungsgemäßen Medien jeweils eine oder mehrere Verbindungen der Formel I ausgewählt aus der Gruppe der folgenden Verbindungen, der Formel I-5-1

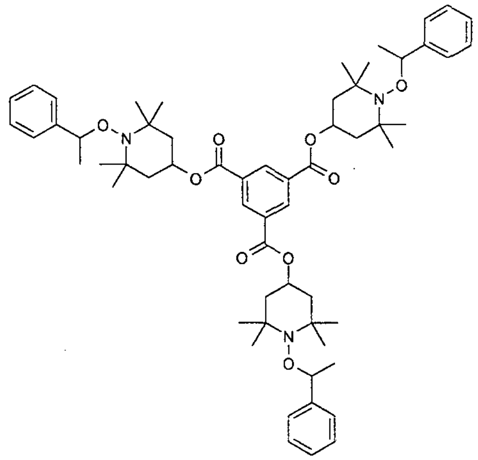

I-5-1

Vorzugsweise enthalten die Medien gemäß der vorliegenden Erfindung zusätzlich zu den Verbindungen der Formel I, bzw. deren bevorzugter Unterformeln, eine oder mehrere dielektrisch neutrale Verbindungen der Formel II in einer Gesamtkonzentration im Bereich von 5 % oder mehr bis 90 % oder weniger, bevorzugt von 10 % oder mehr bis 80 % oder weniger, besonders bevorzugt von 20 % oder mehr bis 70 % oder weniger.

Insbesondere bevorzugt enthält das erfindungsgemäße Medium

eine oder mehrere Verbindungen der Formel II-1 in einer Gesamtkonzentration im Bereich von 5 % oder mehr bis 30 % oder weniger und/oder

eine oder mehrere Verbindungen der Formel II-2 in einer Gesamtkonzentration im Bereich von 3 % oder mehr bis 30 % oder weniger und/oder

eine oder mehrere Verbindungen der Formel II-3 in einer Gesamtkonzentration im Bereich von 5 % oder mehr bis 30 % oder weniger und/oder

eine oder mehrere Verbindungen der Formel II-4 in einer Gesamtkonzentration im Bereich von 1 % oder mehr bis 30 % oder weniger.

In einer bevorzugten Ausführungsform der vorliegenden Erfindung enthalten die erfindungsgemäßen Medien eine oder mehrere Verbindungen der Formel II-1, bevorzugt eine oder mehrere Verbindungen ausgewählt aus der Gruppe der Verbindungen der Formeln II-1-1 und II-1-2

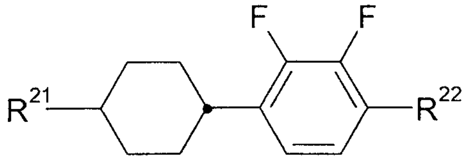

II-1-1

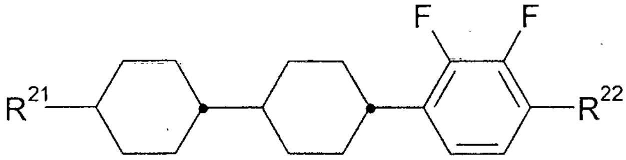

II-1-2

worin die Parameter die oben bei Formel II-1 gegeben Bedeutung haben und bevorzugt

$R^{21}$ einen Alkylrest mit 2 bis 5 C-Atomen, bevorzugt mit 3 bis 5 C-Atomen, und

$R^{22}$ einen Alkyl- oder Alkoxyrest mit 2 bis 5 C-Atomen, bevorzugt einen Alkoxyrest mit 2 bis 4 C-Atomen, oder ein Alkenyloxyrest mit 2 bis 4 C-Atomen.

bedeuten.

In einer bevorzugten Ausführungsform der vorliegenden Erfindung enthalten die erfindungsgemäßen Medien eine oder mehrere Verbindungen der Formel II-2, bevorzugt eine oder mehrere Verbindungen ausgewählt aus der Gruppe der Verbindungen der Formeln II-2-1 und II-2-2

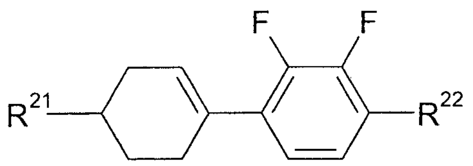

II-2-1

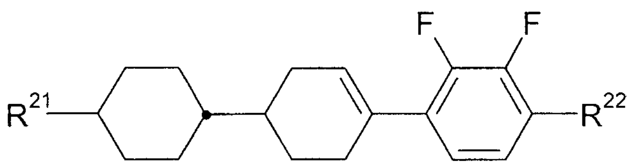

II-2-2

worin die Parameter die oben bei Formel II-2 gegeben Bedeutung haben und bevorzugt

$R^{21}$ einen Alkylrest mit 2 bis 5 C-Atomen, bevorzugt mit 3 bis 5 C-Atomen, und

$R^{22}$ einen Alkyl- oder Alkoxyrest mit 2 bis 5 C-Atomen, bevorzugt einen Alkoxyrest mit 2 bis 4 C-Atomen oder ein Alkenyloxyrest mit 2 bis 4 C-Atomen,

bedeuten.

In einer besonders bevorzugten Ausführungsform der vorliegenden Erfindung enthalten die erfindungsgemäßen Medien eine oder mehrere Verbindungen der Formel II-3, bevorzugt eine oder mehrere Verbindungen ausgewählt aus der Gruppe der Verbindungen der Formeln II-3-1 und II-3-2, ganz besonders bevorzugt der Formel 11-3-2,

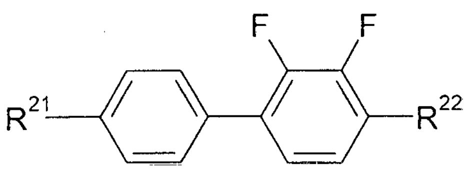

II-3-1

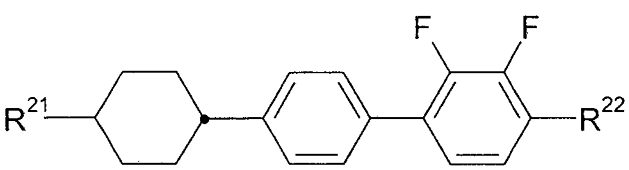

II-3-2

worin die Parameter die oben bei Formel II-3 gegeben Bedeutung haben und bevorzugt

$R^{21}$ einen Alkylrest mit 2 bis 5 C-Atomen, bevorzugt mit 3 bis 5 C-Atomen, und

$R^{22}$ einen Alkyl- oder Alkoxyrest mit 2 bis 5 C-Atomen, bevorzugt ein Alkoxyrest mit 2 bis 4 C-Atomen oder ein Alkenyloxyrest mit 2 bis 4 C-Atomen,

bedeuten.

In einer weiteren bevorzugten Ausführungsform enthält das Medium eine oder mehrere Verbindungen der Formel II-4, bevorzugt der Formel II-4-a,

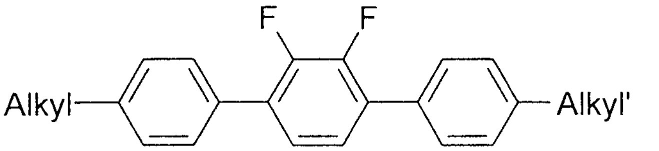

II-4-a

worin

Alkyl und Alkyl' unabhängig voneinander Alkyl mit 1 bis 7 C-Atomen, bevorzugt mit 2 bis 5 C-Atomen,

bedeuten.

In einer weiteren bevorzugten Ausführungsform enthält das Medium eine oder mehrere Verbindungen der Formeln III-1 bis III-3

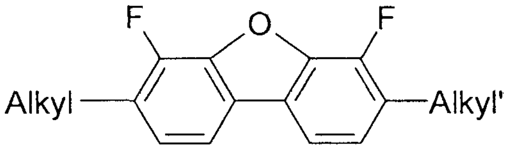

III-1

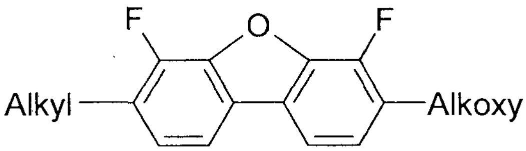

III-2

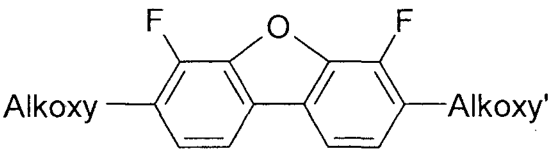

III-3,

worin

Alkyl, Alkyl' Alkyl mit 1 bis 7 C-Atomen, bevorzugt mit 2-5 C-Atomen,
Alkoxy, Alkoxy' Alkoxy mit 1 bis 7 C-Atomen, bevorzugt mit 2 bis 5 C-Atomen,

bedeuten.

Besonders bevorzugt enthält das Medium eine oder mehrere Verbindungen der Formel III-3.

In einer weiteren bevorzugten Ausführungsform enthält das Medium eine oder mehrere Verbindungen der Formel IV

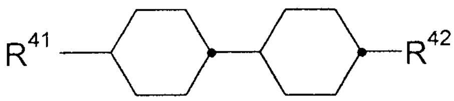

IV

worin

$R^{41}$ einen unsubstituierten Alkylrest mit 1 bis 7 C-Atomen oder einen unsubstituierten Alkenylrest mit 2 bis 7 C-Atomen, bevorzugt einen n-Alkylrest, besonders bevorzugt mit 2, 3, 4 oder 5 C-Atomen, und

$R^{42}$ einen unsubstituierten Alkylrest mit 1 bis 7 C-Atomen oder einen unsubstituierten Alkoxyrest mit 1 bis 6 C-Atomen,

beide bevorzugt mit 2 bis 5 C-Atomen, einen unsubstituierten Alkenylrest mit 2 bis 7 C-Atomen, bevorzugt mit 2, 3 oder 4 C-Atomen, stärker bevorzugt einen Vinylrest oder einen 1-Propenylrest und insbesondere einen Vinylrest

bedeuten.

In einer besonders bevorzugten Ausführungsform enthält das Medium eine oder mehrere Verbindungen der Formel IV, ausgewählt aus der Gruppe der Verbindungen der Formeln IV-1 bis IV-4, bevorzugt ausgewählt aus der Gruppe der Verbindungen der Formeln IV-1 und IV-2,

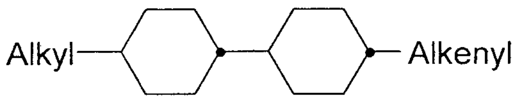

IV-1

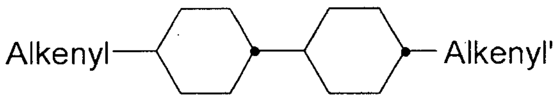

IV-2

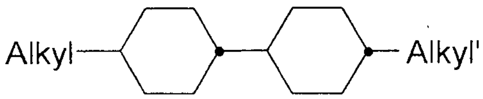

IV-3

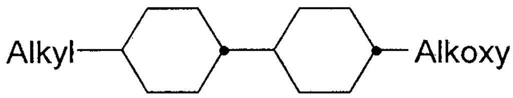

IV-4

worin

| | |
|---|---|
| Alkyl und Alkyl' | unabhängig voneinander Alkyl mit 1 bis 7 C-Atomen, bevorzugt mit 2 bis 5 C-Atomen, |
| Alkenyl | einen Alkenylrest mit 2 bis 5 C-Atomen, bevorzugt mit 2 bis 4 C-Atomen, besonders bevorzugt 2 C-Atomen, |
| Alkenyl' | einen Alkenylrest mit 2 bis 5 C-Atomen, bevorzugt mit 2 bis 4 C-Atomen, besonders bevorzugt mit 2 bis 3 C-Atomen, und |
| Alkoxy | Alkoxy mit 1 bis 5 C-Atomen, bevorzugt mit 2 bis 4 C-Atomen, |

bedeuten.

In einer besonders bevorzugten Ausführungsform enthalten die erfindungsgemäßen Medien eine oder mehrere Verbindungen der Formel IV-1 und/oder eine oder mehrere Verbindungen der Formel IV-2.

In einer weiteren bevorzugten Ausführungsform enthält das Medium eine oder mehrere Verbindungen der Formel V

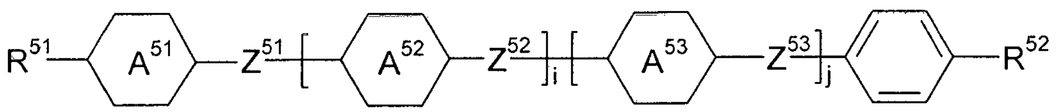

V

worin

| | |
|---|---|
| $R^{51}$ und $R^{52}$ | unabhängig voneinander eine der für $R^{21}$ und $R^{22}$ gegebenen Bedeutungen haben und bevorzugt Alkyl mit 1 bis 7 C-Atomen, bevorzugt *n*-Alkyl, besonders bevorzugt *n*-Alkyl mit 1 bis 5 C-Atomen, Alkoxy mit 1 bis 7 C-Atomen, bevorzugt *n*-Alkoxy, besonders bevorzugt *n*-Alkoxy mit 2 bis 5 C-Atomen, Alkoxyalkyl, |

Alkenyl oder Alkenyloxy mit 2 bis 7 C-Atomen, bevorzugt mit 2 bis 4 C-Atomen, bevorzugt Alkenyloxy,

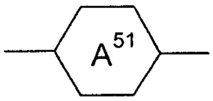

bis

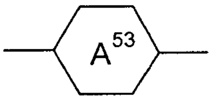,

soweit vorhanden, jeweils unabhängig voneinander

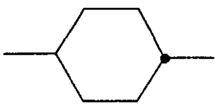, 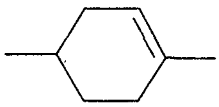, 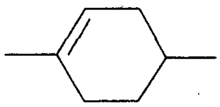,

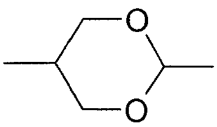, 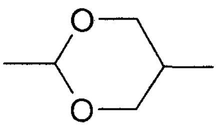, 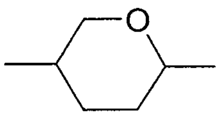,

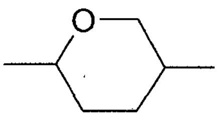, 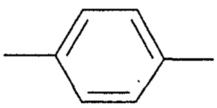, 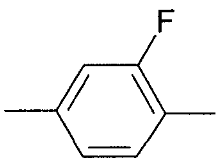,

oder

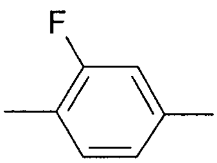,

bevorzugt

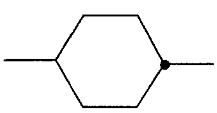, 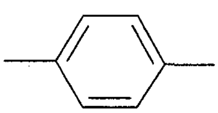, 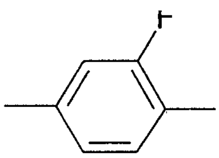,

oder

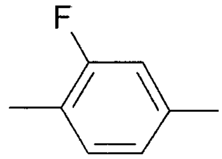

,

bevorzugt

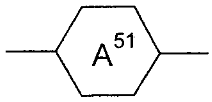 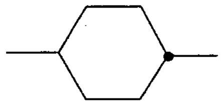

.

und, wenn vorhanden,

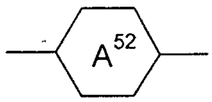

bevorzugt

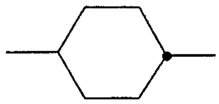

,

| | |
|---|---|
| $Z^{51}$ bis $Z^{53}$ | jeweils unabhängig voneinander $-CH_2-CH_2-$, $-CH_2-O-$, -CH=CH-, -C≡C-, -COO- oder eine Einfachbindung, bevorzugt $-CH_2-CH_2-$, $-CH_2-O-$ oder eine Einfachbindung und besonders bevorzugt eine Einfachbindung, |
| i und j | jeweils unabhängig voneinander 0 oder 1, |
| (i + j) | bevorzugt 0 oder 1, |

bedeuten.

Bevorzugt enthalten die erfindungsgemäßen Medien die folgenden Verbindungen in den angegebenen Gesamtkonzentrationen

5 - 60 Gew.-% einer oder mehrerer Verbindungen ausgewählt aus der Gruppe der Verbindungen der Formel II und/oder

5 - 60 Gew.-% einer oder mehrerer Verbindungen ausgewählt aus der Gruppe der Verbindungen der Formel II und III und/oder

10 - 60 Gew.-% einer oder mehrerer Verbindungen ausgewählt aus der Gruppe der Verbindungen der Formeln II-1 bis II-4 und/oder

10 - 60 Gew.-% einer oder mehrerer Verbindungen der Formeln IV und/oder V,

wobei der Gesamtgehalt aller Verbindungen in dem Medium 100 % beträgt.

In einer besonders bevorzugten Ausführungsform enthalten die erfindungsgemäßen Medien eine oder mehrere Verbindungen ausgewählt aus der Gruppe der Verbindungen der Formeln OH-1 bis OH-6

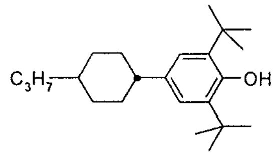

OH-1

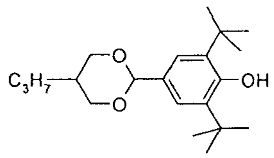

OH-2

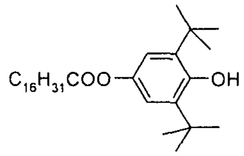

OH-3

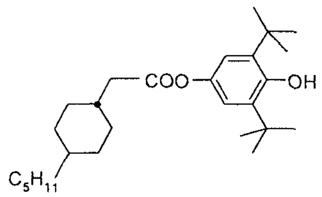

OH-4

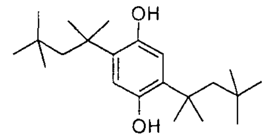

OH-5

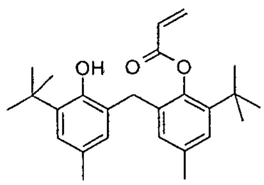

OH-6

Diese Verbindungen eignen sich hervorragend zur Stabilisierung der Medien gegen thermische Belastungen.

In einer anderen bevorzugten Ausführungsform der vorliegenden Erfindung können die erfindungsgemäßen Medien auch ausreichende Stabilität aufweisen, wenn sie keine Phenolverbindung, insbesondere ausgewählt aus der Gruppe der Verbindungen der Formeln OH-1 bis OH-6, enthalten.

Gegenstand der vorliegenden Erfindung sind auch elektrooptische Anzeigen oder elektrooptische Komponenten, die erfindungsgemäße flüssigkristalline Medien enthalten. Bevorzugt sind elektrooptische Anzeigen die auf dem VA- oder dem ECB-Effekt basieren und insbesondere solche, die mittels einer Aktivmatrix-Adressierungsvorrichtung angesteuert werden.

Dementsprechend ist die Verwendung eines erfindungsgemäßen flüssigkristallinen Mediums in einer elektrooptischen Anzeige oder in einer elektrooptischen Komponente ebenfalls Gegenstand der vorliegenden Erfindung, ebenso wie ein Verfahren zur Herstellung der erfindungsgemäßen flüssigkristallinen Medien, dadurch gekennzeichnet, daß eine oder mehrere Verbindungen der Formel I mit einer oder mehreren Verbindungen, die eine oder mehrere Verbindungen der Formel II enthalten, bevorzugt mit eine oder mehrere Verbindungen der Teilformel II-1 und/oder II-2 und/oder II-3 und/oder II-4, besonders bevorzugt eine oder mehrere Verbindungen aus zwei oder mehr, bevorzugt aus drei oder mehr, verschiedener dieser Formel und ganz besonders bevorzugt aus allen vier dieser Formeln II-1, II-2, II-3 und II-4, und mit einer oder mehreren weiteren Verbindungen, bevorzugt ausgewählt aus der Gruppe der Verbindungen der Formeln II-1 bis II-4 und IV und/oder V, gemischt wird.

In einer weiteren bevorzugten Ausführungsform enthält das Medium eine oder mehrere Verbindungen der Formel IV, ausgewählt aus der Gruppe der Verbindungen der Formeln IV-3 und IV-4,

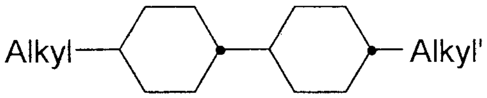

IV-3

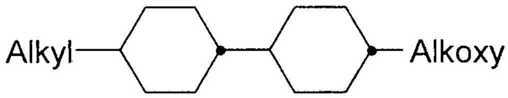

IV-4

worin

Alkyl und Alkyl' unabhängig voneinander Alkyl mit 1 bis 7 C-Atomen, bevorzugt mit 2 bis 5 C-Atomen

Alkoxy Alkoxy mit 1 bis 5 C-Atomen, bevorzugt mit 2 bis 4 C-Atomen.

In einer weiteren bevorzugten Ausführungsform enthält das Medium eine oder mehrere Verbindungen ausgewählt der Formel V ausgewählt aus der Gruppe der Verbindungen der Formeln V-1 bis V-10, bevorzugt ausgewählt aus der Gruppe der Verbindungen der Formeln V-1 bis V-5,

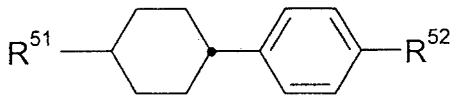

V-1

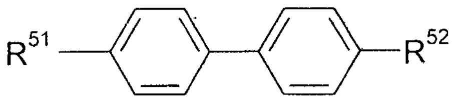

V-2

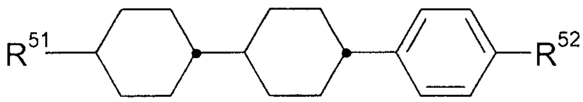

V-3

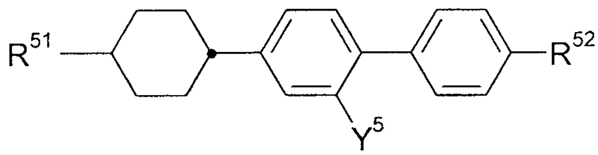

V-4

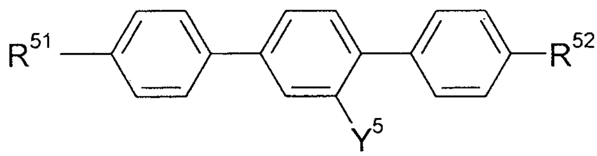

V-5

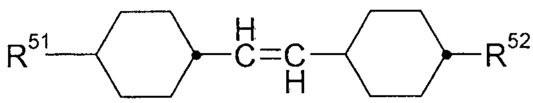

V-6

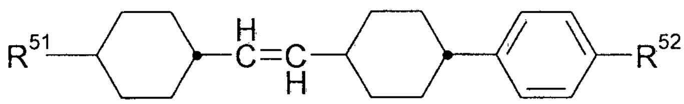

V-7

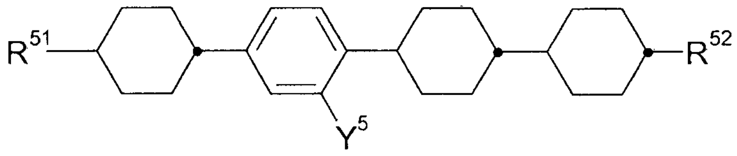

V-8

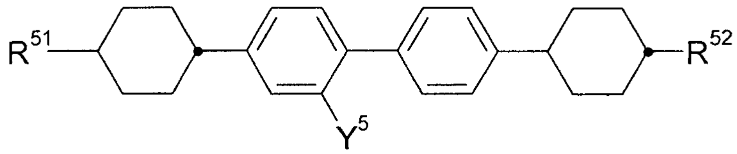

V-9

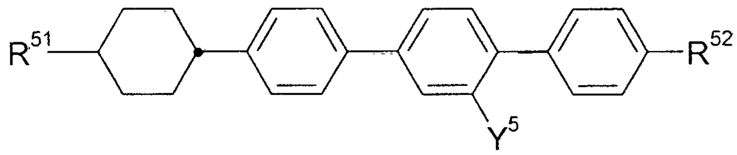

V-10

worin die Parameter die oben unter Formel V gegebenen Bedeutungen haben und

$Y^5$ H oder F bedeutet und bevorzugt

$R^{51}$ Alkyl mit 1 bis 7 C-Atomen oder Alkenyl mit 2 bis 7 C-Atomen und

$R^{52}$ Alkyl mit 1 bis 7 C-Atomen, Alkenyl mit 2 bis 7 C-Atomen oder Alkoxy mit 1 bis 6 C-Atomen, bevorzugt Alkyl oder Alkenyl, besonders bevorzugt Alkenyl,

bedeuten.

In einer weiteren bevorzugten Ausführungsform enthält das Medium eine oder mehrere Verbindungen der Formel V-1, ausgewählt aus der Gruppe der Verbindungen der Formeln V-1a und V-1b, bevorzugt der Formel V-1b,

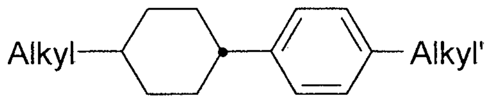

V-1a

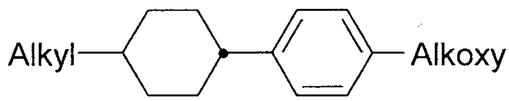

V-1b

worin

Alkyl und Alkyl' unabhängig voneinander Alkyl mit 1 bis 7 C-Atomen, bevorzugt mit 2 bis 5 C-Atomen,

Alkoxy Alkoxy mit 1 bis 5 C-Atomen, bevorzugt mit 2 bis 4 C-Atomen

bedeuten.

In einer weiteren bevorzugten Ausführungsform enthält das Medium eine oder mehrere Verbindungen der Formel V-3, ausgewählt aus der Gruppe der Verbindungen der Formeln V-3a und V-3b,

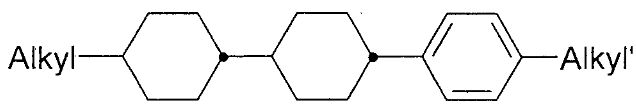

V-3a

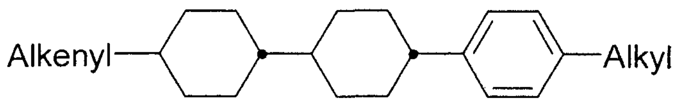

V-3b

worin

Alkyl und Alkyl' unabhängig voneinander Alkyl mit 1 bis7 C-Atomen, bevorzugt mit 2 bis 5 C-Atomen und

Alkenyl Alkenyl mit 2 bis 7 C-Atomen, bevorzugt mit 2 bis 5 C-Atomen bedeuten.

In einer weiteren bevorzugten Ausführungsform enthält das Medium eine oder mehrere Verbindungen der Formel V-4 ausgewählt aus der Gruppe der Verbindungen der Formeln V-4a und V-4b,

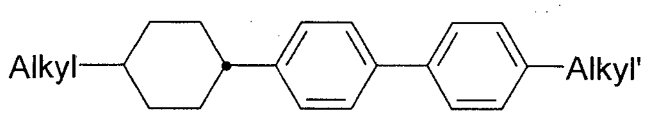

V-4a

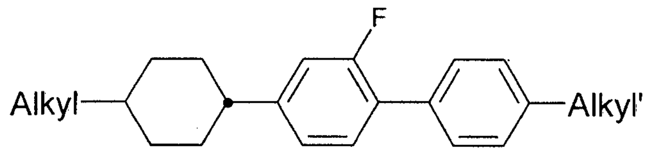

V-4b

worin

Alkyl und Alkyl' unabhängig voneinander Alkyl mit 1 bis 7 C-Atomen, bevorzugt mit 2 bis 5 C-Atomen.

Außerdem betrifft die vorliegende Erfindung ein Verfahren zur Stabilisierung eines flüssigkristallinen Mediums, das eine oder mehrere Verbindungen der Formel II, gegebenenfalls eine oder mehrere Verbindungen ausgewählt aus der Gruppe der Verbindungen der Formeln II-1 bis II-4 enthält und/oder eine oder mehrere Verbindungen der Formel IV und/oder eine oder mehrere Verbindungen der Formel V enthält, dadurch gekennzeichnet, daß dem Medium eine oder mehrere Verbindungen der Formel I zugesetzt werden.

Die Flüssigkristallmedien gemäß der vorliegenden Erfindung können eine oder mehrere chirale Verbindungen enthalten.

In einer besonders bevorzugten Ausführungsform der vorliegenden Erfindung enthalten die flüssigkristallinen Medien eine oder mehrere Verbindungen der Formel

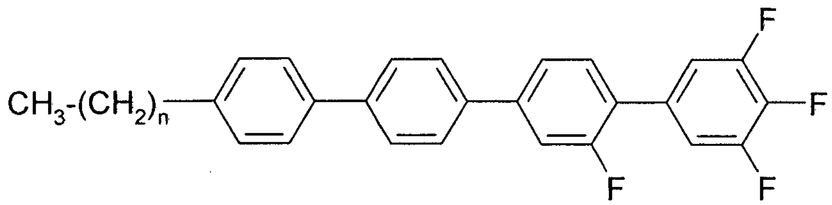

worin n 0, 1, 2, 3, 4, 5 oder 6, bevorzugt 2 oder 4, besonders bevorzugt 2, bedeutet, bevorzugt in einer Konzentration vom 0,1 bis 5 % besonders bevorzugt vom 0,2 bis 1 %.

Besonders bevorzugte Ausführungsformen der vorliegenden Erfindung erfüllen eine oder mehrere der folgenden Bedingungen, wobei die Akronyme (Abkürzungen) in den Tabellen A bis C erläutert und in Tabelle D durch Beispiele illustriert sind.

i. Das flüssigkristalline Medium hat eine Doppelbrechung von 0,060 oder mehr, besonders bevorzugt von 0,070 oder mehr.

ii. Das flüssigkristalline Medium hat eine Doppelbrechung von 0,130 oder weniger, besonders bevorzugt von 0,120 oder weniger.

iii. Das flüssigkristalline Medium hat eine Doppelbrechung im Bereich von 0,090 oder mehr bis 0,120 oder weniger.

iv. Das flüssigkristalline Medium hat eine negative dielektrische Anisotropie mit einem Betrag von 2,0 oder mehr, besonders bevorzugt von 2,5 oder mehr.

v. Das flüssigkristalline Medium hat eine negative dielektrische Anisotropie mit einem Betrag von 5,5 oder weniger, besonders bevorzugt von 5,0 oder weniger.

vi. Das flüssigkristalline Medium hat eine negative dielektrische Anisotropie mit einem Betrag im Bereich von 3,0 oder mehr bis 4,5 oder weniger.

vii. Das flüssigkristalline Medium enthält eine oder mehrere besonders bevorzugte Verbindungen der Formeln IV ausgewählt aus den nachfolgend genannten Teilformeln:

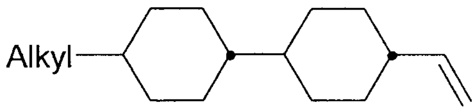

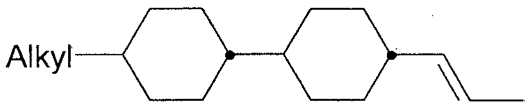

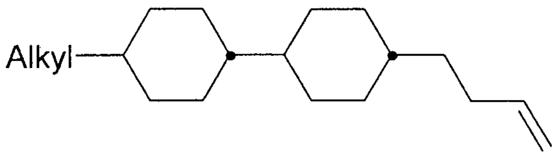

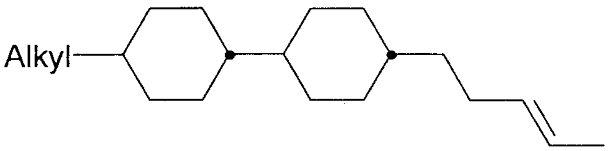

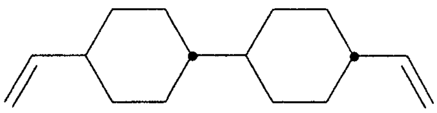

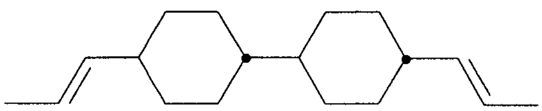

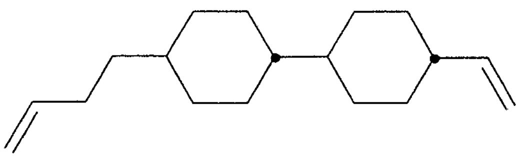

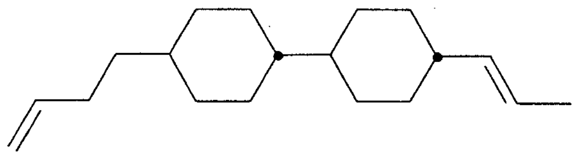

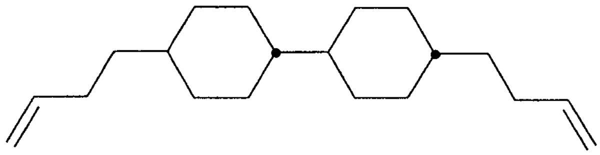

worin Alkyl die oben gegebene Bedeutung besitzt und bevorzugt, jeweils unabhängig voneinander Alkyl mit 1 bis 6, bevorzugt mit 2 bis 5 C-Atomen und besonders bevorzugt *n*-Alkyl, bedeutet.

viii. Die Gesamtkonzentration der Verbindungen der Formel IV im Gesamtgemisch beträgt 20 % oder mehr, bevorzugt 30 % oder mehr und liegt bevorzugt im Bereich von 20 % oder mehr bis 49 % oder weniger, besonders bevorzugt im Bereich von 29 % oder mehr bis 47 % oder weniger, und ganz besonders bevorzugt im Bereich von 37 % oder mehr bis 44 % oder weniger.

ix. Das flüssigkristalline Medium enthält eine oder mehrere Verbindungen der Formel IV ausgewählt aus der Gruppe der Verbindungen folgenden Formeln: CC-n-V und/oder CC-n-Vm, insbesondere bevorzugt CC-3-V, bevorzugt in einer Konzentration von bis zu 50 % oder weniger, besonders bevorzugt bis zu 42 % oder weniger, und optional zusätzlich CC-3-V1, bevorzugt in einer Konzentration von bis zu 15 % oder weniger, und/oder CC-4-V, bevorzugt in einer Konzentration von bis zu 20 % oder weniger, besonders bevorzugt bis zu 10 % oder weniger

x. Die Gesamtkonzentration der Verbindungen III im Gesamtgemisch liegt im Bereich von 1 % oder mehr bis 20 % oder weniger, bevorzugt von 2 % oder mehr bis 15 % oder weniger, besonders bevorzugt von 3 % oder mehr bis 10 % oder weniger.

xi. Die Gesamtkonzentration der Verbindungen der Formel CC-3-V im Gesamtgemisch beträgt 18 % oder mehr, bevorzugt 25 % oder mehr.

xii. Der Anteil an Verbindungen der Formeln II-1 bis II-4 und III im Gesamtgemisch beträgt 50 % oder mehr und bevorzugt 75 % oder weniger.

xiii. Das flüssigkristalline Medium besteht im Wesentlichen aus Verbindungen der Formeln I, II-1 bis II-4, III, IV und V, bevorzugt aus Verbindungen der Formeln I, II-1 bis II-4 und IV.

xiv. Das flüssigkristalline Medium enthält eine oder mehrere Verbindungen der Formel IV, bevorzugt der Formeln IV-1 und/oder IV-2, vorzugsweise in einer Gesamtkonzentration von 20 % oder mehr, insbesondere von 25 % oder mehr, und ganz besonders bevorzugt von 30 % oder mehr bis 45 % oder weniger.

Ein weiterer Gegenstand der Erfindung ist eine elektrooptische Anzeige mit einer Aktivmatrix-Adressierung basierend auf dem VA- bzw. ECB-Effekt, dadurch gekennzeichnet, daß sie als Dielektrikum ein flüssigkristallines Medium gemäß der vorliegenden Erfindung enthält.

Ein weiterer Gegenstand der Erfindung ist eine elektrooptische Anzeige mit einer Aktivmatrix-Adressierung basierend auf dem IPS oder FFS-Effekt, dadurch gekennzeichnet, daß sie als Dielektrikum ein flüssigkristallines Medium gemäß der vorliegenden Erfindung enthält.

Vorzugsweise weist die Flüssigkristallmischung einen nematischen Phasenbereich mit einer Breite von mindestens 80 K und eine Fließviskosität $\nu_{20}$ von maximal 30 $mm^2 \cdot s^{-1}$ bei 20 °C auf.

Die erfindungsgemäße Flüssigkristallmischung weist ein $\Delta\varepsilon$ von -0,5 bis -8,0, insbesondere von -1,5 bis -6,0 auf, und ganz besonders bevorzugt von -2,0 bis -5,0 auf, wobei $\Delta\varepsilon$ die dielektrische Anisotropie bedeutet.

Die Rotationsviskosität $\gamma_1$ ist vorzugsweise 200 mPa·s oder weniger, insbesondere 150 mPa·s oder weniger, besonders bevorzugt 120 mPa s oder weniger.

Die erfindungsgemäßen Mischungen sind für alle VA-TFT-Anwendungen geeignet, wie z.B. VAN, MVA, (S)-PVA und ASV. Weiterhin sind sie für IPS (in plane switching)-, FFS (fringe field switching)- und PALC-Anwendungen mit negativem $\Delta\varepsilon$ geeignet.

Die nematischen Flüssigkristallmischungen in den erfindungsgemäßen Anzeigen enthalten in der Regel zwei Komponenten A und B, die ihrerseits aus einer oder mehreren Einzelverbindungen bestehen.

Die erfindungsgemäßen flüssigkristallinen Medien enthalten bevorzugt 4 bis 15, insbesondere 5 bis 12, und besonders bevorzugt 10 oder weniger, Verbindungen. Diese sind vorzugsweise ausgewählt aus der Gruppe der Verbindungen der Formeln I, II-1 bis II-4, und/oder IV und/oder V.

Die erfindungsgemäßen flüssigkristallinen Medien können optional auch mehr als 18 Verbindungen enthalten. In diesem Fall enthalten sie vorzugsweise 18 bis 25 Verbindungen.

Neben Verbindungen der Formeln I bis V können auch noch andere Bestandteile zugegen sein, z. B. in einer Menge von bis zu 45 %, vorzugsweise jedoch bis zu 35 %, insbesondere bis zu 10 % der Gesamtmischung.

Optional können die erfindungsgemäßen Medien auch eine dielektrisch positive Komponente enthalten, deren Gesamtkonzentration bevorzugt 10 % oder weniger bezogen auf das gesamte Medium beträgt.

In einer bevorzugten Ausführungsform enthalten die erfindungsgemäßen Flüssigkristallmedien insgesamt bezogen auf die Gesamtmischung

10 ppm oder mehr bis 1000 ppm oder weniger, bevorzugt 50 ppm oder mehr bis 500 ppm oder weniger, besonders bevorzugt 100 ppm oder mehr bis 400 ppm oder weniger und ganz besonders bevorzugt 150 ppm oder mehr bis 300 ppm oder weniger, der Verbindung der Formel I.

20% oder mehr bis 60 % oder weniger, bevorzugt 25 % oder mehr bis 50 % oder weniger, besonders bevorzugt 30 % oder mehr bis 45 % oder weniger, an Verbindungen der Formel II und

50 % oder mehr bis 70 % oder weniger an Verbindungen der Formeln II-1 bis II-4.

In einer bevorzugten Ausführungsform enthalten die erfindungsgemäßen Flüssigkristallmedien Verbindungen ausgewählt aus der Gruppe der Verbindungen der Formeln I, II-1 bis II-4, III-3, IV und V, bevorzugt ausgewählt aus der Gruppe der Verbindungen der Formeln I und II-1 bis II-4, bevorzugt bestehen sie überwiegend, besonders bevorzugt im wesentlichen und ganz besonders bevorzugt nahezu vollständig aus den Verbindungen der genannten Formeln.

Die erfindungsgemäßen Flüssigkristallmedien weisen bevorzugt eine nematische Phase von jeweils mindestens von -20°C oder weniger bis 70°C oder mehr, besonders bevorzugt von -30°C oder weniger bis 80°C oder mehr, ganz besonders bevorzugt von -40°C oder weniger bis 85°C oder mehr und am allermeisten bevorzugt von -40°C oder weniger bis 90°C oder mehr auf.

Hierbei bedeutet der Begriff "eine nematische Phase aufweisen" einerseits, daß bei tiefen Temperaturen bei der entsprechenden Temperatur keine smektische Phase und keine Kristallisation beobachtet wird und andererseits, daß beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen einer der elektrooptischen Anwendung entsprechenden Schichtdicke für mindestens 100 Stunden überprüft. Wenn die Lagerstabilität bei einer Temperatur von -20°C in einer entsprechenden Testzelle 1.000 h oder mehr beträgt, wird das Medium als bei dieser Temperatur stabil bezeichnet. Bei Temperaturen von -30°C bzw. -40°C betragen die entsprechenden Zeiten 500 h bzw. 250 h. Bei hohen Temperaturen wird der Klärpunkt nach üblichen Methoden in Kapillaren gemessen.

In einer bevorzugten Ausführungsform sind die erfindungsgemäßen Flüssigkristallmedien durch Werte der optischen Anisotropien im mittleren bis niedrigen Bereich gekennzeichnet. Die Werte der Doppelbrechung liegen bevorzugt im Bereich von 0,065 oder mehr bis 0,130 oder weniger, besonders bevorzugt im Bereich von 0,080 oder mehr bis 0,120 oder weniger und ganz besonders bevorzugt im Bereich von 0,085 oder mehr bis 0,110 oder weniger.

In dieser Ausführungsform haben die erfindungsgemäßen Flüssigkristallmedien eine negative dielektrische Anisotropie und weisen relativ hohe Werte des Betrags der dielektrischen Anisotropie ($|\Delta\varepsilon|$) auf, die bevorzugt im Bereich von 2,0 oder mehr bis 5,5 oder weniger, bevorzugt bis 5,0 oder weniger, bevorzugt von 2,5 oder mehr bis 4,7 oder weniger, besonders bevorzugt von 3,0 oder mehr bis 4,7 oder weniger und ganz besonders bevorzugt von 3,2 oder mehr bis 4,5 oder weniger, liegen.

Die erfindungsgemäßen Flüssigkristallmedien weisen relativ kleine Werte für die Schwellenspannung ($V_0$) im Bereich von 1,7 V oder mehr bis 2,5 V oder weniger, bevorzugt von 1,8 V oder mehr bis 2,4 V oder weniger, besonders bevorzugt von 1,9 V oder mehr bis 2,3 V oder weniger und ganz besonders bevorzugt von 1,95 V oder mehr bis 2,1 V oder weniger, auf.

In einer weiteren bevorzugten Ausführungsform weisen die erfindungsgemäßen Flüssigkristallmedien bevorzugt relativ niedrige Werte der mittleren dielektrischen Anisotropie ($\varepsilon_{av.} \equiv (\varepsilon_{||} + 2\varepsilon_{\perp})/3$) auf, die bevorzugt im Bereich von 5,0 oder mehr bis 8,0 oder weniger, bevorzugt von 5,4 oder mehr bis 7,5 oder weniger, noch mehr bevorzugt von 5,5 oder mehr bis 7,3 oder weniger, besonders bevorzugt von 5,6 oder mehr bis 7,1 oder weniger und ganz besonders bevorzugt von 5,7 oder mehr bis 6,8 oder weniger, liegen.

Außerdem weisen die erfindungsgemäßen Flüssigkristallmedien hohe Werte für die VHR in Flüssigkristallzellen auf.

Diese sind in frisch gefüllten Zellen bei 20°C in den Zellen größer oder gleich 95 %, bevorzugt größer oder gleich 97 %, besonders bevorzugt größer oder gleich 98 % und ganz besonders bevorzugt größer oder gleich 99 % und

nach 5 Minuten im Ofen bei 100°C in den Zellen größer oder gleich 80 %, bevorzugt größer oder gleich 85 %, besonders bevorzugt größer oder gleich 90 % und ganz besonders bevorzugt größer oder gleich 95 %.

In der Regel weisen dabei Flüssigkristallmedien mit einer geringen Ansteuerspannung bzw. Schwellenspannung eine geringere VHR auf als solche mit einer größeren Ansteuerspannung bzw. Schwellenspannung und umgekehrt.

Diese bevorzugten Werte für die einzelnen physikalischen Eigenschaften werden von den erfindungsgemäßen Medien bevorzugt auch jeweils miteinander kombiniert eingehalten.

In der vorliegenden Anmeldung bedeutet der Begriff "Verbindungen", auch geschrieben als "Verbindung(en)", sofern nicht explizit anders angegeben, sowohl eine als auch mehrere Verbindungen.

Die einzelnen Verbindungen werden, sofern nichts anderes angegeben, in den Mischungen in Konzentrationen generell jeweils von 1 % oder mehr bis 30 % oder weniger, bevorzugt von 2 % oder mehr bis 30 % oder weniger und besonders bevorzugt von 3 % oder mehr bis 16 % oder weniger eingesetzt.

In einer bevorzugten Ausführungsform enthalten die erfindungsgemäßen flüssigkristallinen Medien
die Verbindung der Formel I,
eine oder mehrere Verbindungen der Formel IV, bevorzug ausgewählt aus der Gruppe der Verbindungen der Formeln CC-n-V und CC-n-Vm, bevorzugt CC-3-V, CC-3-V1, CC-4-V und CC-5-V, besonders bevorzugt ausgewählt aus der Gruppe der Verbindungen CC-3-V, CC-3-V1 und CC-4-V, ganz besonders bevorzugt der Verbindung CC-3-V und gegebenenfalls zusätzlich der Verbindung CC-4-V und/oder CC-3-V1,
eine oder mehrere Verbindungen der Formel II-1-1, bevorzugt der Formel CY-n-Om, ausgewählt aus der Gruppe der Verbindungen der Formeln CY-3-O2, CY-3-O4, CY-5-O2 und CY-5-O4,
eine oder mehrere Verbindungen der Formel II-1-2, bevorzugt ausgewählt aus der Gruppe der Verbindungen der Formel CCY-n-m und CCY-n-Om, bevorzugt der Formel CCY-n-Om, bevorzugt ausgewählt aus der Gruppe der Verbindungen der Formeln CCY-3-02, CCY-2-02, CCY-3-O1, CCY-3-03, CCY-4-O2, CCY-3-O2 und CCY-5-O2,
optional, bevorzugt obligatorisch, eine oder mehrere Verbindungen der Formel II-2-2, bevorzugt der Formel CLY-n-Om, bevorzugt ausgewählt aus der Gruppe der Verbindungen der Formeln CLY-2-O4, CLY-3-02, CLY-3-O3,
eine oder mehrere Verbindungen der Formel II-3-2, bevorzugt der Formel CPY-n-Om, bevorzugt ausgewählt aus der Gruppe der Verbindungen der Formeln CPY-2-O2 und CPY-3-02, CPY-4-02 und CPY-5-O2,
eine oder mehrere Verbindungen der Formel II-4, bevorzugt der Formel PYP-n-m, bevorzugt ausgewählt aus der Gruppe der Verbindungen der Formeln PYP-2-3 und PYP-2-4,
eine oder mehrere der Verbindungen der Formel III-3, bevorzugt die Verbindung der Formel B-2O-O5.

Die erfindungsgemäßen Verbindungen der Formel I sind dem Fachmann aus der Literatur bekannt oder können in analoger Weise nach üblichen literaturbekannten Verfahren aus dem kommerziell erhältlichen 4-Hydroxy-2,2,6,6-tetramethyl-1-piperidinyl-N-oxid (CAS-Nr. 2226-96-2) hergestellt werden (s. z.B. Houben-Weyl, Methoden der Organischen Chemie, Thieme-Verlag, Stuttgart).

Für die vorliegende Erfindung bedeutet im Zusammenhang mit der Angabe der Bestandteile der Zusammensetzungen, wenn nicht im Einzelfall anders angegeben:

- "enthalten": die Konzentration der betreffenden Bestandteile in der Zusammensetzung beträgt bevorzugt 5 % oder mehr, besonders bevorzugt 10 % oder mehr, ganz besonders bevorzugt 20 % oder mehr,
- "überwiegend bestehen aus": die Konzentration der betreffenden Bestandteile in der Zusammensetzung beträgt bevorzugt 50 % oder mehr, besonders bevorzugt 55 % oder mehr und ganz besonders bevorzugt 60 % oder mehr,
- "im wesentlichen bestehen aus": die Konzentration der betreffenden Bestandteile in der Zusammensetzung beträgt bevorzugt 80 % oder mehr, besonders bevorzugt 90 % oder mehr und ganz besonders bevorzugt 95 % oder mehr und
- "nahezu vollständig bestehen aus": die Konzentration der betreffenden Bestandteile in der Zusammensetzung beträgt bevorzugt 98 % oder mehr, besonders bevorzugt 99 % oder mehr und ganz besonders bevorzugt 100,0 %.

Dies gilt sowohl für die Medien als Zusammensetzungen mit ihren Bestandteilen, die Komponenten und Verbindungen sein können, als auch für die Komponenten mit ihren Bestandteilen, den Verbindungen. Lediglich in Bezug auf die Konzentration einer einzelnen Verbindung im Verhältnis zum gesamten Medium bedeutet der Begriff enthalten: die Konzentration der betreffenden Verbindung beträgt bevorzugt 1 % oder mehr, besonders bevorzugt 2 % oder mehr, ganz besonders bevorzugt 4 % oder mehr.

Für die vorliegende Erfindung bedeutet "≤" kleiner oder gleich, bevorzugt kleiner und "≥" größer oder gleich, bevorzugt größer.

Für die vorliegende Erfindung bedeuten

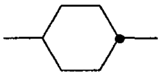, 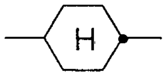 und 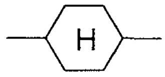

trans-1,4-Cyclohexylen und

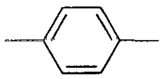 und 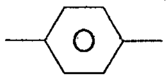

1,4-Phenylen.

Für die vorliegende Erfindung bedeuten die Begriffe "dielektrisch positive Verbindungen" solche Verbindungen mit einem $\Delta\varepsilon > 1,5$, "dielektrisch neutrale Verbindungen" solche mit $-1,5 \leq \Delta\varepsilon \leq 1,5$ und "dielektrisch negative" Verbindungen solche mit $\Delta\varepsilon < -1,5$. Hierbei wird die dielektrische Anisotropie der Verbindungen bestimmt, indem 10 % der Verbindungen in einem flüssigkristallinen Host gelöst werden und von der resultierenden Mischung die Kapazität in mindestens jeweils einer Testzelle mit 20 $\mu$m Schichtdicke mit homöotrope und mit homogener Oberflächenorientierung bei 1 kHz bestimmt wird. Die Meßspannung beträgt typischerweise 0,5 V bis 1,0 V, sie ist jedoch stets niedriger als die kapazitive Schwelle der jeweiligen untersuchten Flüssigkristallmischung.

Als Hostmischung für dielektrisch positive und dielektrisch neutrale Verbindungen wird ZLI-4792 und für dielektrisch negative Verbindungen ZLI-2857, beide von Merck KGaA, Deutschland, verwendet. Aus der Änderung der Dielektrizitätskonstante der Hostmischung nach Zugabe der zu untersuchenden Verbindung und Extrapolation auf 100 % der eingesetzten Verbindung werden die Werte für die jeweiligen zu untersuchenden Verbindungen erhalten. Die zu untersuchende Verbindung wird zu 10 % in der Hostmischung gelöst. Wenn die Löslichkeit der Substanz hierzu zu gering ist, wird die Konzentration schrittweise solange halbiert, bis die Untersuchung bei der gewünschten Temperatur erfolgen kann.

Die erfindungsgemäßen Flüssigkristallmedien können bei Bedarf auch weitere Zusatzstoffe wie z. B. Stabilisatoren und/oder pleochroitische Farbstoffe und/oder chirale Dotierstoffe in den üblichen Mengen enthalten. Die eingesetzte Menge dieser Zusatzstoffe beträgt bevorzugt insgesamt 0 % oder mehr bis 10 % oder weniger bezogen auf die Menge der gesamten Mischung, besonders bevorzugt 0,1 % oder mehr bis 6 % oder weniger. Die Konzentration der einzelnen eingesetzten Verbindungen beträgt bevorzugt 0,1 % oder mehr bis 3 % oder weniger. Die Konzentration dieser und ähnlicher Zusatzstoffe wird bei der Angabe der Konzentrationen sowie der Konzentrationsbereiche der Flüssigkristallverbindungen in den Flüssigkristallmedien in der Regel nicht berücksichtigt.

In einer bevorzugten Ausführungsform enthalten die erfindungsgemäßen Flüssigkristallmedien einen Polymervorläufer, der eine oder mehrere reaktive Verbindungen, bevorzugt reaktive Mesogene und bei Bedarf auch weitere Zusatzstoffe wie z. B. Polymerisationsinitiatoren und/oder Polymerisationsmoderatoren in den üblichen Mengen enthalten. Die eingesetzte Menge dieser Zusatzstoffe beträgt insgesamt 0 % oder mehr bis 10 % oder weniger bezogen auf die Menge der gesamten Mischung bevorzugt 0,1 % oder mehr bis 2 % oder weniger. Die Konzentration dieser und ähnlicher Zusatzstoffe wird bei der Angabe der Konzentrationen sowie der Konzentrationsbereiche der Flüssigkristallverbindungen in den Flüssigkristallmedien nicht berücksichtigt.

Die Zusammensetzungen bestehen aus mehreren Verbindungen, bevorzugt aus 3 oder mehr bis 30 oder weniger, besonders bevorzugt aus 6 oder mehr bis 20 oder weniger und ganz besonders bevorzugt aus 10 oder mehr bis 16 oder weniger Verbindungen, die auf herkömmliche Weise gemischt werden. In der Regel wird die gewünschte Menge der in geringerer Menge verwendeten Komponenten in den Komponenten gelöst, die den Hauptbestandteil der Mischung ausmachenden. Dies erfolgt zweckmäßigerweise bei erhöhter Temperatur. Liegt die gewählte Temperatur über dem Klärpunkt des Hauptbestandteils, so ist die Vervollständigung des Lösungsvorgangs besonders leicht zu beobachten. Es ist jedoch auch möglich, die Flüssigkristallmischungen auf anderen üblichen Wegen, z. B. unter Verwendung von Vormischungen oder aus einem so genannten "Multi Bottle System" herzustellen.

Die erfindungsgemäßen Mischungen zeigen sehr breite nematische Phasenbereiche mit Klärpunkten 65°C oder mehr, sehr günstige Werte für die kapazitive Schwelle, relativ hohe Werte für die Holding Ratio und gleichzeitig sehr gute Tieftemperaturstabilitäten bei -30°C und -40°C. Weiterhin zeichnen sich die erfindungsgemäßen Mischungen durch niedrige Rotationsviskositäten $\gamma_1$ aus.

Es versteht sich für den Fachmann von selbst, daß die erfindungsgemäßen Medien für die Verwendung in VA-, IPS-, FFS- oder PALC-Anzeigen auch Verbindungen enthalten kann, worin beispielsweise H, N, O, Cl, F durch die entsprechenden Isotope ersetzt sind.

Der Aufbau der erfindungsgemäßen Flüssigkristallanzeigen entspricht der üblichen Geometrie, wie sie z. B. in EP 0 240 379 A1, beschrieben wird.

Mittels geeigneter Zusatzstoffe können die erfindungsgemäßen Flüssigkristallphasen derart modifiziert werden, daß sie in jeder bisher bekannt gewordenen Art von z. B. ECB-, VAN-, IPS-, GH- oder ASM-VA-LCD-Anzeige einsetzbar sind.

In der nachfolgenden Tabelle E werden mögliche Dotierstoffe angegeben, die den erfindungsgemäßen Mischungen zugesetzt werden können. Sofern die Mischungen einen oder mehrere Dotierstoffe enthalten, wird er in Mengen von 0,01 % bis 4 %, vorzugsweise 0,1 % bis 1,0 %, eingesetzt. Stabilisatoren, die beispielsweise den erfindungsgemäßen Mischungen zugesetzt werden können, vorzugsweise in Mengen von 0,01 % bis 6 %, insbesondere 0,1 % bis 3 %, werden nachfolgend in Tabelle F genannt.

Alle Konzentrationen sind für die Zwecke der vorliegenden Erfindung, soweit nicht explizit anders vermerkt, in Massenprozent angegeben und beziehen sich auf die entsprechende Mischung oder Mischungskomponente, soweit nicht explizit anders angegeben.

Alle angegebenen Werte für Temperaturen in der vorliegenden Anmeldung, wie z. B. der Schmelzpunkt T(C,N), der Übergang von der smektischen (S) zur nematischen (N) Phase T(S,N) und der Klärpunkt T(N,I), sind in Grad Celsius (°C) und alle Temperaturdifferenzen entsprechend Differenzgrad (° oder Grad) angegeben, sofern nicht explizit anders angegeben.

Der Begriff "Schwellenspannung" bezieht sich für die vorliegende Erfindung auf die kapazitive Schwelle ($V_0$), auch Freedericksz-Schwelle genannt, sofern nicht explizit anders angegeben.

Alle physikalischen Eigenschaften werden und wurden nach "Merck Liquid Crystals, Physical Properties of Liquid Crystals", Status Nov. 1997, Merck KGaA, Deutschland bestimmt und gelten für eine Temperatur von 20°C und $\Delta n$ wird bei 589 nm und $\Delta\varepsilon$ bei 1 kHz bestimmt, sofern nicht jeweils explizit anders angegeben.

Die elektrooptischen Eigenschaften werden, ebenso wie das Schaltverhalten, in bei der Firma Merck Japan hergestellten Testzellen bestimmt. Die Messzellen haben Substrate aus alkalifreiem Glas und sind in einer FFS-Konfiguration (Pixel-Elektrode mit parallel zueinander verlaufenden ITO-Streifen mit einer Breite von 3.5 μm und einem Abstand von 6 μm, eine vollflächigen ITO-Schicht, genannt Common-Elektrode, und einer Isolationsschicht aus Siliziumnitrid dazwischen) angefertigt. Auf der Pixel-Elektrode befindet sich eine Polyimid-Orientierungsschicht, die eine planare (homogene) Orientierung vorgibt. Die Orientierung in der Ebene kann über einen mechanischen Prozess oder einen Photo-Orientierungsschritt derart vorgegeben werden, dass eine Vorzugsorientierung in der Ebene von 90° bis 80° gegenüber den Elektrodenstreifen der Pixel-Elektrode erreicht wird. Die Fläche der durchsichtigen, nahezu quadratischen Elektroden aus ITO beträgt 25 $mm^2$. Die Schichtdicke der Testzellen kann der optischen Anisotropie der Flüssigkristallmischung ($\Delta n$) angepasst werden. Typische Werte für die Schichtdicke sind zwischen 3.0 μm und 3.5 μm.

Alternativ werden die elektrooptischen Eigenschaften z. B. die Schwellenspannung ($V_0$) (kapazitive Messung) in ebenso bei der Firma Merck Japan hergestellten Testzellen bestimmt. Diese Meßzellen haben wieder Substrate aus Natriumglas (Sodalime Glas) und sind jedoch in einer ECB- bzw. VA-Konfiguration gebaut mit Polyimidorientierungsschichten (SE-1211 mit Verdünner **26 (Mischungsverhältnis 1:1) beide der Firma Nissan Chemicals, Japan), die senkrecht zueinander gerieben sind und die eine homöotrope Orientierung der Flüssigkristalle bewirken. Die Fläche der durchsichtigen, nahezu quadratischen Elektroden aus ITO beträgt 1 $cm^2$.

Die verwendeten Flüssigkristallmischungen sind, wenn nicht anders angegeben, nicht mit einem chiralen Dotierstoff versetzt, sie eignen sich aber auch besonders für Anwendungen, in denen eine solche Dotierung erforderlich ist.

Die VHR wird in bei der Firma Merck Japan hergestellten Testzellen bestimmt. Die Testzellen haben Substrate aus alkalifreiem Glas und sind mit Polyimidorientierungsschichten mit einer Schichtdicke von 50 nm versehen, die zu einer planaren Orientierung der Flüssigkristalle führen. Der Zellspalt beträgt einheitlich 3.0 μm oder 6,0 μm. Die Fläche der durchsichtigen Elektroden aus ITO beträgt 1 $cm^2$.

Die VHR wird, soweit nicht anders angegeben, bei 20°C ($VHR_{20}$) und nach 5 Minuten im Ofen bei 100°C ($VHR_{100}$) in einem kommerziell erhältlichen Gerät der Firma Autronic Melchers, Deutschland bestimmt. Die verwendete Spannung hat eine Frequenz in einem Bereich von 1 Hz bis 60 Hz falls nicht genauer angegeben.

Die Genauigkeit der Meßwerte der VHR hängt vom jeweiligen Wert der VHR ab. Dabei nimmt die Genauigkeit mit geringer werdenden Werten ab. Die bei Werten in den verschiedenen Größenbereichen in der Regel beobachten Abweichungen sind in ihrer Größenordnung in der folgenden Tabelle zusammen gestellt.

| VHR-Bereich | | Abweichung (relativ) |
|---|---|---|
| VHR-Werte | | $\Delta_G$VHR/VHR /% |
| von | bis | ca. |
| 99,6 % | 100 % | +/- 0,1 |
| 99,0 % | 99,6 % | +/- 0,2 |
| 98 % | 99 % | +/- 0,3 |

(fortgesetzt)

| VHR-Bereich | | Abweichung (relativ) |
|---|---|---|
| VHR-Werte | | $\Delta_G VHR/VHR$ /% |
| von | bis | ca. |
| 95 % | 98 % | +/- 0,5 |
| 90% | 95 % | +/-1 |
| 80 % | 90 % | +/- 2 |
| 60 % | 80 % | +/- 4 |
| 40 % | 60 % | +/- 8 |
| 20 % | 40 % | +/- 10 |
| 10 % | 20 % | +/- 20 |

Die Stabilität gegen Bestrahlung mit UV wird in einem "Suntest CPS" einem kommerziellen Gerät der Firma Heraeus, Deutschland untersucht. Dabei werden die versiegelten Testzellen zwischen 30 min und 2,0 Stunden falls nicht explizit angegeben ohne zusätzliche thermische Belastung bestrahlt. Die Bestrahlungsleistung im Wellenlängenbereich von 300 nm bis 800 nm beträgt 765 $W/m^2$ V. Es wird ein UV "cut-off" Filter mit einer Kantenwellenlänge von 310 nm verwendet um den sogenannten Fensterglasmodus (Englisch: "window glass mode") zu simulieren. Bei jeder Versuchsserie werden für jede Bedingung mindestens vier Testzellen untersucht und die jeweiligen Ergebnisse werden als Mittelwerte der entsprechenden einzelnen Messungen angegeben.

Die üblicherweise durch die Belastung, z.B. durch Bestrahlung mit UV durch eine LCD-Hintergrundbeleuchtung, verursachte Abnahme der Voltage Holding Ratio ($\Delta$VHR) wird nach der folgenden Gleichung (1) bestimmt:

$$\Delta VHR(t) = VHR(t) - VHR(t=0) \qquad (1).$$

Die Rotationsviskosität wird mit der Methode des rotierenden Permanentmagneten und die Fließviskosität in einem modifizierten Ubbelohde-Viskosimeter bestimmt. Für die Flüssigkristallmischungen ZLI-2293, ZLI-4792 und MLC-6608, alle Produkte der Firma Merck KGaA, Darmstadt, Deutschland, betragen die bei 20°C bestimmten Werte der Rotationsviskosität 161 mPa·s, 133 mPa·s bzw. 186 mPa·s und die der Fließviskosität ($\nu$) 21 $mm^2 \cdot s^{-1}$, 14 $mm^2 \cdot s^{-1}$ bzw. 27 $mm^2 \cdot s^{-1}$.

Es werden, wenn nicht explizit anders angegeben, die folgenden Symbole verwendet:

| | |
|---|---|
| $V_o$ | Schwellenspannung, kapazitiv [V] bei 20°C, |
| $n_e$ | außerordentlicher Brechungsindex gemessen bei 20°C und 589 nm, |
| $n_o$ | ordentlicher Brechungsindex gemessen bei 20°C und 589 nm, |
| $\Delta n$ | optische Anisotropie gemessen bei 20°C und 589 nm, |
| $\varepsilon_\perp$ | dielektrische Suszeptibilität senkrecht zum Direktor bei 20°C und 1 kHz, |
| $\varepsilon_\parallel$ | dielektrische Suszeptibilität parallel zum Direktor bei 20°C und 1 kHz, |
| $\Delta\varepsilon$ | dielektrische Anisotropie bei 20°C und 1 kHz, |
| cp. bzw. T(N,I) | Klärpunkt [°C], |
| v | Fließviskosität gemessen bei 20°C [$mm^2 \cdot s^{-1}$], |
| $\gamma_1$ | Rotationsviskosität gemessen bei 20°C [mPa·s], |
| $K_1$ | elastische Konstante, "splay"-Deformation bei 20°C [pN], |
| $K_2$ | elastische Konstante, "twist"-Deformation bei 20°C [pN], |
| $K_3$ | elastische Konstante, "bend"-Deformation bei 20°C [pN] und |
| LTS | Tieftemperaturstabilität der Phase ("low temperature stability"), bestimmt in Testzellen, |
| VHR | Spannungshaltevermögen ("voltage holding ratio"), |
| $\Delta$VHR | Abnahme der Voltage Holding Ratio, |
| $S_{rel}$ | relative Stabilität der VHR. |

Die folgenden Beispiele erläutern die vorliegende Erfindung ohne sie zu begrenzen. Sie zeigen dem Fachmann jedoch bevorzugte Mischungskonzepte mit bevorzugt einzusetzenden Verbindungen und deren jeweiligen Konzentrationen sowie deren Kombinationen miteinander. Außerdem illustrieren die Beispiele, welche Eigenschaften und Eigenschaftskombinationen zugänglich sind.

Für die vorliegende Erfindung und in den folgenden Beispielen sind die Strukturen der Flüssigkristallverbindungen durch Akronyme angegeben, wobei die Transformation in chemische Formeln gemäß folgender Tabellen A bis C erfolgt. Alle Reste $C_nH_{2n+1}$, $C_mH_{2m+1}$ und $C_lH_{2l+1}$ bzw. $C_nH_{2n}$, $C_mH_{2m}$ und $C_lH_{2l}$ sind geradkettige Alkylreste bzw. Alkylenreste jeweils mit n, m bzw. l C-Atomen. In Tabelle A sind die Ringelemente der Kerne der Verbindung codiert, in Tabelle B sind die Brückenglieder aufgelistet und in Tabelle C sind die Bedeutungen der Symbole für die linken bzw. rechten Endgruppen der Moleküle aufgelistet. Die Akronyme werden aus den Codes für die Ringelemente mit optionalen Verknüpfungsgruppen, gefolgt von einem ersten Bindestrich und den Codes für die linke Endgruppe, sowie einem zweiten Bindestrich und den Codes für die rechts Endgruppe, zusammengesetzt. In Tabelle D sind Beispielstrukturen von Verbindungen mit ihren jeweiligen Abkürzungen zusammengestellt.

**Tabelle A: Ringelemente**

| | | | |
|---|---|---|---|
| **C** | 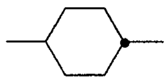 | | |
| **D** | 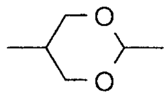 | **DI** | 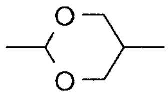 |
| **A** | 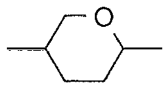 | **AI** | 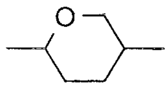 |
| **P** | 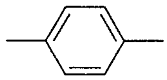 | | |
| **G** | 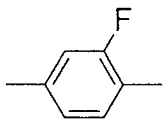 | **GI** | 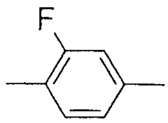 |
| **U** | 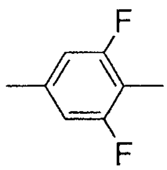 | **UI** | 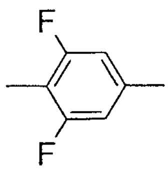 |
| **Y** | 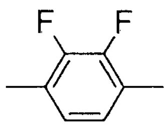 | | |
| **P(F, Cl)Y** | 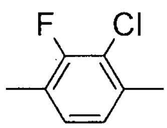 | **P(Cl,F)Y** | 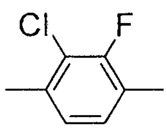 |
| **np** | 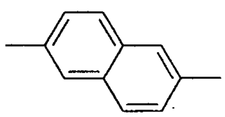 | | |
| **n3f** | 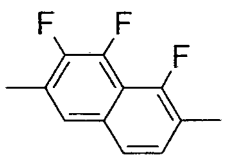 | **nN3fl** | 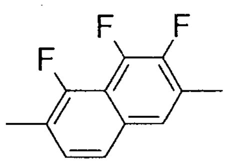 |

(fortgesetzt)

| | | | |
|---|---|---|---|
| **th** | 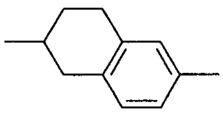 | **thl** | 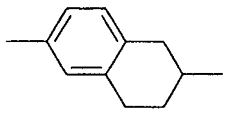 |
| **tH2f** | 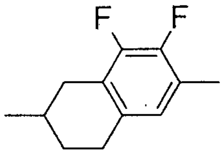 | **tH2fl** | 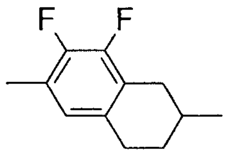 |
| **o2f** | 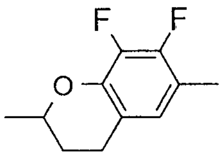 | **o2fl** | 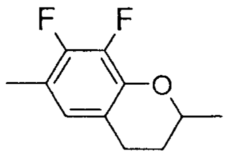 |
| **dh** | 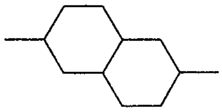 | **B** | 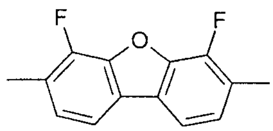 |
| **K** | 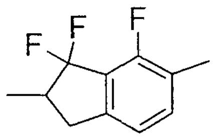 | **Kl** | 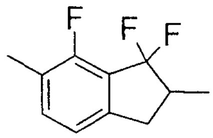 |
| **L** | 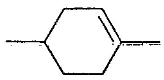 | **Ll** | 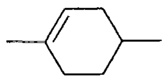 |
| **F** | 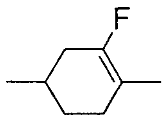 | **Fl** | 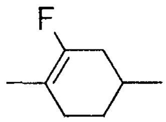 |

**Tabelle B: Brückenglieder**

| | | | |
|---|---|---|---|
| **E** | $-CH_2-CH_2-$ | | |
| **V** | -CH=CH- | | |
| **T** | $-C\equiv C-$ | | |
| **W** | $-CF_2-CF_2-$ | | |
| **B** | -CF=CF- | | |
| **Z** | -CO-O- | **ZI** | -O-CO- |
| **X** | -CF=CH- | **XI** | -CH=CF- |
| **O** | $-CH_2-O-$ | **OI** | $-O-CH_2-$ |
| **Q** | $-CF_2-O-$ | **QI** | $-O-CF_2-$ |

**Tabelle C: Endgruppen**

| Links einzelstehend oder in Kombination | | Rechts einzelstehend oder in Kombination | |
|---|---|---|---|
| **-n-** | $C_nH_{2n+1}-$ | **-n** | $-C_nH_{2n+1}$ |
| **-nO-** | $C_nH_{2n+1}-O-$ | **-nO** | $-O-C_nH_{2n+1}$ |
| **-V-** | $CH_2=CH-$ | **-V** | $-CH=CH_2$ |
| **-nV-** | $C_nH_{2n+1}-CH=CH-$ | **-nV** | $-C_nH_{2n}-CH=CH_2$ |
| **-Vn-** | $CH_2=CH-C_nH_{2n}-$ | **-Vn** | $-CH=CH-C_nH_{2n+1}$ |

(fortgesetzt)

| Links einzelstehend oder in Kombination | | Rechts einzelstehend oder in Kombination | |
|---|---|---|---|
| **-nVm-** | $C_nH_{2n+1}$-CH=CH-$C_mH_{2m}$- | **-nVm** | -$C_nH_{2n}$-CH=CH-$C_mH_{2m+1}$ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | $CFH_2$- | **-M** | -$CFH_2$ |
| **-D-** | $CF_2H$- | **-D** | -$CF_2H$ |
| **-T-** | $CF_3$- | **-T** | -$CF_3$ |
| **-MO-** | $CFH_2O$- | **-OM** | -$OCFH_2$ |
| **-DO-** | $CF_2HO$- | **-OD** | -$OCF_2H$ |
| **-TO-** | $CF_3O$ - | **-OT** | -$OCF_3$ |
| **-A-** | H-C=C- | **-A** | -C=C-H |
| **-nA-** | $C_nH_{2n+1}$-C≡C- | **-An** | -C≡C-$C_nH_{2n+1}$ |
| **-NA-** | N=C-C=C- | **-AN** | -C≡C-C≡N |
| **Links nur in Kombination** | | **Rechts nur in Kombination** | |
| **-...n...-** | -$C_nH_{2n}$- | **-...n...** | -$C_nH_{2n}$- |
| **-...M...-** | -CFH- | **-...M...** | -CFH- |
| **-...D...-** | -$CF_2$- | **-...D...** | -$CF_2$- |
| **-...V...-** | -CH=CH- | **-...V...** | -CH=CH- |
| **-...Z...-** | -CO-O- | **-...Z...** | -CO-O- |
| **-...Zl...-** | -O-CO- | **-...Zl. ..** | -O-CO- |
| **-...K...-** | -CO- | **-...K...** | -CO- |
| **-...W...-** | -CF=CF- | **-...W...** | -CF=CF- |
| worin n und m jeweils ganze Zahlen und die drei Punkte "..." Platzhalter für andere Abkürzungen aus dieser Tabelle sind. | | | |

Vorzugsweise enthalten die erfindungsgemäßen Mischungen neben den Verbindungen der Formeln I eine oder mehrere Verbindungen der nachfolgend genannten Verbindungen.

Folgende Abkürzungen werden verwendet:
(n, m und z unabhängig voneinander jeweils eine ganze Zahl, bevorzugt 1 bis 6)

## Tabelle D

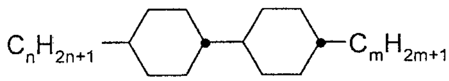

**CC-n-m**

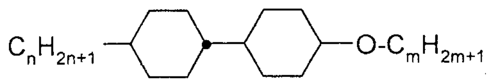

**CC-n-Om**

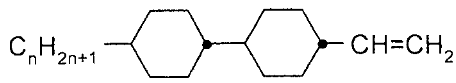

**CC-n-V**

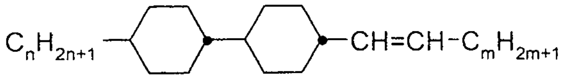

**CC-n-Vm**

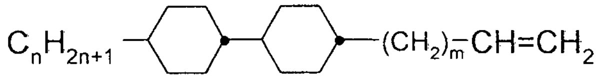

**CC-n-mV**

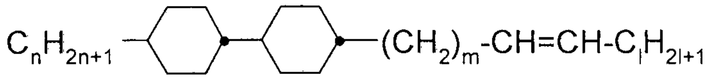

**CC-n-mVl**

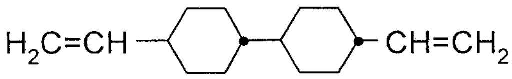

**CC-V-V**

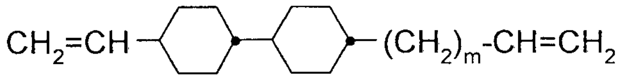

**CC-V-mV**

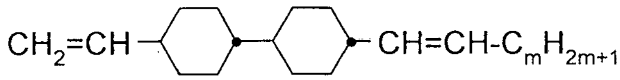

**CC-V-Vm**

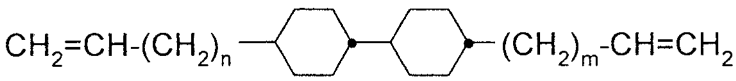

**CC-Vn-mV**

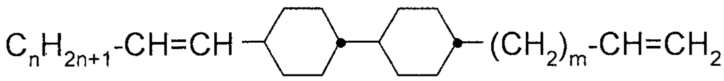

**CC-nV-mV**

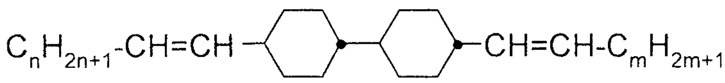

**CC-nV-Vm**

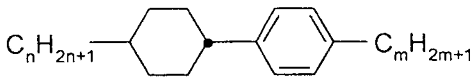

**CP-n-m**

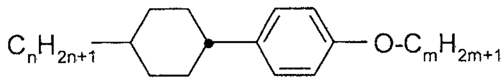

**CP-n-Om**

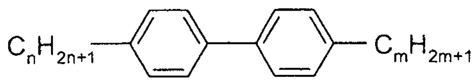

**PP-n-m**

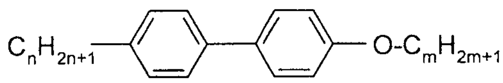

**PP-n-Om**

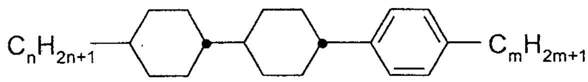

**CCP-n-m**

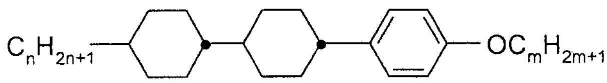

**CCP-n-Om**

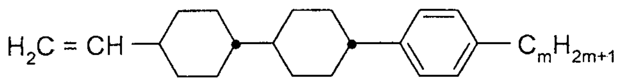

**CCP-V-m**

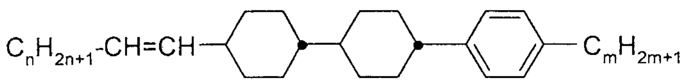

**CCP-nV-m**

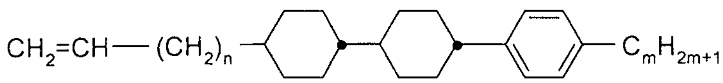

**CCP-Vn-m**

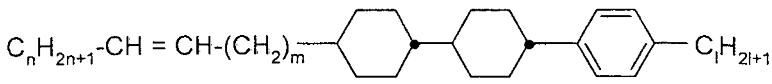

**CCP-nVm-l**

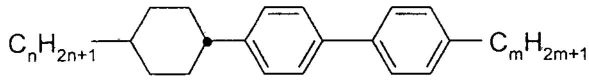

**CPP-n-m**

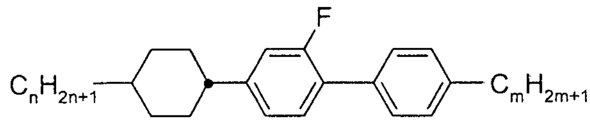

**CGP-n-m**

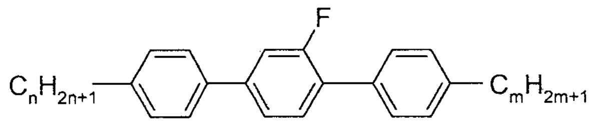

**PGP-n-m**

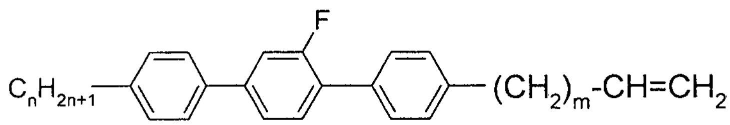

**PGP-n-mV**

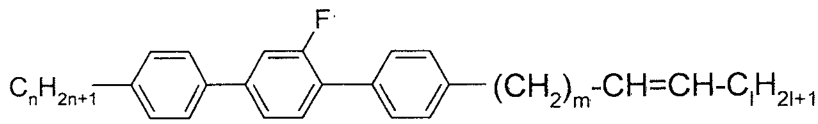

**PGP-n-mVl**

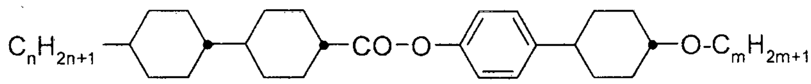

**CCZPC-n-m**

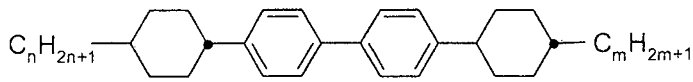

**CPPC-n-m**

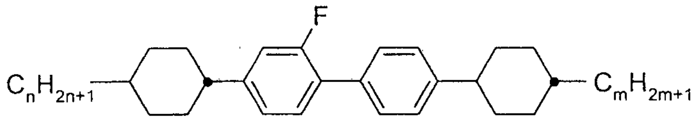

**CGPC-n-m**

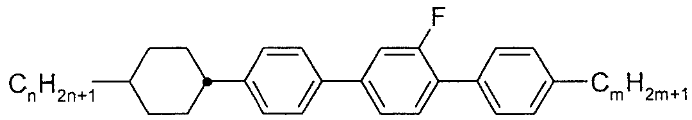

**CPGP-n-m**

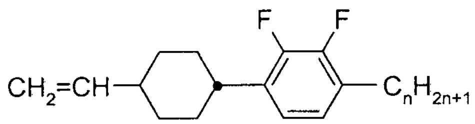

**CY-V-n**

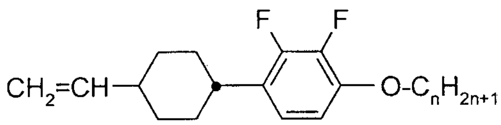

**CY-V-On**

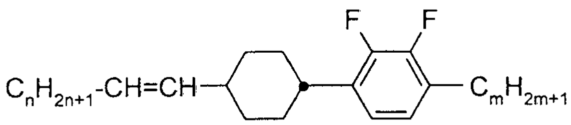

**CY-nV-m**

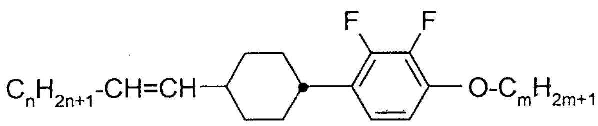

**CY-nV-Om**

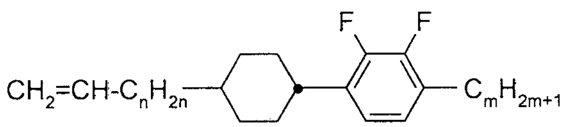

**CY-Vn-m**

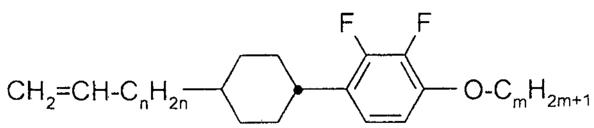

**CY-Vn-Om**

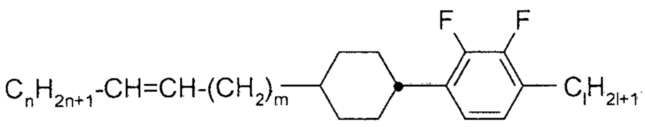

**CY-nVm-l**

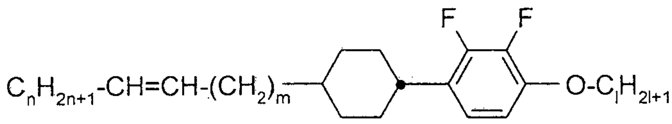

**CY-nVm-Ol**

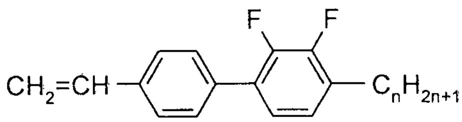

**PY-V-n**

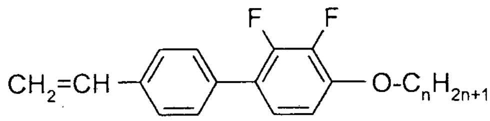

**PY-V-On**

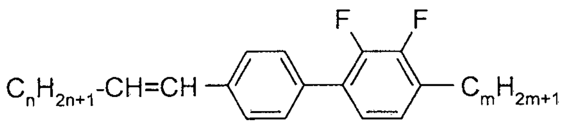

**PY-nV-m**

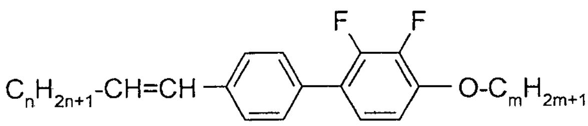

**PY-nV-Om**

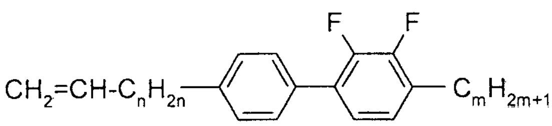

**PY-Vn-m**

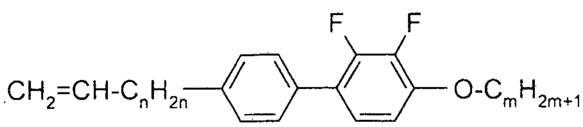

**PY-Vn-Om**

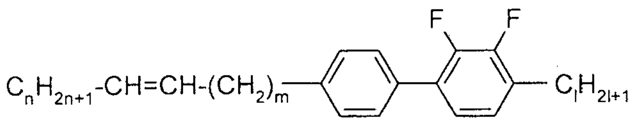

**PY-nVm-l**

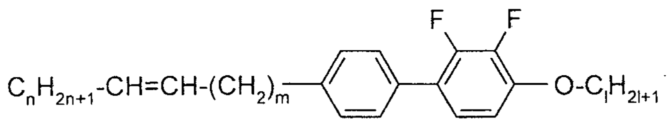

**PY-nVm-Ol**

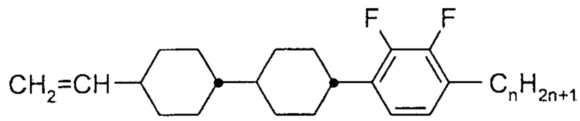

**CCY-V-n**

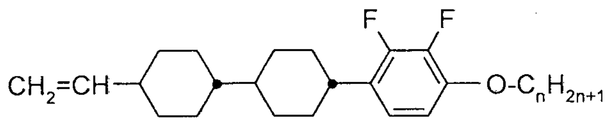

**CCY-V-On**

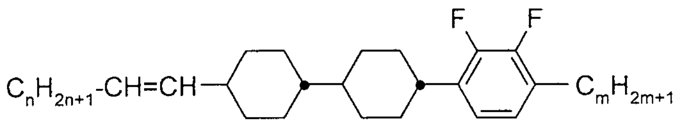

**CCY-nV-m**

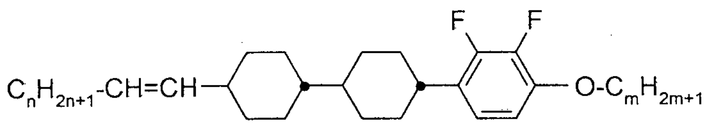

**CCCY-nV-Om**

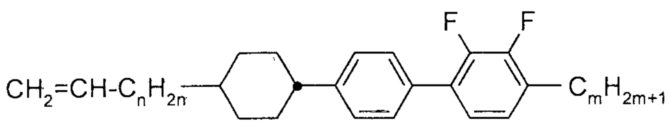

**CCY-Vn-m**

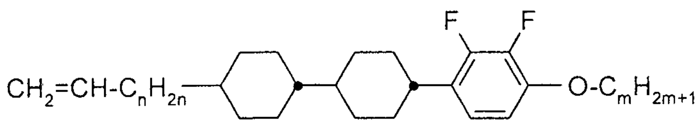

**CCY-Vn-Om**

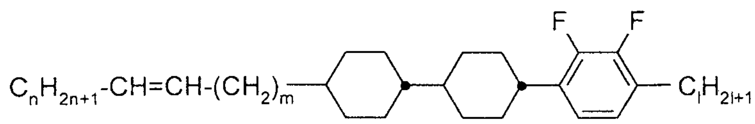

**CCY-nVm-l**

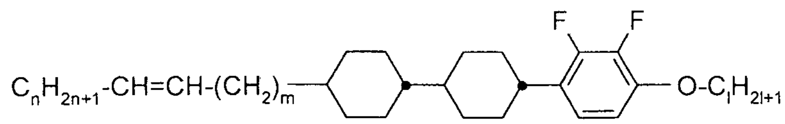

**CCY-nVm-Ol**

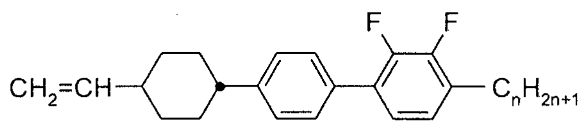

**CPY-V-n**

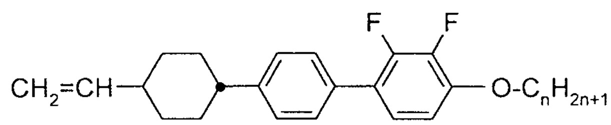

**CPY-V-On**

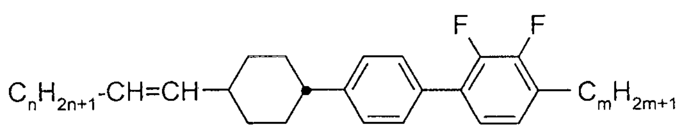

**CPY-nV-m**

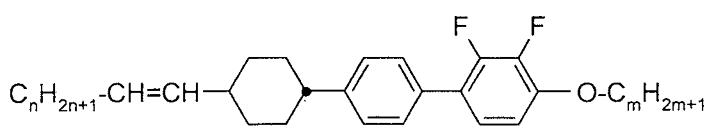

**CPY-nV-Om**

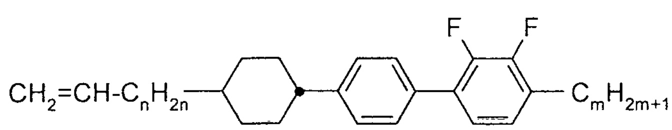

**CPY-Vn-m**

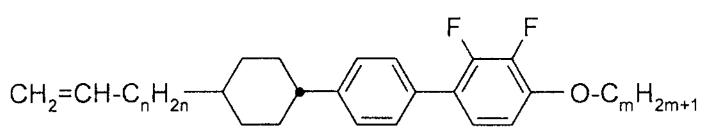

**CPY-Vn-Om**

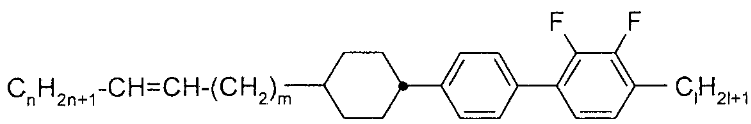

CPY-nVm-l

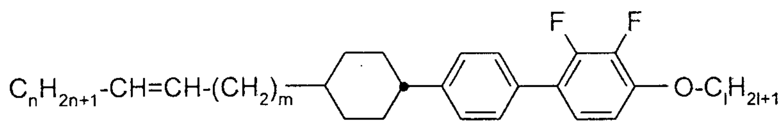

CPY-nVm-Ol

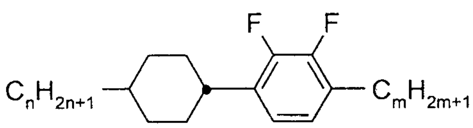

CY-n-m

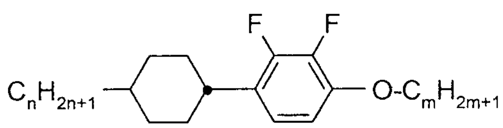

CY-n-Om

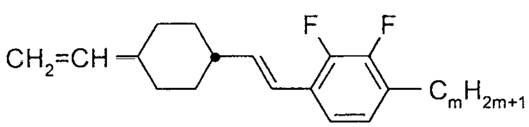

CVY-n-m

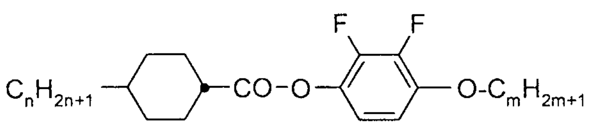

CZY-n-Om

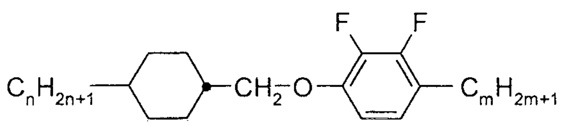

COY-n-m

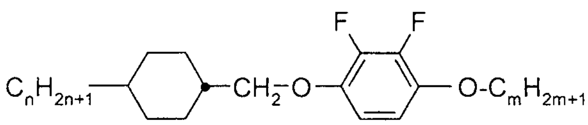

COY-n-Om

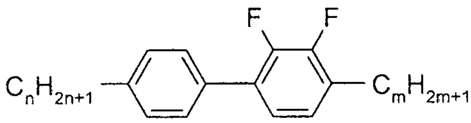

**PY-n-m**

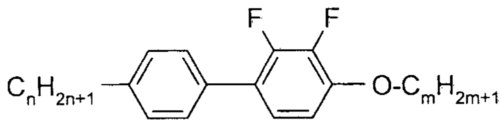

**PY-n-Om**

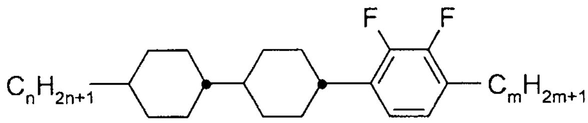

**CCY-n-m**

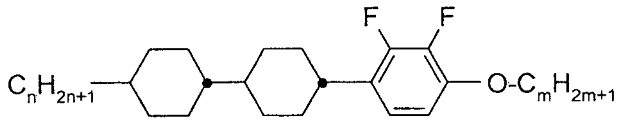

**CCY-n-Om**

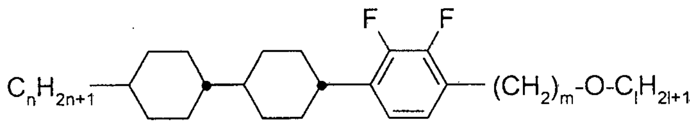

**CCY-n-mOl**

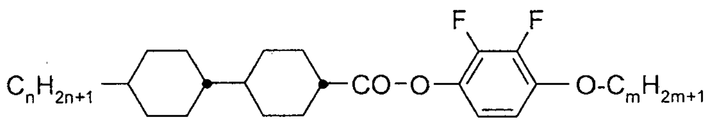

**CCZY-n-Om**

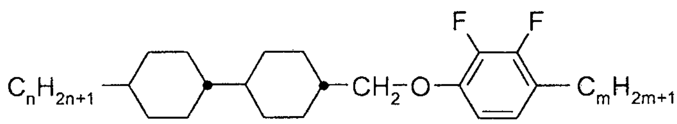

**CCOY-n-m**

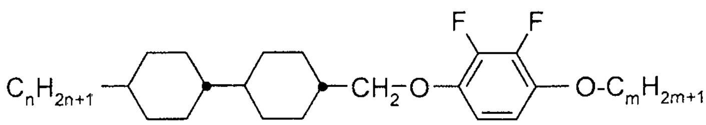

**CCOY-n-Om**

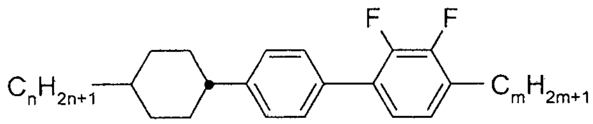

**CPY-n-m**

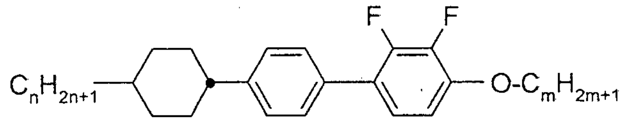

**CPY-n-Om**

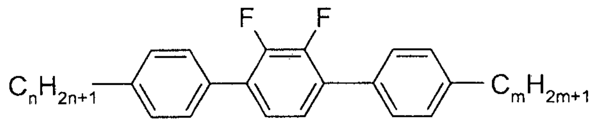

**PYP-n-m**

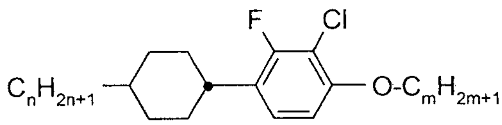

**CP(F,Cl)-n-Om**

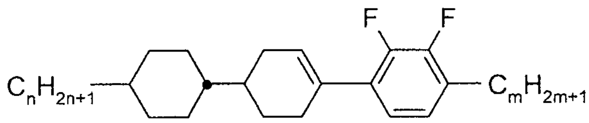

**CLY-n-m ,**

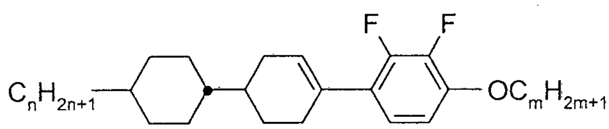

**CLY-n-Om**

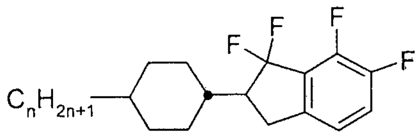

**CK-n-F**

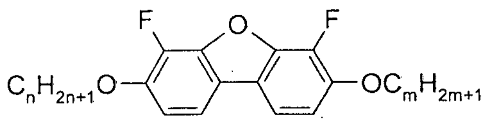

**B-nO-Om**

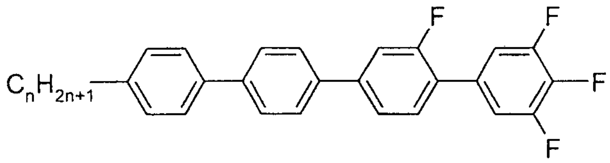

**PPGU-n**

In der Tabelle E werden chirale Dotierstoffe genannt, die bevorzugt in den erfindungsgemäßen Mischungen eingesetzt werden.

## Tabelle E

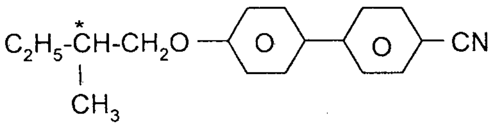

**C 15**

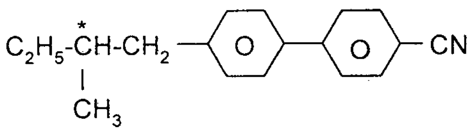

**CB 15**

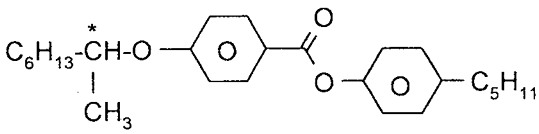

**CM 21**

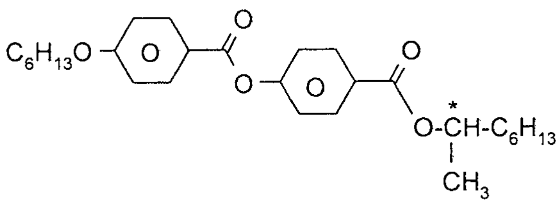

**R S-811 / S-811**

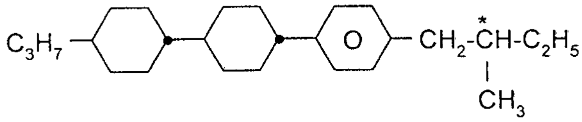

**CM 44**

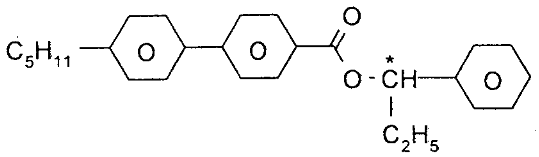

**CM 45**

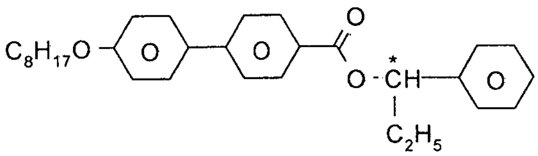

**CM 47**

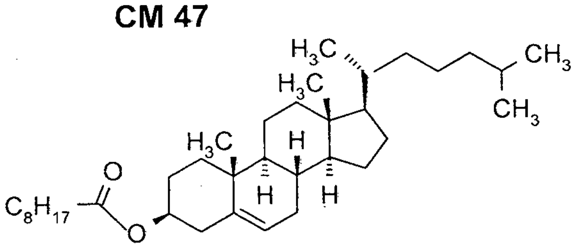

**CN**

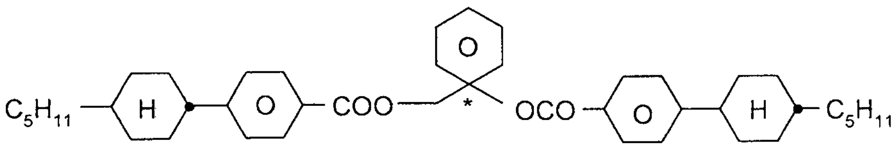

**R-1011 / S-1011**

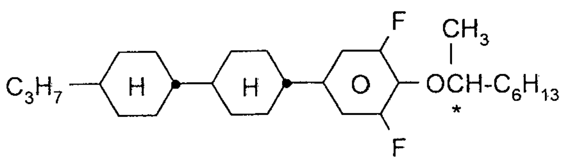

**R-2011 / S-2011**

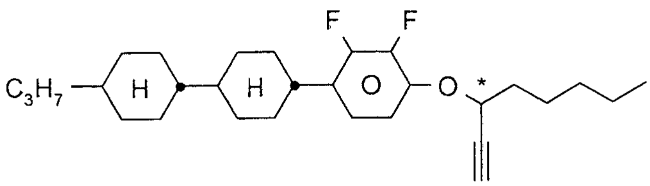

**R-3011 / S-3011**

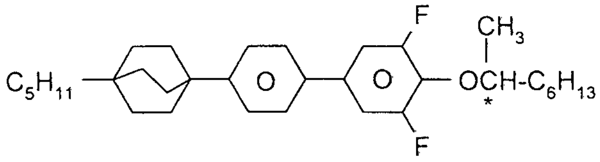

**R-4011 / S-4011**

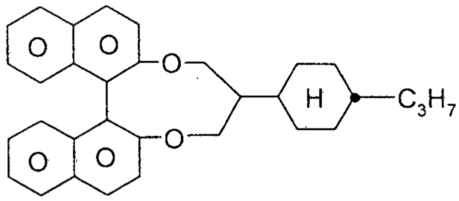

**R-5011 / S-5011**

In einer bevorzugten Ausführungsform der vorliegenden Erfindung enthalten die erfindungsgemäßen Medien eine oder mehrere Verbindungen, ausgewählt aus der Gruppe der Verbindungen der Tabelle E.

In der Tabelle F werden Stabilisatoren genannt, die zusätzlich zu den Verbindungen der Formel I in den erfindungsgemäßen Mischungen eingesetzt werden können. Der Parameter n bedeutet hier eine ganze Zahl im Bereich von 1 bis 12. Insbesondere die gezeigten Phenolderivate sind als zusätzliche Stabilisatoren einsetzbar, da sie als Antioxidantien wirken.

## Tabelle F

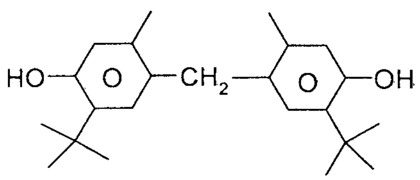

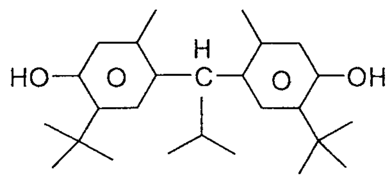

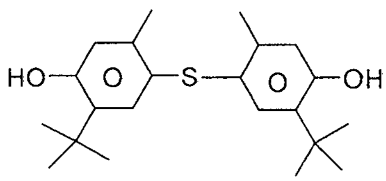

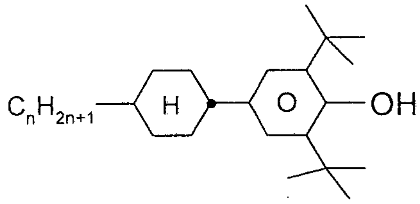

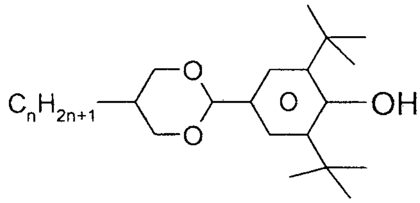

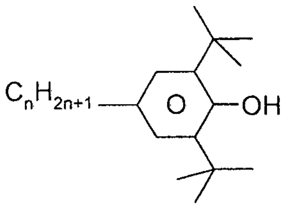

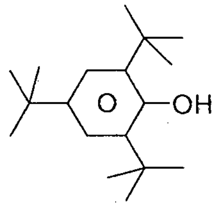

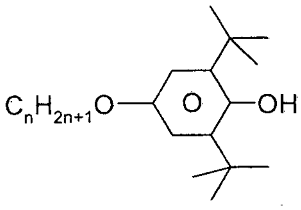

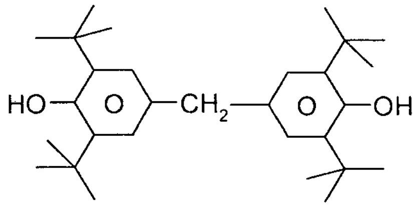

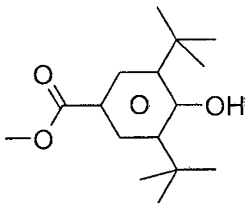

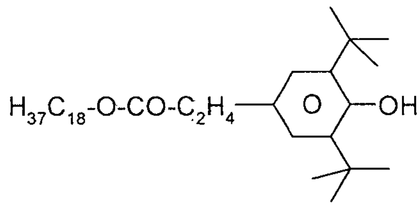

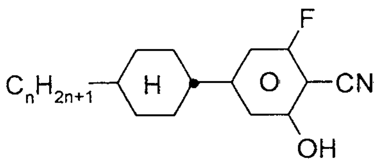

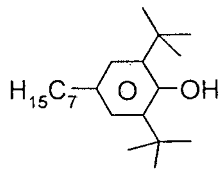

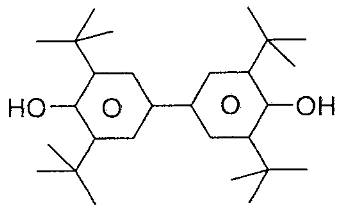

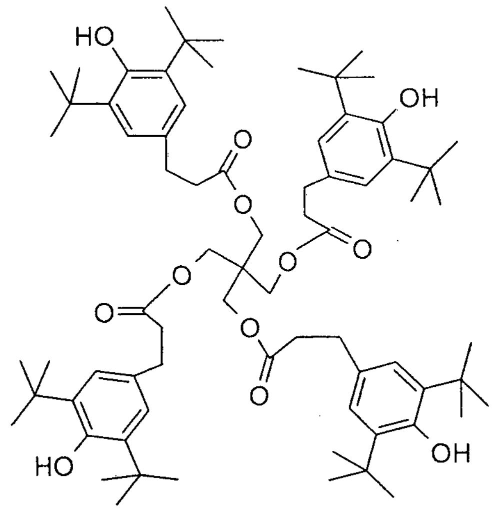

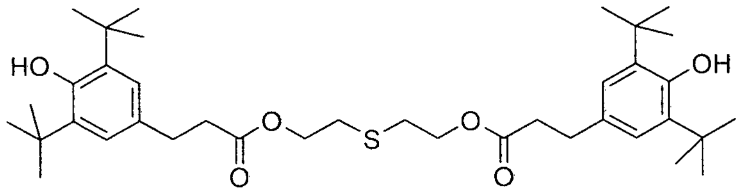

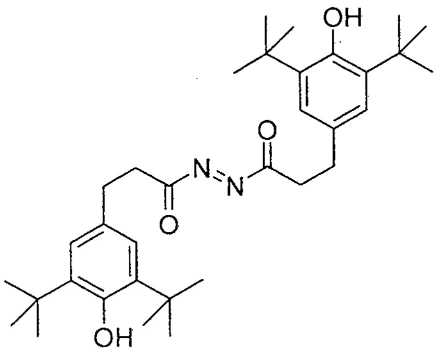

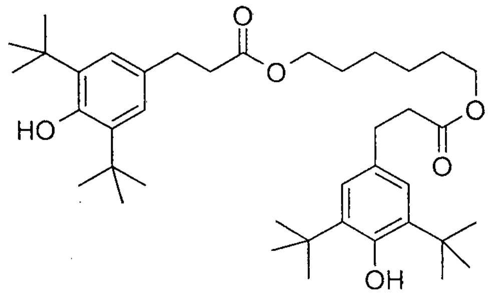

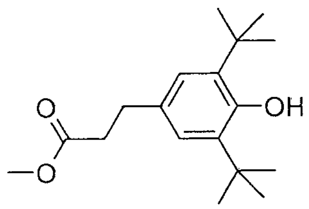

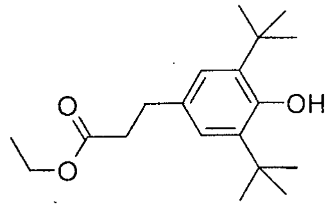

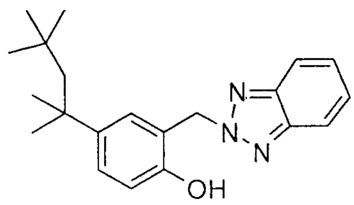

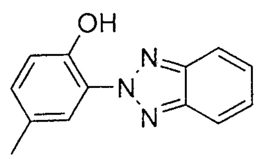

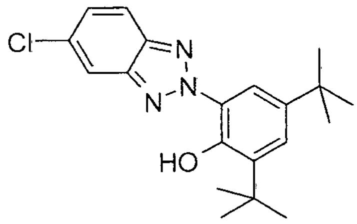

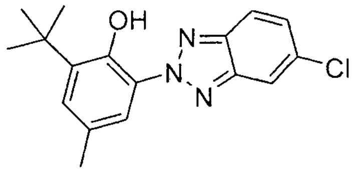

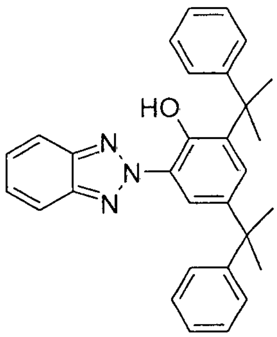

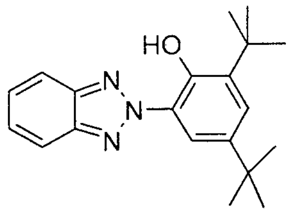

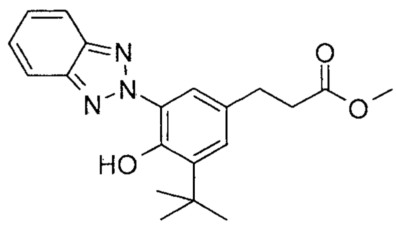

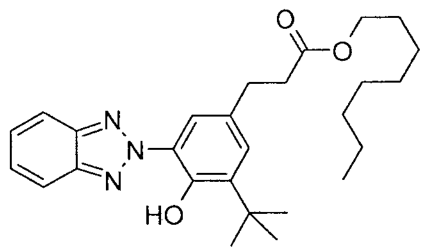

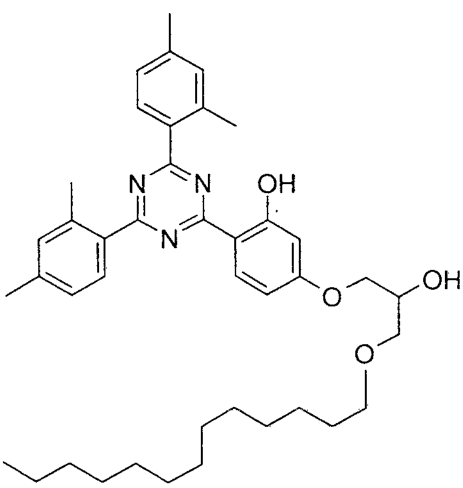

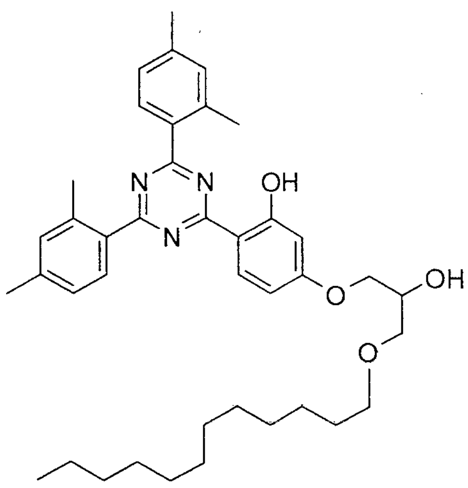

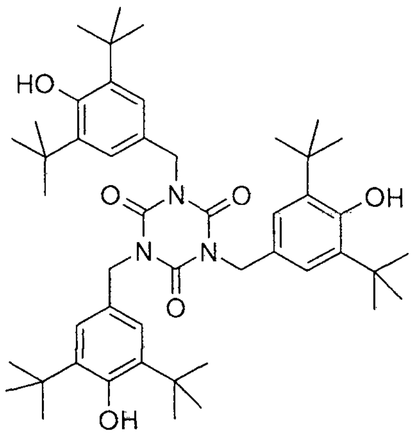

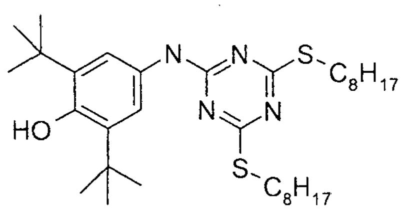

In einer bevorzugten Ausführungsform der vorliegenden Erfindung enthalten die erfindungsgemäßen Medien eine oder mehrere Verbindungen, ausgewählt aus der Gruppe der Verbindungen der Tabelle F, insbesondere eine oder mehrere Verbindungen ausgewählt aus der Gruppe der Verbindungen der beiden Formeln

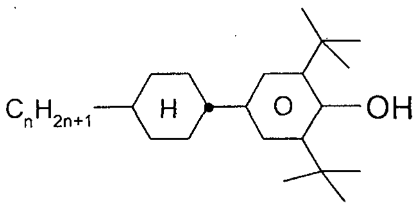

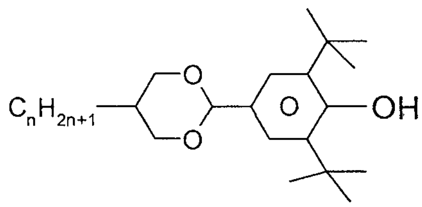

Beispiele

Die folgenden Beispiele erläutern die vorliegende Erfindung, ohne sie in irgendeiner Weise zu beschränken. Aus den physikalischen Eigenschaften wird dem Fachmann jedoch deutlich, welche Eigenschaften zu erzielen sind und in welchen Bereichen sie modifizierbar sind. Insbesondere ist also die Kombination der verschiedenen Eigenschaften, die vorzugsweise erreicht werden können, für den Fachmann gut definiert.

Es werden Flüssigkristallmischungen mit den Zusammensetzungen und den Eigenschaften wie in den folgenden Tabellen angegeben hergestellt und untersucht. Die verbesserte Stabilität der Mischungen enthaltend Verbindungen der Formel I wird durch Vergleich mit unstabilisierten Basismischungen als Referenz (Ref.) gezeigt.

Beispiele 1.1 bis 1.4 (nicht erfindungsgemäß)

Die folgende Mischung (M-1) wird hergestellt und untersucht.

| Mischung M-1 | | | | | | |
|---|---|---|---|---|---|---|
| Zusammensetzung | | | Physikalische Eigenschaften | | | |
| Verbindung | | Konzentration | T(N, I) | = | 80,1 | °C |
| Nr. | Abkürzung | /Massen-% | $n_e$(20°C, 589 nm) | = | 1.5858 | |
| 1 | CY-3-O2 | 15,0 | $\Delta n$(20°C, 589 nm) | = | 0,1033 | |
| 2 | PY-3-O2 | 8,0 | $\varepsilon_{\perp}$(20°, 1 kHz) | = | 7,6 | |
| 3 | CCY-3-O1 | 6,0 | $\Delta\varepsilon$(20°, 1 kHz) | = | -4,0 | |
| 4 | CCY-3-O2 | 8,0 | $\gamma_1$(20°C) | = | 113 | mPa·s |
| 5 | CLY-3-O2 | 8,0 | $k_{11}$(20°C) | = | 14,4 | pN |
| 6 | CPY-2-O2 | 8,0 | $k_{33}$(20°C) | = | 17,0 | pN |
| 7 | CPY-3-O2 | 12,0 | $V_0$*(20°C) | = | 2,08 | V |
| 9 | CC-3-V | 30,5 | $V_{10}$(20°C) | = | 2,14 | V |

(fortgesetzt)

| Mischung M-1 | | | | | | |
|---|---|---|---|---|---|---|
| Zusammensetzung | | | Physikalische Eigenschaften | | | |
| 10 | CPP-3-2 | 4,5 | $V_{20}$(20°C) | = | 2,43 | V |
| Σ | | 100.0 | $V_{30}$(20°C) | = | 2,66 | V |
| | | | $V_{50}$(20°C) | = | 3,07 | V |
| | | | $V_{70}$(20°C) | = | 3,58 | V |
| | | | $V_{90}$(20°C) | = | 4,46 | V |
| | | | $V_{100}$(20°C) | = | 6,50 | V |
| Bemerkungen: *) $V_0$ kapazitive Messung in homöotropen Zellen. Die Tabelle mit den elektro-optischen Daten gibt die Spannung an bei der die im Index angezeigte auf 100 % maximierte Transmission erreicht wird. (Messtemperatur = 20 °C, Schichtdicke der Zelle = 3,5 μm). | | | | | | |

Die Mischung M-1 wird in fünf Teile geteilt und wie im weiteren beschrieben untersucht.

Zunächst wird die Stabilität der Voltage Holding Ratio der Mischung (M-1) selbst bestimmt. Die Mischung M-1 wird in einer Testzelle mit einem Orientierungsmaterial für homogene Ausrichtung und flächigen ITO-Elektroden auf ihre Stabilität gegen Lichtbelastung, wie sie von einem typischen Hintergrundbeleuchtung, die als Backlight z.B. in einem Fernsehgerät (TV) verwendet wird, verursacht wird, untersucht. Dazu werden die gefüllten und mit UV-Kleber versiegelten Zellen zunächst vor der Backlightbelastung vermessen. Dieses stellt den Start-VHR-Wert (Initial) dar. Dazu wird jeweils die Voltage Holding Ratio nach einer angemessenen Temperierzeit von ca. 15 min bis 30 min gemessen zwischen Raumtemperatur und 100 °C, mit Spannungen zwischen 1 V und 5 V und Frequenzen von 1 Hz und 100 Hz (je nach Angabe bei den Ergebnissen) bestimmt. Anschließend werden die Testzellen zwischen zwei TV-Backlight-Einheiten jeweils a) bei einer Temperatur von ca. 40°C, b) bei einer höheren Temperatur mit zusätzlicher Wechselspannungsbelastung von 10 V und c) bei einer höheren Temperatur von 60 °C gelagert. Die Ergebnisse sind in den Tabellen 1, 2 und 3 zusammengestellt. Hier, wie im Folgenden, werden für jede einzelne Mischung jeweils vier bis sechs Testzellen gefüllt und untersucht. Die angegebenen Werte sind der Mittelwert der Einzelwerte.

Als nächstes werden den verbleibenden vier Teilen der Mischung M-1 jeweils 300 ppm je einer verschiedenen von drei Verbindungen der Formel I-1 bzw. I-5, und zwar der entsprechenden Teilformeln I-1-1, I-1-2, I-1-3 bzw. I-5-1

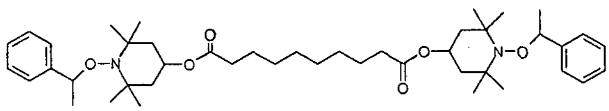

I-1-1

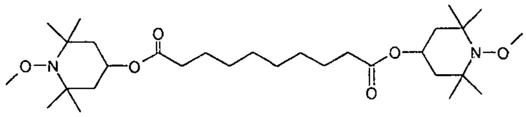

I-1-2

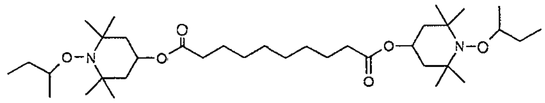

I-1-3

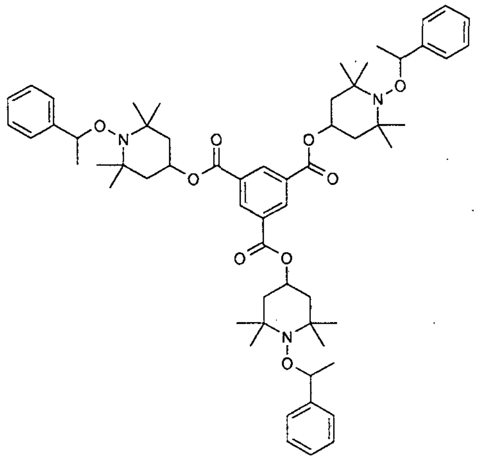

I-5-1

hinzugefügt und die resultierenden Mischungen (M-1-1, M-1-2, M-1-3 und M-1-4), wie oben beschrieben, auf ihre Stabilität untersucht. Die Ergebnisse sind in den folgenden Tabellen 1 bis 3 aufgeführt.

Die relativen Abweichungen der "Voltage Holding Ratio"-Werte bei verschiedenen Meßserien liegt typischer Weise im Bereich von ca. 3 bis 4 %.

Tabelle 1 (Backlightbelastung, 40 °C)

| Bsp. | Mischung | Stabilisator | c(Stab.) / ppm | VHR(t, 70 °C, 1 V, 1 Hz) / % | | | |
|---|---|---|---|---|---|---|---|
| | | | | t=0 h | t= 72 h | t=168 h | t=480 h |
| (Ref.) | M-1 | keiner | 0 | 89,7 | 80,6 | 77,3 | 75,0 |
| 1.1 | M-1-1 | I-1-1 | 300 | 88,9 | 82,5 | 80,0 | 77,5 |
| 1.2 | M-1-2 | I-1-2 | 300 | 88,5 | 79,9 | 79,9 | 74,1 |
| 1.3 | M-1-3 | I-1-3 | 300 | 89,0 | 80,6 | 80,6 | 75,8 |
| 1.4 | M-1-4 | I-5-1 | 300 | n.z.b. | n.z.b. | n.z.b. | n.z.b. |
| Bemerkung: n.z.b.: noch zu bestimmen. | | | | | | | |

Tabelle 2 (Backlightbelastung, 10 V (a.c.), 60 °C)

| Bsp. | Mischung | Stabilisator | c(Stab.) / ppm | VHR(t, 70 °C, 1 V, 1 Hz) / % | | | |
|---|---|---|---|---|---|---|---|
| | | | | t=0 h | t= 72 h | t=168 h | t=480 h |
| (Ref.) | M-1 | keiner | 0 | 90,8 | 71,5 | 74,2 | 72,4 |
| 1.1 | M-1-1 | I-1-1 | 300 | 89,6 | 74,1 | 75,4 | 78,2 |
| 1.2 | M-1-2 | I-1-2 | 300 | 89,0 | 71,8 | 73,4 | 75,0 |
| 1.3 | M-1-3 | I-1-3 | 300 | 89,8 | 73,9 | 76,3 | 77,5 |
| 1.4 | M-1-4 | I-5-1 | 300 | n.z.b. | n.z.b. | n.z.b. | n.z.b. |
| Bemerkung: n.z.b.: noch zu bestimmen. | | | | | | | |

Tabelle 3 (Backlightbelastung, 60 °C)

| Bsp. | Mischung | Stabilisator | c(Stab.) / ppm | VHR(t, 70 °C, 1 V, 1 Hz) / % | | | |
|---|---|---|---|---|---|---|---|
| | | | | t=0 h | t= 72 h | t=168 h | t=480 h |
| (Ref.) | M-1 | keiner | 0 | 91,1 | 72,6 | 71,3 | 65,8 |
| 1.1 | M-1-1 | I-1-1 | 300 | 89,3 | 75,4 | 77,5 | 78,4 |
| 1.2 | M-1-2 | I-1-2 | 300 | 89,5 | 72,3 | 71,5 | 69,3 |
| 1.3 | M-1-3 | I-1-3 | 300 | 89,4 | 72,5 | 72,3 | 71,2 |
| 1.4 | M-1-4 | I-5-1 | 300 | n.z.b. | n.z.b. | n.z.b. | n.z.b. |
| Bemerkung: n.z.b.: noch zu bestimmen. | | | | | | | |

Man erkennt hier gut, daß die Verbindungen der Formel I-1-1, I-1-2, I-1-3 und I-5-1 bereits in relativ niedrigen Konzentrationen deutlich stabilisierende Eigenschaften zeigen.

Die Verbindungen I-1-1 bis I-1-3 und I-5-1 weisen in einer Konzentration von 300 ppm eine hervorragende Stabilisierungsaktivität auf. Dieses führt zu einer Reduzierung der Gefahr von Imagesticking bei Belastung durch die Hintergrundbeleuchtung.

Beispiele 2.1 bis 2.4 (nicht erfindungsgemäß)

Die folgende Mischung (M-2) wird hergestellt und untersucht.

| Mischung M-2 | | | | | | |
|---|---|---|---|---|---|---|
| Zusammensetzung | | | Physikalische Eigenschaften | | | |
| Verbindung | | Konzentration | T(N, I) | = | 79,1 | °C |
| Nr. | Abkürzung | /Massen-% | $n_e$(20°C, 589 nm) | = | 1,5744 | |
| 1 | CY-3-O2 | 15,0 | $\Delta n$(20°C, 589 nm) | = | 0,0944 | |
| 2 | CY-5-O2 | 9,5 | $\varepsilon_\perp$(20°, 1 kHz) | = | 7,7 | |
| 3 | CCY-3-O1 | 4,0 | $\Delta\varepsilon$(20°, 1 kHz) | = | -4,0 | |
| 4 | CCY-3-O2 | 6,0 | $\gamma_1$ (20°C) | = | 120 | mPa·s |
| 5 | CCY-3-O3 | 4,5 | $k_{11}$(20°C) | = | 13,4 | pN |
| 6 | CCY-4-O2 | 6,0 | $k_{33}$(20°C) | = | 15,4 | pN |
| 7 | CCY-5-O2 | 4,0 | $V_0$*(20°C) | = | 2,06 | V |
| 8 | CPY-2-O2 | 8,0 | | | | |
| 9 | CPY-3-O2 | 9,0 | | | | |
| 10 | PYP-2-4 | 2,0 | | | | |
| 11 | CC-3-V | 32,0 | | | | |
| Σ | | 100,0 | | | | |
| Bemerkungen: *) $V_0$ kapazitive Messung in homöotropen Zellen. | | | | | | |

Die Mischung M-2 wird in fünf Teile geteilt und je einer von vier dieser fünf Teile mit 300 ppm einer der vier Verbindungen der Formeln I-1-1, I-1-2, I-1-3 bzw. I-5-1 versetzt (Mischungen M-2-1, M-2-2, M-2-3 und M-2-4), und alle Mischungen analog der in den Beispielen 1.1 bis 1.4 beschriebenen Verfahrensweise in Testzellen auf ihre Stabilität gegen die UV-Belastung im Suntest untersucht. Die Ergebnisse der VHR-Messungen nach 30 min Bestrahlung sind in Tabelle 4 zusammengestellt.

Tabelle 4

| Bsp. | Mischung | Stabilisator | c(Stab.) / ppm | VHR(t) / % | |
|---|---|---|---|---|---|
| | | | | t=0 h | t=30min |
| (Ref.) | M-2 | keiner | 0 | n.z.b. | n.z.b. |
| 2.1 | M-2-1 | I-1-1 | 300 | n.z.b. | n.z.b. |
| 2.2 | M-2-2 | I-1-2 | 300 | n.z.b. | n.z.b. |
| 2.3 | M-2-3 | I-1-3 | 300 | n.z.b. | n.z.b. |
| 2.4 | M-2-4 | I-5-1 | 300 | n.z.b. | n.z.b. |
| (VHR: 60 °C, 1 V, 60 Hz)<br>Bemerkung: n.z.b.: noch zu bestimmen. | | | | | |

Wie aus Tabelle 4 ersichtlich ist, führen schon geringe Konzentrationen der Verbindungen I-1-1, I-1-2, I-1-3 und I-5-1 zu einer erheblichen Verbesserung des Endwertes für die VHR nach UV-Belastung.

Beispiele 3.1 bis 3.4 und Vergleichsbeispiel 3-V (nicht erfindungsgemäß)

Die folgende Mischung (M-3) wird hergestellt und untersucht.

| Mischung M-3 | | | | | | |
|---|---|---|---|---|---|---|
| Zusammensetzung | | | Physikalische Eigenschaften | | | |
| Verbindung | | Konzentration | T(N, I) | = | 86,0 | °C |
| Nr. | Abkürzung | /Massen-% | $n_e$(20°C,589 nm) | = | 1,5962 | |
| 1 | CY-3-O2 | 11,0 | $\Delta$n(20°C, 589 nm) | = | 0,1118 | |
| 2 | PY-3-O2 | 12,0 | $\varepsilon_{\perp}$(20°, 1 kHz) | = | 8,0 | |
| 3 | CCY-3-O2 | 4,0 | $\Delta\varepsilon$(20°, 1 kHz) | = | -4,3 | |
| 4 | CCY-3-O3 | 7,0 | $\gamma_1$(20°C) | = | 143 | mPa·s |
| 5 | CCY-4-O2 | 8,0 | $k_{11}$(20°C) | = | 15,0 | pN |
| 6 | CLY-3-O2 | 8,0 | $k_{33}$(20°C) | = | 16,7 | pN |
| 7 | CPY-2-O2 | 7,0 | $V_0$* (20°C) | = | 2,08 | V |
| 8 | CPY-3-O2 | 11,0 | $V_{10}$(25°C) | = | 2,17 | V |
| 9 | CC-3-V | 23,5 | $V_{20}$(25°C) | = | 2,48 | V |
| 10 | CC-3O1 | 4,0 | $V_{30}$(25°C) | = | 2,71 | V |
| 11 | CPP-3-2 | 4,5 | $V_{50}$(25°C) | = | 3,14 | V |
| $\Sigma$ | | 100,0 | $V_{70}$(25°C) | = | 3,67 | V |
| | | | $V_{90}$(25°C) | = | 4,59 | V |
| | | | $V_{100}$25°C | = | 6,80 | V |
| Bemerkungen: *) Vo kapazitive Messung in homöotropen Zellen. Die Tabelle mit den elektro-optischen Daten gibt die Spannung an bei der die im Index angezeigte auf 100 % maximierte Transmission erreicht wird. (Messtemperatur = 25 °C, Schichtdicke der Zelle = 3,2 $\mu$m). | | | | | | |

Mischung M-3 wird hergestellt und in sechs Teile geteilt. Je ein Teil wird mit 300 ppm der Verbindungen I-1-1, I-1-2, I-1-3 bzw. I-5-1 versetzt (Mischungen M-3-1 bis M-3-4). Ein weiterer Teil wird zum Vergleich mit 150 ppm eines Stabilisators aus dem Stand der Technik (Verbindung VII, Mischung V-3) versetzt.

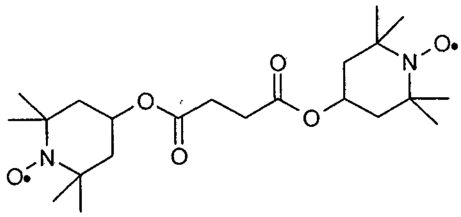

VII

In Analogie zu den oben beschriebenen Versuchen wird die VHR vor und nach einer Bestrahlungsdauer von 476 h mit einer Light Emitting Diode (LED)-LCD-Hintergrundbeleuchtung (Englisch: "backlight") untersucht. Die Ergebnisse sind in Tabelle 5 zusammengestellt.

Tabelle 5

| Bsp. | Mischung | Stabilisator | c(Stab.) / ppm | VHR(t) / % | |
|---|---|---|---|---|---|
| | | | | t=0 h | t=476 h |
| (Ref.) | M-3 | keiner | 0 | 82,7 | 66,4 |
| 3.1 | M-3-1 | I-1-1 | 300 | 85,7 | 69,1 |
| 3.2 | M-3-2 | I-1-2 | 300 | n.z.b. | n.z.b. |
| 3.3 | M-3-3 | I-1-3 | 300 | n.z.b. | n.z.b. |
| 3.4 | M-3-4 | I-5-1 | 300 | n.z.b. | n.z.b. |
| 3-V | V-3 | VII | 150 | 79,8 | 71,6 |
| (VHR: 100 °C, 1 V, 60 Hz)<br>Bemerkung: n.z.b.: noch zu bestimmen. | | | | | |

Beispiele 4.1 bis 4.4 und Vergleichsbeispiel 4-V (nicht erfindungsgemäß)

Die folgende Mischung (M-4) wird hergestellt und untersucht.

| Mischung M-4 | | | | | | |
|---|---|---|---|---|---|---|
| Zusammensetzung | | | Physikalische Eigenschaften | | | |
| Verbindung | | Konzentration | T(N, I) | = | 86,5 | °C |
| Nr. | Abkürzung | /Massen-% | $n_e$(20°C, 589 nm) | = | 1,5924 | |
| 1 | CY-3-O2 | 12,0 | $\Delta$n(20°C, 589 nm) | = | 0,1092 | |
| 2 | CY-3-O4 | 2,0 | $\varepsilon_\perp$(20°, 1 kHz) | = | 7,9 | |
| 3 | CY-5-O2 | 12,0 | $\Delta\varepsilon$(20°, 1 kHz) | = | -4,2 | |
| 4 | CCY-3-O1 | 6,0 | $\gamma_1$(20°C) | = | 155 | mPa·s |
| 5 | CCY-3-O2 | 8,0 | $k_{11}$ (20°C) | = | 14,6 | pN |
| 6 | CCY-4-O2 | 8,0 | $k_{33}$(20°C) | = | 16,6 | pN |
| 7 | CPY-2-O2 | 9,0 | $V_0$*20°C) | = | 2,08 | V |
| 8 | CPY-3-O2 | 9,0 | | | | |
| 9 | PYP-2-3 | 5,0 | | | | |
| 10 | CC-3-V1 | 5,0 | | | | |
| 11 | CC-3-V | 19,0 | | | | |
| 12 | CPP-3-2 | 5,0 | | | | |
| Σ | | 100,0 | | | | |
| Bemerkungen: *) Vo kapazitive Messung in homöotropen Zellen. Mischung M-4 wird hergestellt und in sechs Teile geteilt. Je ein Teil wird mit 300 ppm der Verbindungen I-1-1, I-1-2, I-1-3 bzw. I-5-1 versetzt (Mischungen M-4-1 bis M-4-4). Ein weiterer Teil wird zum Vergleich mit 100 ppm eines Stabilisators aus dem Stand der Technik (Verbindung VII, Mischung 4-V) versetzt. | | | | | | |

Tabelle 6

| Bsp. | Mischung | Stabilisator | c(Stab.) / ppm | VHR(t) / % | |
|---|---|---|---|---|---|
| | | | | t=0 h | t=30 min Suntest |
| (Ref.) | M-4 | keiner | 0 | 74,3 | 68,2 |
| 4.1 | M-4-1 | I-1-1 | 100 | 77,6 | 73,4 |
| 4.2 | M-4-2 | I-1-2 | 300 | 74,3 | 68,2 |
| 4.3 | M-4-3 | I-1-3 | 300 | 76,8 | 70,4 |
| 4.4 | M-4-4 | I-5-1 | 300 | 76,0 | 70,1 |
| 4-V | V-4 | VII | 100 | 73,2 | 68,5 |
| (VHR: 100 °C, 1 V, 60 Hz)<br>Bemerkung: n.z.b.: noch zu bestimmen. | | | | | |

Beispiele 5.1 bis 5.4 und Vergleichsbeispiel 5-V

Die folgende Mischung (M-5) wird hergestellt und untersucht.

| Mischung M-5 | | | | | | |
|---|---|---|---|---|---|---|
| Zusammensetzung | | | Physikalische Eigenschaften | | | |
| Verbindung | | Konzentration | T(N, I) | = | 76,0 | °C |
| Nr. | Abkürzung | /Massen-% | ne(20°C, 589 nm) | = | 1,5830 | |
| 1 | CCY-3-O1 | 8,0 | $\Delta$n(20°C, 589 nm) | = | 0,1025 | |
| 2 | CCY-4-O2 | 3,0 | $\varepsilon_{\perp}$(20°, 1 kHz) | = | 7,4 | |
| 3 | CLY-3-O2 | 8,0 | $\Delta\varepsilon$(20°, 1 kHz) | = | -3,7 | |
| 4 | CLY-3-O3 | 4,0 | $\gamma_1$(20°C) | = | 90,0 | mPa·s |
| 5 | CPY-2-O2 | 6,5 | $k_{11}$(20°C) | = | 13,9 | pN |
| 6 | CPY-3-O2 | 4,0 | $k_{33}$(20°C) | = | 14,8 | pN |
| 7 | B-2O-O5 | 4,0 | $V_0$*(20°C) | = | 2,1 | V |
| 8 | CC-3-V | 41,5 | | | | |
| 9 | PY-1-O4 | 5,0 | | | | |
| 10 | PY-3-O2 | 11,5 | | | | |
| 11 | CCY-3-O2 | 4,5 | | | | |
| $\Sigma$ | | 100,0 | | | | |
| Bemerkungen: *) $V_0$ kapazitive Messung in homöotropen Zellen. | | | | | | |

Tabelle 7

| Bsp. | Mischung | Stabilisator | c(Stab.) / ppm | VHR(t) / % | |
|---|---|---|---|---|---|
| | | | | t=0 h | t=476 h |
| (Ref.) | M-5 | keiner | 0 | 91,9 | 60,2 |
| 5.1 | M-5-1 | I-1-1 | 300 | 91,6 | 64,2 |
| 5.2 | M-5-2 | I-1-2 | 300 | n.z.b. | n.z.b. |
| 5.3 | M-5-3 | I-1-3 | 300 | n.z.b. | n.z.b. |
| 5-4 | M-5-4 | I-5-1 | 300 | 93,0 | 67,3 |

(fortgesetzt)

| Bsp. | Mischung | Stabilisator | c(Stab.) / ppm | VHR(t) / % | |
|---|---|---|---|---|---|
| | | | | t=0 h | t=476 h |
| 5-V | V-5 | VII | 150 | n.z.b. | n.z.b. |
| (VHR: 20 °C, 1 V, 1 Hz)<br>Bemerkung: n.z.b.: noch zu bestimmen. | | | | | |

Beispiele 6.1 bis 6.4 und Vergleichsbeispiel 6-V (nicht erfindungsgemäß)

Die folgende Mischung (M-6) wird hergestellt und untersucht.

| Mischung M-6 | | | | | | |
|---|---|---|---|---|---|---|
| Zusammensetzung | | | Physikalische Eigenschaften | | | |
| Verbindung | | Konzentration | T(N, I) | = | 80,1 | °C |
| Nr. | Abkürzung | /Massen-% | $n_e$(20°C, 589 nm) | = | 1,5858 | |
| 1 | CC-3-V | 30,5 | $\Delta n$(20°C, 589 nm) | = | 0,1033 | |
| 2 | CC-3-V1 | 4,5 | $\varepsilon_\perp$(20°, 1 kHz) | = | 7,6 | |
| 3 | CCY-3-O1 | 6,0 | $\Delta\varepsilon$(20°, 1 kHz) | = | -4,0 | |
| 4 | CCY-3-O2 | 8,0 | $\gamma_1$(20°C) | = | 113 | mPa·s |
| 5 | CLY-3-O2 | 8,0 | $k_{11}$(20°C) | = | 14,4 | pN |
| 6 | CPY-2-O2 | 8,0 | $k_{33}$(20°C) | = | 17,0 | pN |
| 7 | CPY-3-O2 | 12,0 | $V_0$*(20°C) | = | 2,16 | V |
| 8 | CY-3-O2 | 15,0 | | | | |
| 9 | PY-3-O2 | 8.0 | | | | |
| Σ | | 100,0 | | | | |
| Bemerkungen: *) $V_0$ kapazitive Messung in homöotropen Zeilen. | | | | | | |

Die Mischung M-6 wird in sechs Teile geteilt und vier davon mit jeweils 300 ppm je einer der vier Verbindungen I-1-1, I-1-2, I-1-3 und I-5-1 versetzt. Ein weiterer Teil wird, zum Vergleich mit 150 ppm der Verbindung VII versetzt. Die Mischungen werden anschließend wie in Beispielen 1.1 bis 1.4 beschrieben einem Belastungstest mit einer LCD-Hintergrundbeleuchtung unterzogen und man erhält vergleichbar gute Ergebnisse.

## Patentansprüche

**1.** Flüssigkristallines Medium enthaltend

a) eine oder mehrere Verbindungen der Formel I,

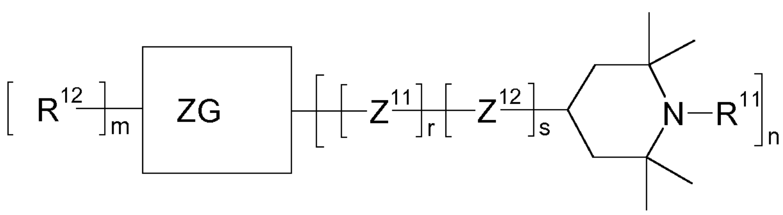

I

worin

n 2 oder 3,
m (4-n),

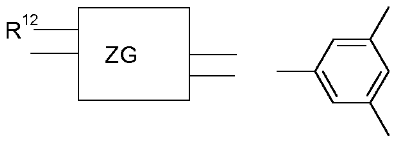

oder

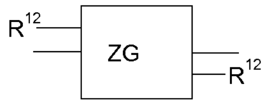

$-(CH_2-)_2$, $-(CH_2-)_4$, $-(CH_2-)_6$, $-(CH_2-)_8$, Oktan-1,8-diyl, Propan-1,3-diyl, Butan-1,4-diyl, Ethan-1,2-diyl,

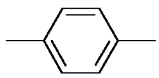

,

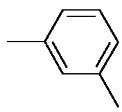

,

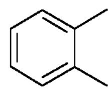

oder

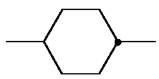

,

$Z^{11}$ und $Z^{12}$ unabhängig voneinander -O-, -(C=O)-oder eine Einfachbindung, jedoch nicht beide gleichzeitig -O-,

r und s unabhängig voneinander 0 oder 1,

$R^{11}$ bei jedem Auftreten unabhängig voneinander eine geradkettige oder verzweigte Alkylkette mit 1-20 C-Atomen, in der eine $-CH_2-$-Gruppe oder mehrere $-CH_2$-Gruppen durch -O- oder -C(=O)- ersetzt sein können, jedoch nicht zwei benachbarte $-CH_2-$ -Gruppen durch -O- ersetzt sein können, eine Cycloalkyl- oder eine Alkylcycloalkyleinheit, einen Kohlenwasserstoffrest, der eine Cycloalkyl- oder eine Alkylcycloalkyleinheit enthält, und, in dem eine $-CH_2-$ -Gruppe oder mehrere $-CH_2-$-Gruppen durch -O- oder -C(=O)- ersetzt sein können, jedoch nicht zwei benachbarte $-CH_2-$-Gruppen durch -O- ersetzt sein können, eine Aryl- oder eine Arylalkyleinheit, einen Kohlenwasserstoffrest, der eine Aryl- oder eine Arylalkyleinheit enthält, und, in dem eine $-CH_2-$-Gruppe oder mehrere $-CH_2-$-Gruppen durch -O-oder -C(=O)- ersetzt sein können, jedoch nicht zwei benachbarte $-CH_2-$ -Gruppen durch -O- ersetzt sein können, oder

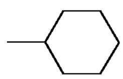

(Cyclohexyl), worin eine oder mehrere $-CH_2$-Gruppen durch -O- oder -CO- ersetzt sein können, oder ein Acetophenyl-, Isopropyl- oder 3-Heptylrest sein kann, und

$R^{12}$ bei jedem Auftreten unabhängig voneinander H, F, eine geradkettige oder verzweigte Alkylkette mit 1-20 C-Atomen, in der eine $-CH_2-$ -Gruppe oder mehrere $-CH_2-$-Gruppen durch -O- oder -C(=O)- ersetzt sein können, jedoch nicht zwei benachbarte $-CH_2-$ -Gruppen durch -O- ersetzt sein können, einen Kohlenwasserstoffrest, der eine Cycloalkyl- oder eine Alkylcycloalkyleinheit enthält, und, in dem eine $-CH_2-$-Gruppe oder mehrere $-CH_2-$ -Gruppen durch -O- oder -C(=O)- ersetzt sein können, jedoch nicht zwei benachbarte

$-CH_2-$ -Gruppen durch -O- ersetzt sein können, oder ein aromatischer oder heteroaromatischen Kohlenwasserstoffrest,

bedeutet,

b) eine oder mehrere Verbindungen der Formel II und eine oder mehrere Verbindungen der Formel III

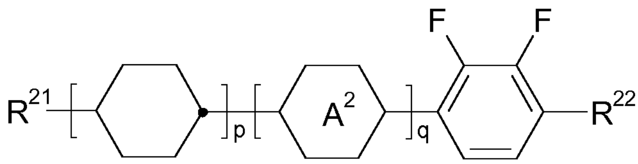

II

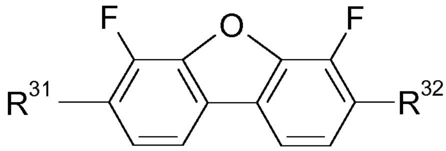

III

enthält,
worin

$R^{21}$ einen unsubstituierten Alkenylrest mit 2 bis 7 C-Atomen,
$R^{22}$ einen unsubstituierten Alkylrest mit 1 bis 7 C-Atomen oder einen unsubstituierten Alkoxyrest mit 1 bis 6 C-Atomen,

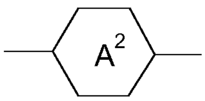

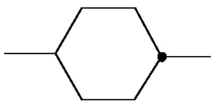 , 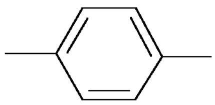 , 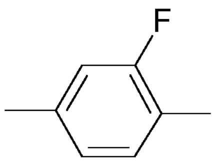 ,

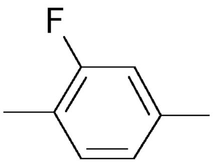 oder 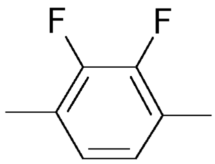 ,

p und q jeweils unabhängig voneinander 0, 1 oder 2 und
(p + q) 1, 2, oder 3,
$R^{31}$, $R^{32}$ unabhängig voneinander einen unsubstituierten Alkylrest mit 1 bis 7 C-Atomen oder einen unsubstituierten Alkoxyrest mit 2 bis 7 C-Atomen,

bedeuten.

2. Medium nach Anspruch 1, **dadurch gekennzeichnet, daß** in Formel I

n 2

bedeutet.

3. Medium nach Anspruch 1 oder 2, **dadurch gekennzeichnet, daß** in Formel I $R^{11}$, bei jedem Auftreten gleich,

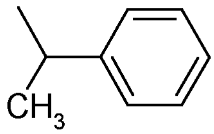

bedeutet.

**4.** Medium nach einem oder mehreren der Ansprüche 1 bis 3, **dadurch gekennzeichnet, daß** es eine oder mehrere Verbindungen der Formel I ausgewählt aus den Verbindungen der Formeln I-1 bis I-4

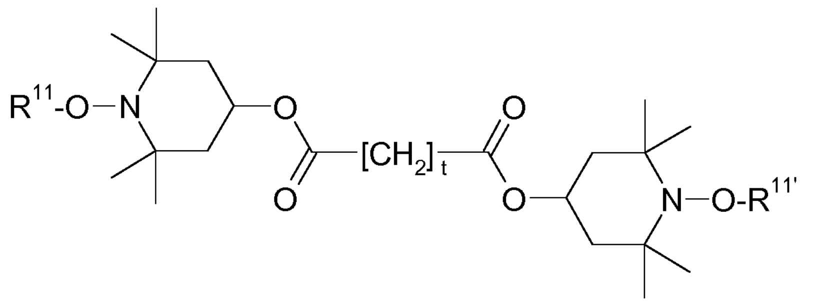

I-1

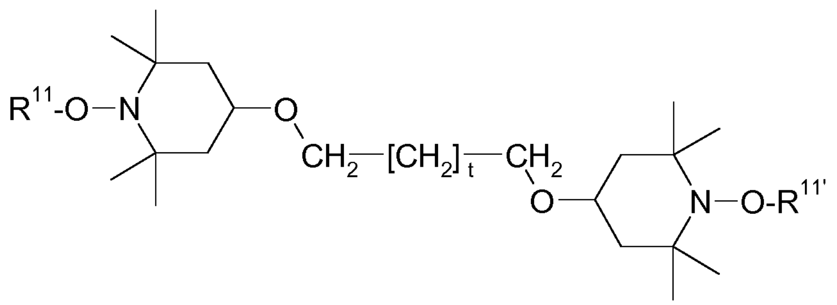

I-2

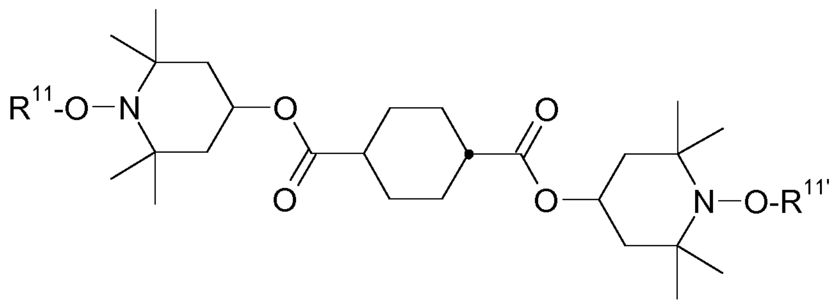

I-3

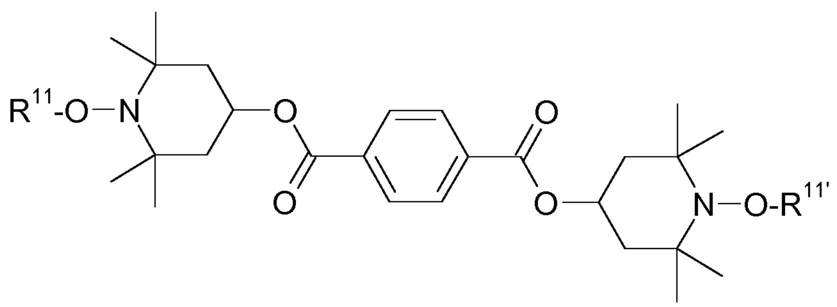

I-4

worin die Parameter die in Anspruch 1 angegebenen Bedeutungen haben und

t eine ganze Zahl von 1 bis12

bedeutet und

$R^{11}$ und $R^{11'}$ jeweils unabhängig voneinander einer der für $R^{11}$ gegebenen Bedeutungen haben,

enthält.

**5.** Medium nach einem oder mehreren der Ansprüche 1 bis 4, **dadurch gekennzeichnet, daß** es eine oder mehrere Verbindungen der Formel I ausgewählt aus den Verbindungen der Formeln I-1-1, I-1-8 bis I-1-10 und I-5-1

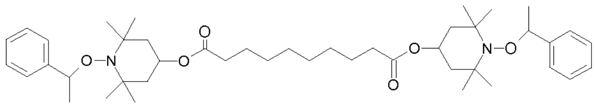

I-1-1

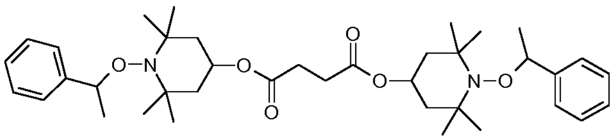

I-1-8

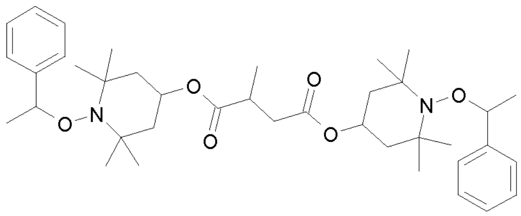

I-1-9

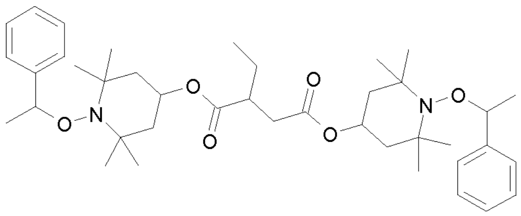

I-1-10

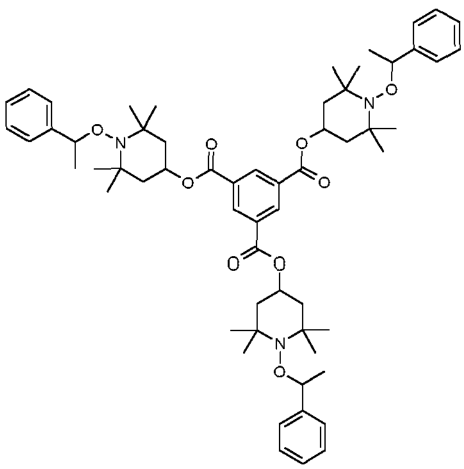

I-5-1

enthält.

**6.** Flüssigkristallines Medium nach einem oder mehreren der Ansprüche 1 bis 5, **dadurch gekennzeichnet, daß** es eine oder mehrere Verbindungen ausgewählt aus der Gruppe der Verbindungen der Formeln II-1 bis II-4

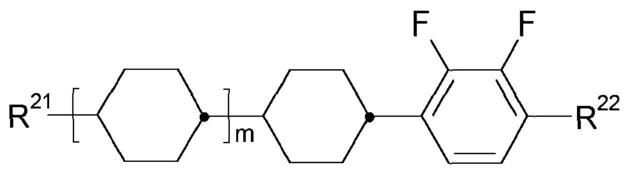

II-1

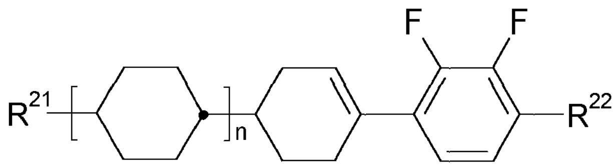

II-2

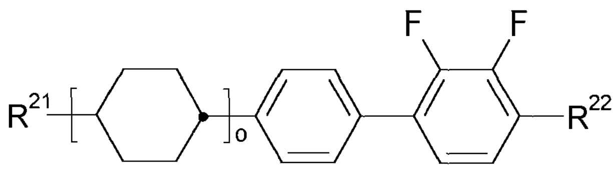

II-3

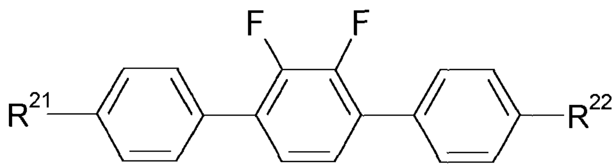

II-4

enthält,
worin

$R^{21}$ einen unsubstituierten Alkylrest mit 1 bis 7 C-Atomen,
$R^{22}$ einen unsubstituierten Alkylrest mit 1 bis 7 C-Atomen, oder einen unsubstituierten Alkoxyrest mit 1 bis 6 C-Atomen, und
m, n und o jeweils unabhängig voneinander 0 oder 1

bedeuten.

7. Flüssigkristallines Medium nach einem oder mehreren der Ansprüche 1 bis 6, **dadurch gekennzeichnet, daß** es eine oder mehrere Verbindungen der Formel III-3,

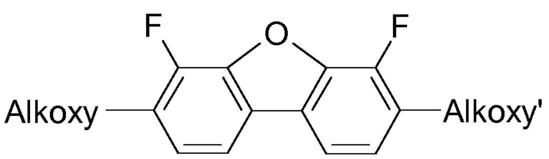

III-3

worin

Alkoxy, Alkoxy' unabhängig voneinander einen Alkoxyrest mit 1 bis 5 C-Atomen

bedeuten, enthält.

8. Flüssigkristallines Medium nach einem oder mehreren der Ansprüche 1 bis 7, **dadurch gekennzeichnet, daß** die Gesamtkonzentration der Verbindungen der Formel I im Gesamtmedium 1 ppm oder mehr bis 1.000 ppm oder weniger beträgt.

9. Medium nach einem oder mehreren der Ansprüche 1 bis 8, **dadurch gekennzeichnet, daß** es zusätzlich eine oder

mehrere Verbindungen der Formel IV,

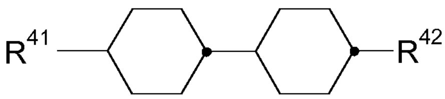

IV

worin

$R^{41}$ einen unsubstituierten Alkylrest mit 1 bis 7 C-Atomen oder einen unsubstituierten Alkenylrest mit 2 bis 7 C-Atomen, und
$R^{42}$ einen unsubstituierten Alkylrest mit 1 bis 7 C-Atomen, einen unsubstituierten Alkoxyrest mit 1 bis 6 C-Atomen, oder einen unsubstituierten Alkenylrest mit 2 bis 7 C-Atomen,

bedeuten, enthält.

**10.** Medium nach einem oder mehreren der Ansprüche 1 bis 9, **dadurch gekennzeichnet, daß** die Gesamtkonzentration der Verbindungen der Formel II im Gesamtmedium 25 % oder mehr bis 45 % oder weniger beträgt.

**11.** Medium nach einem oder mehreren der Ansprüche 1 bis 10, **dadurch gekennzeichnet, daß** es eine oder mehrere Verbindungen der Formel II-3, wie in Anspruch 5 angegeben, enthält.

**12.** Elektrooptische Anzeige oder elektrooptische Komponente, **dadurch gekennzeichnet, daß** sie ein flüssigkristallines Medium nach einem oder mehreren der Ansprüche 1 bis 11 enthält.

**13.** Anzeige nach Anspruch 12, **dadurch gekennzeichnet, daß** sie auf dem VA- oder dem ECB-Effekt basiert.

**14.** Anzeige nach Anspruch 12 oder 13, **dadurch gekennzeichnet, daß** sie eine Aktivmatrix-Adressierungsvorrichtung aufweist.

**15.** Verwendung eines Mediums nach mindestens einem der Ansprüche 1 bis 11, in einer elektrooptischen Anzeige oder in einer elektrooptischen Komponente.

**16.** Verfahren zur Herstellung eines flüssigkristallinen Mediums nach einem oder mehreren der Ansprüche 1 bis 11, **dadurch gekennzeichnet, daß** eine oder mehrere Verbindungen der Formel I mit einer oder mehreren Verbindungen der Formeln II und III und gegebenenfalls mit einer oder mehreren Verbindungen der Formel IV, wie in Anspruch 9 angegeben, gemischt werden.

## Claims

**1.** Liquid-crystalline medium comprising

a) one or more compounds of the formula I,

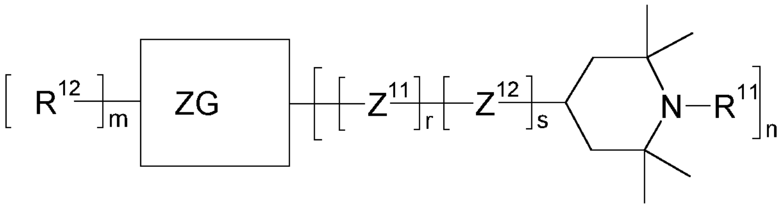

I

in which

n denotes 2 or 3,
m denotes (4-n),

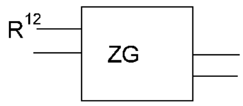

denotes

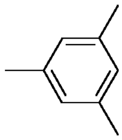

or

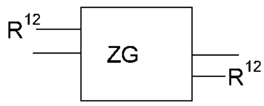

denotes $-(CH_2-)_2$, $-(CH_2-)_4$, $-(CH_2-)_6$, $-(CH_2-)_8$, octane-1,8-diyl, propane-1,3-diyl, butane-1,4-diyl, ethane-1,2-diyl,

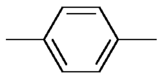

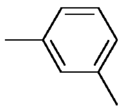

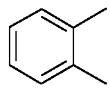

or

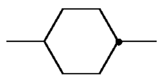

,

$Z^{11}$ and $Z^{12}$, independently of one another, denote -O-, -(C=O)- or a single bond, but do not both simultaneously denote -O-,
r and s, independently of one another, denote 0 or 1,
$R^{11}$ on each occurrence, independently of one another, denotes a straight-chain or branched alkyl chain having 1-20 C atoms, in which one $-CH_2-$ group or a plurality of $-CH_2-$ groups may be replaced by -O- or -C(=O)-, but two adjacent $-CH_2-$ groups cannot be replaced by -O-, denotes a cycloalkyl or alkylcycloalkyl unit, a hydro-carbon radical which contains a cycloalkyl or alkylcycloalkyl unit and in which one $-CH_2-$ group or a plurality of $-CH_2-$ groups may be replaced by -O- or -C(=O)-, but two adjacent $-CH_2-$ groups cannot be replaced by -O-, or denotes an aryl or arylalkyl unit, a hydrocarbon radical which contains an aryl or arylalkyl unit and in which one $-CH_2-$ group or a plurality of $-CH_2-$ groups may be replaced by -O- or -C(=O)-, but two adjacent $-CH_2-$ groups cannot be replaced by -O-, or can be

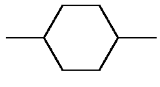

(cyclohexyl), in which one or more $-CH_2-$groups may be replaced by -O- or -CO-, or an acetophenyl, isopropyl or 3-heptyl radical, and

$R^{12}$ on each occurrence, independently of one another, denotes H, F, a straight-chain or branched alkyl chain having 1-20 C atoms, in which one $-CH_2-$ group or a plurality of $-CH_2-$ groups may be replaced by -O- or -C(=O)-, but two adjacent $-CH_2-$ groups cannot be replaced by -O-, denotes a hydrocarbon radical which contains a cycloalkyl or alkylcycloalkyl unit and in which one $-CH_2-$ group or a plurality of $-CH_2-$ groups may be replaced by -O- or -C(=O)-, but two adjacent $-CH_2-$groups cannot be replaced by -O-, or denotes an aromatic or heteroaromatic hydrocarbon radical,

b) one or more compounds of the formula II and one or more compounds of the formula III

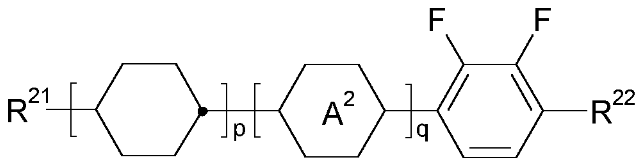

II

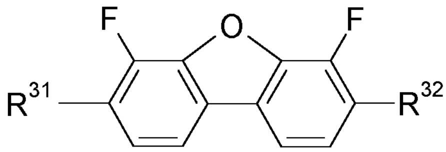

III

in which

$R^{21}$ denotes an unsubstituted alkenyl radical having 2 to 7 C atoms,

$R^{22}$ denotes an unsubstituted alkyl radical having 1 to 7 C atoms or an unsubstituted alkoxy radical having 1 to 6 C atoms,

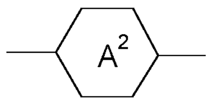

denotes

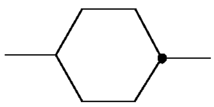 , 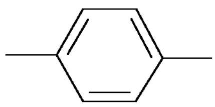 , 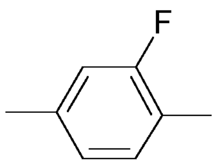 ,

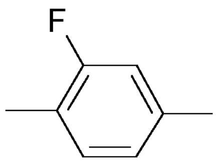

or

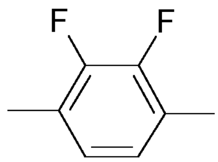

p and q in each case, independently of one another, denote 0, 1 or 2 and
(p + q) denotes 1, 2, or 3,
$R^{31}$, $R^{32}$, independently of one another, denote an unsubstituted alkyl radical having 1 to 7 C atoms or an unsubstituted alkoxy radical having 2 to 7 C atoms.

**2.** Medium according to Claim 1, **characterised in that**, in formula I,

n denotes 2.

**3.** Medium according to Claim 1 or 2, **characterised in that**, formula I, $R^{11}$, identically on each occurrence, denotes

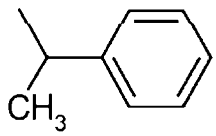

.

**4.** Medium according to one or more of Claims 1 to 3, **characterised in that** it comprises one or more compounds of the formula I selected from the compounds of the formulae I-1 to I-4

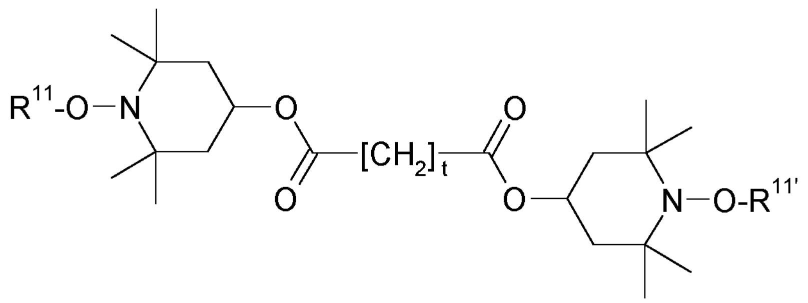

I-1

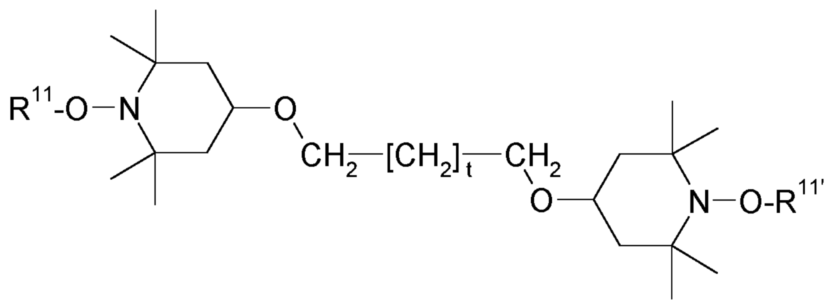

I-2

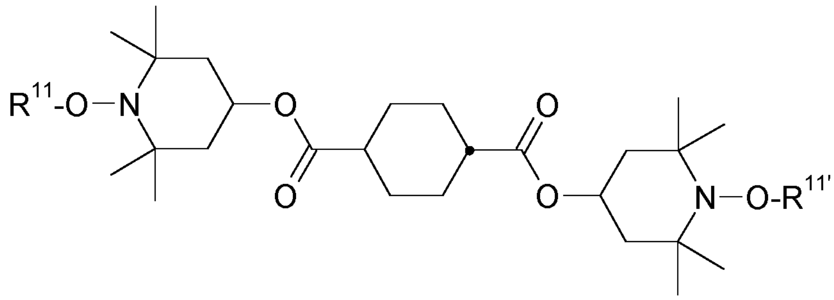

I-3

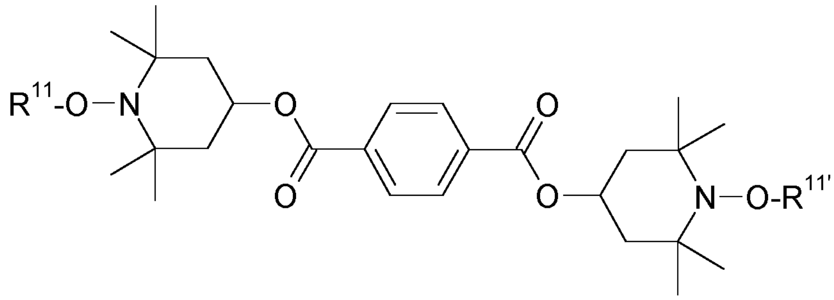

I-4

in which the parameters have the meanings indicated in Claim 1 and

t denotes an integer from 1 to 12

and

$R^{11}$ and $R^{11'}$ in each case, independently of one another, have one of the meanings given for $R^{11}$.

5. Medium according to one or more of Claims 1 to 4, **characterised in that** it comprises one or more compounds of the formula I selected from the compounds of the formulae I-1-1, I-1-8 to I-1-10 and I-5-1

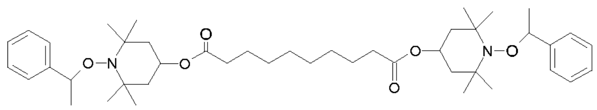

I-1-1

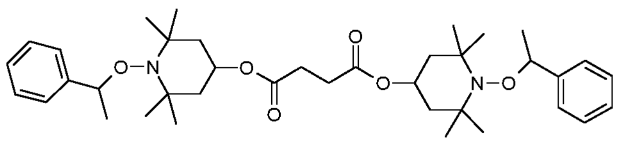

I-1-8

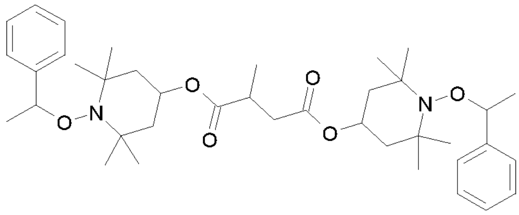

I-1-9

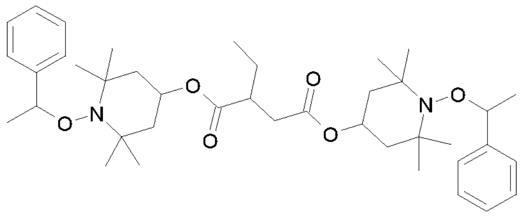

I-1-10

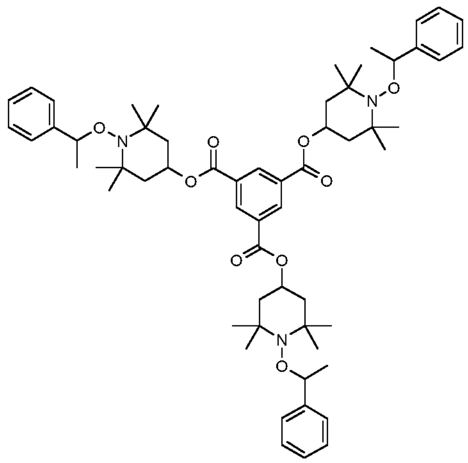

I-5-1.

6. Liquid-crystalline medium according to one or more of Claims 1 to 5, **characterised in that** it comprises one or more compounds selected from the group of the compounds of the formulae II-1 to II-4

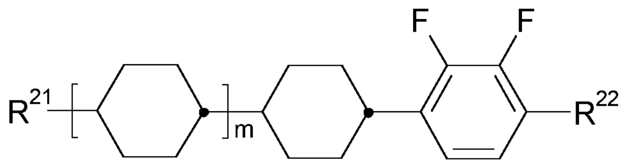

II-1

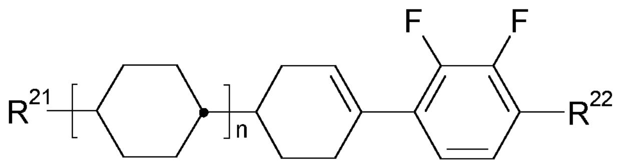

II-2

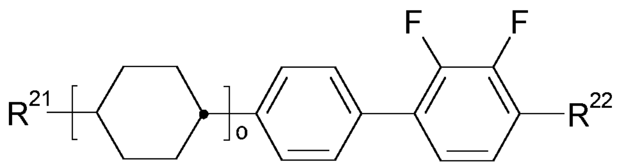

II-3

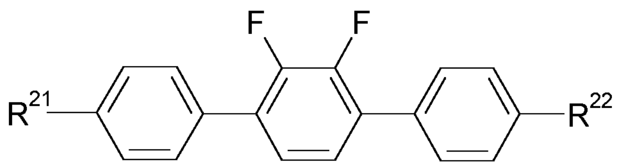

II-4

in which

$R^{21}$ denotes an unsubstituted alkyl radical having 1 to 7 C atoms,

$R^{22}$ denotes an unsubstituted alkyl radical having 1 to 7 C atoms or an unsubstituted alkoxy radical having 1 to 6 C atoms, and
m, n and o in each case, independently of one another, denote 0 or 1.

**7.** Liquid-crystalline medium according to one or more of Claims 1 to 6, **characterised in that** it comprises one or more compounds of the formula III-3,

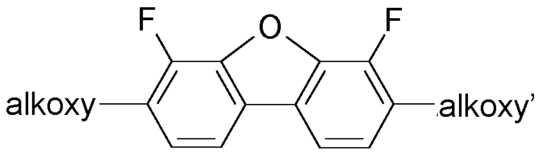

III-3

in which

alkoxy, alkoxy', independently of one another, denote an alkoxy radical having 1 to 5 C atoms.

**8.** Liquid-crystalline medium according to one or more of Claims 1 to 7, **characterised in that** the total concentration of the compounds of the formula I in the medium as a whole is 1 ppm or more to 1000 ppm or less.

**9.** Medium according to one or more of Claims 1 to 8, **characterised in that** it additionally comprises one or more compounds of the formula IV,

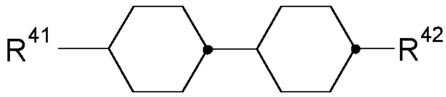

IV

in which

$R^{41}$ denotes an unsubstituted alkyl radical having 1 to 7 C atoms or an unsubstituted alkenyl radical having 2 to 7 C atoms, and
$R^{42}$ denotes an unsubstituted alkyl radical having 1 to 7 C atoms, an unsubstituted alkoxy radical having 1 to 6 C atoms or an unsubstituted alkenyl radical having 2 to 7 C atoms.

**10.** Medium according to one or more of Claims 1 to 9, **characterised in that** the total concentration of the compounds of the formula II in the medium as a whole is 25% or more to 45% or less.

**11.** Medium according to one or more of Claims 1 to 10, **characterised in that** it comprises one or more compounds of the formula II-3, as indicated in Claim 5.

**12.** Electro-optical display or electro-optical component, **characterised in that** it contains a liquid-crystalline medium according to one or more of Claims 1 to 11.

**13.** Display according to Claim 12, **characterised in that** it is based on the VA or ECB effect.

**14.** Display according to Claim 12 or 13, **characterised in that** it has an active-matrix addressing device.

**15.** Use of a medium according to at least one of Claims 1 to 11 in an electro-optical display or in an electro-optical component.

**16.** Process for the preparation of a liquid-crystalline medium according to one or more of Claims 1 to 11, **characterised in that** one or more compounds of the formula I are mixed with one or more compounds of the formulae II and III and optionally with one or more compounds of formula IV, as indicated in Claim 9.

## Revendications

**1.** Milieu cristallin liquide comprenant

a) un ou plusieurs composé(s) de la formule I,

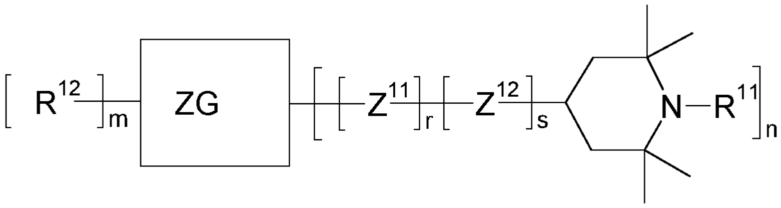

I

dans laquelle

n représente 2 ou 3,
m représente (4-n),

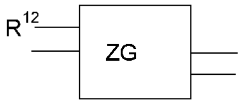

représente

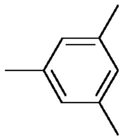

ou

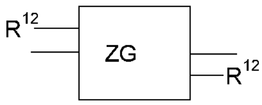

représente $-(CH_2-)_2$, $-(CH_2-)_4$, $-(CH_2-)_6$, $-(CH_2-)_8$, octane-1,8-diyle, propane-1,3-diyle, butane-1,4-diyle, éthane-1,2-diyle,

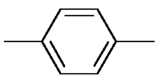

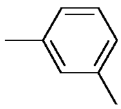

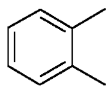

ou

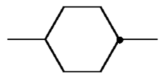

,

$Z^{11}$ et $Z^{12}$ représentent, de manière indépendante l'un de l'autre, -O-, -(C=O)- ou une liaison simple, mais ne représentent pas tous deux simultanément -O-,

r et s représentent, de manière indépendante l'un de l'autre, 0 ou 1,

$R^{11}$ représente pour chaque occurrence, de manière indépendante les unes des autres, une chaîne alkyle en chaîne droite ou ramifiée qui comporte de 1 à 20 atome(s) de C, où un groupe $-CH_2-$ ou les groupes d'une pluralité de groupes $-CH_2-$ peut/peuvent être remplacé(s) par -O- ou par -C(=O)-, mais deux groupes $-CH_2-$ adjacents ne peuvent pas être remplacés par -O-, représente une unité cycloalkyle ou alkylcycloalkyle, un radical hydrocarbone qui contient une unité cycloalkyle ou alkylcycloalkyle et où un groupe $-CH_2-$ ou les groupes d'une pluralité de groupes $-CH_2-$ peut/peuvent être remplacé(s) par -O- ou par -C(=O)-, mais deux groupes $-CH_2-$ adjacents ne peuvent pas être remplacés par -O-, ou représente une unité aryle ou arylalkyle, un radical hydrocarbone qui contient une unité aryle ou arylalkyle et où un groupe $-CH_2-$ ou les groupes d'une pluralité de groupes $-CH_2-$ peut/peuvent être remplacé(s) par -O- ou par -C(=O)-, mais deux groupes $-CH_2-$adjacents ne peuvent pas être remplacés par -O-, ou peut être

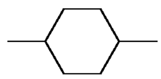

(cyclohexyle), où un ou plusieurs groupe(s) $-CH_2-$ peut/peuvent être remplacé(s) par -O-ou par -CO-, ou un radical acétophényle, isopropyle ou 3-heptyle, et

$R^{12}$ représente pour chaque occurrence, de manière indépendante les unes des autres, H, F, une chaîne alkyle en chaîne droite ou ramifiée qui comporte de 1 à 20 atome(s) de C, où un groupe $-CH_2-$ ou les groupes d'une pluralité de groupes $-CH_2-$ peut/peuvent être remplacé(s) par -O- ou par -C(=O)-, mais deux groupes $-CH_2-$ adjacents ne peuvent pas être remplacés par -O-, représente un radical hydrocarbone qui contient une unité cycloalkyle ou alkylcycloalkyle et où un groupe $-CH_2-$ ou les groupe d'une pluralité de groupes $-CH_2-$peut/peuvent être remplacé(s) par -O- ou par -C(=O)-, mais deux groupes $-CH_2-$ adjacents ne peuvent pas être remplacés par -O-, ou représente un radical hydrocarbone aromatique ou hétéroaromatique,

b) un ou plusieurs composé(s) de la formule II et un ou plusieurs composé(s) de la formule III

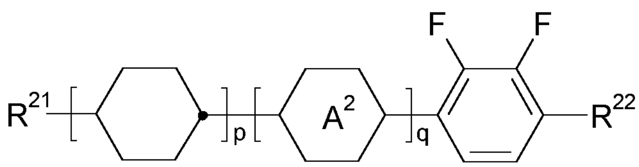

II

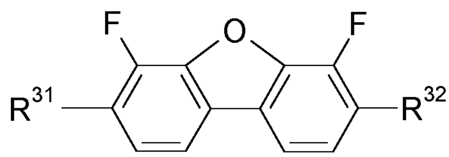

III

dans lesquelles

$R^{21}$ représente un radical alkényle non substitué qui comporte de 2 à 7 atomes de C,

$R^{22}$ représente un radical alkyle non substitué qui comporte de 1 à 7 atome(s) de C ou un radical alcoxy non substitué qui comporte de 1 à 6 atome(s) de C,

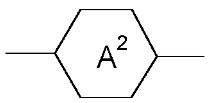

représente

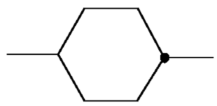,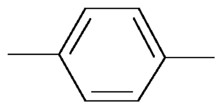,

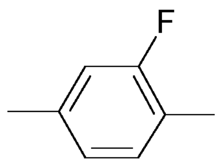

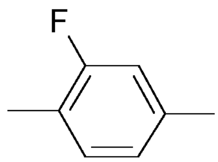

ou

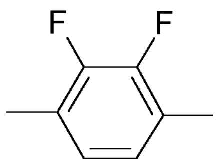,

p et q représentent dans chaque cas, de manière indépendante l'un de l'autre, 0, 1 ou 2 et (p + q) représente 1, 2, ou 3,
$R^{31}$, $R^{32}$ représentent, de manière indépendante l'un de l'autre, un radical alkyle non substitué qui comporte de 1 à 7 atome(s) de C ou un radical alcoxy non substitué qui comporte de 2 à 7 atomes de C.

**2.** Milieu selon la revendication 1, **caractérisé en ce que**, dans la formule I,

n représente 2.

**3.** Milieu selon la revendication 1 ou 2, **caractérisé en ce que**, dans la formula I, $R^{11}$ représente, de manière identique pour chaque occurrence

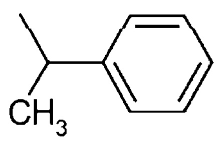.

**4.** Milieu selon une ou plusieurs des revendications 1 à 3, **caractérisé en ce qu'**il comprend un ou plusieurs composé(s) de la formule I qui est/sont sélectionné(s) parmi les composés des formules I-1 à I-4

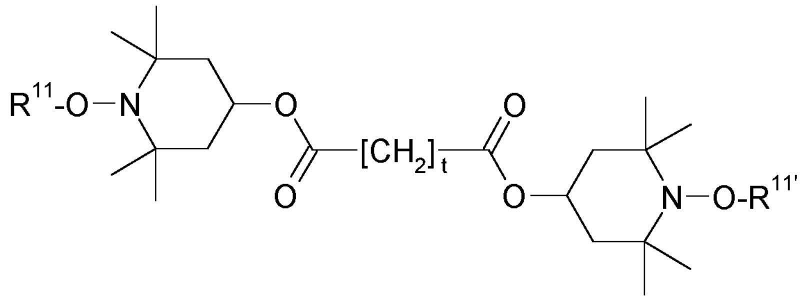

I-1

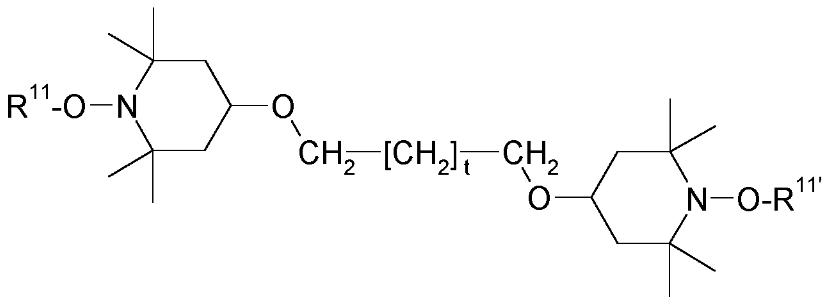

I-2

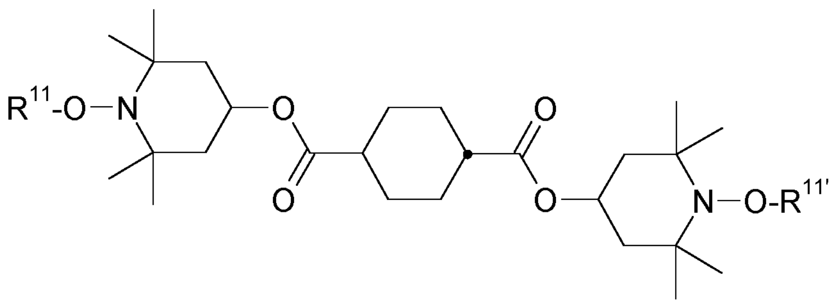

I-3

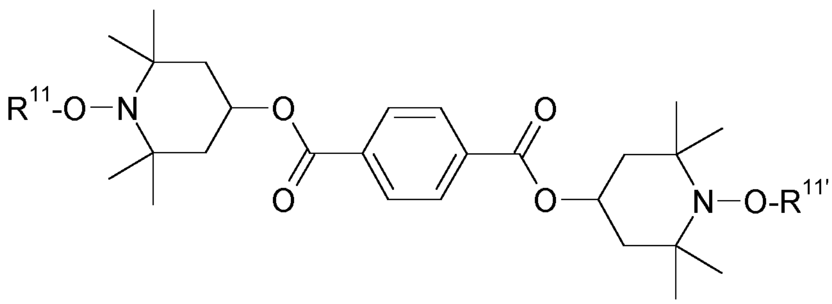

I-4

dans lesquelles les paramètres présentent les significations qui ont été indiquées selon la revendication 1 et

t représente un entier de 1 à 12

et

$R^{11}$ et $R^{11'}$ présentent dans chaque cas, de manière indépendante l'un de l'autre, l'une des significations qui ont été données pour $R^{11}$.

**5.** Milieu selon une ou plusieurs des revendications 1 à 4, **caractérisé en ce qu'**il comprend un ou plusieurs composé(s) de la formule I qui est/sont sélectionné(s) parmi les composés des formules I-1-1, I-1-8 à I-1-10 et I-5-1

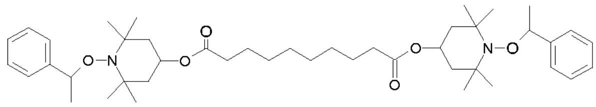

I-1-1

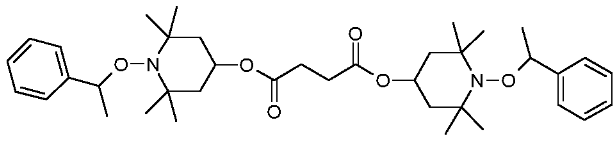

I-1-8

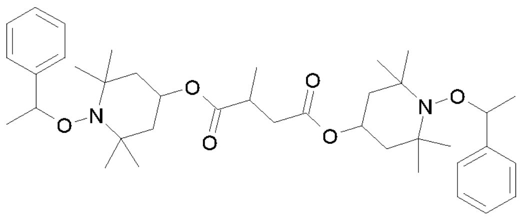

I-1-9

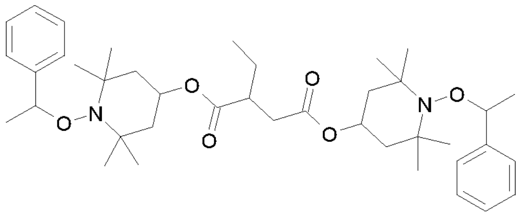

I-1-10

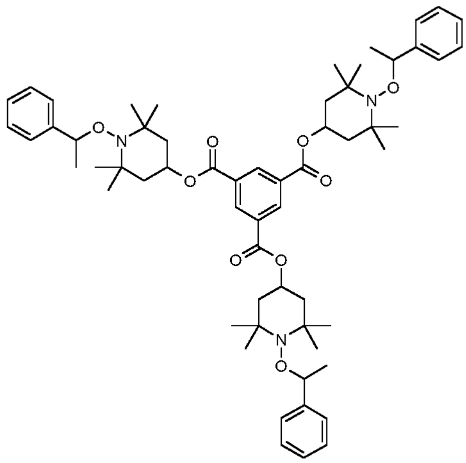

I-5-1.

6. Milieu cristallin liquide selon une ou plusieurs des revendications 1 à 5, **caractérisé en ce qu'**il comprend un ou plusieurs composé(s) qui est/sont sélectionné(s) parmi le groupe des composés des formules II-1 à II-4

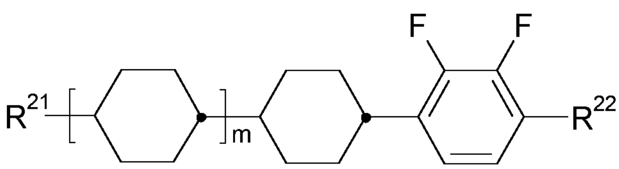

II-1

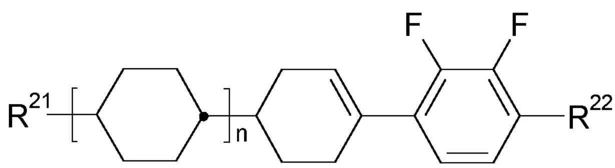

II-2

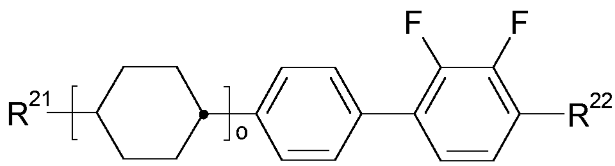

II-3

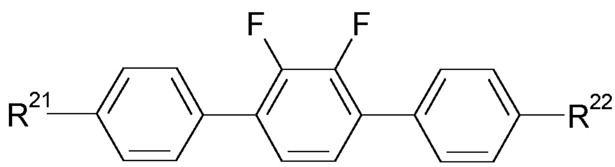

II-4

dans lesquelles

$R^{21}$ représente un radical alkyle non substitué qui comporte de 1 à 7 atome(s) de C,
$R^{22}$ représente un radical alkyle non substitué qui comporte de 1 à 7 atome(s) de C ou un radical alcoxy non substitué qui comporte de 1 à 6 atome(s) de C, et
m, n et o représentent dans chaque cas, de manière indépendante les uns des autres, 0 ou 1.

**7.** Milieu cristallin liquide selon une ou plusieurs des revendications 1 à 6, **caractérisé en ce qu'**il comprend un ou plusieurs composé(s) de la formule III-3,

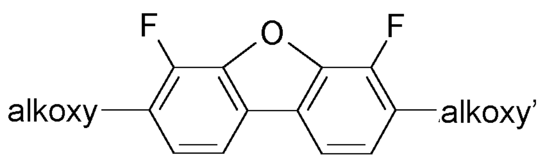

III-3

dans laquelle

alkoxy, alkoxy' représentent, de manière indépendante l'un de l'autre, un radical alcoxy qui comporte de 1 à 5 atome(s) de C.

**8.** Milieu cristallin liquide selon une ou plusieurs des revendications 1 à 7, **caractérisé en ce que** la concentration totale des composés de la formule I dans le milieu pris dans sa globalité est de 1 ppm ou plus à 1000 ppm ou moins.

**9.** Milieu selon une ou plusieurs des revendications 1 à 8, **caractérisé en ce qu'**il comprend de façon additionnelle un ou plusieurs composé(s) de la formule IV,

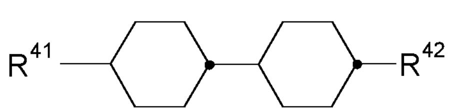

IV

dans laquelle

$R^{41}$ représente un radical alkyle non substitué qui comporte de 1 à 7 atome(s) de C ou un radical alkényle non substitué qui comporte de 2 à 7 atomes de C, et
$R^{42}$ représente un radical alkyle non substitué qui comporte de 1 à 7 atome(s) de C, un radical alcoxy non

substitué qui comporte de 1 à 6 atome(s) de C ou un radical alkényle non substitué qui comporte de 2 à 7 atomes de C.

**10.** Milieu selon une ou plusieurs des revendications 1 à 9, **caractérisé en ce que** la concentration totale des composés de la formule II dans le milieu pris dans sa globalité est de 25 % ou plus à 45 % ou moins.

**11.** Milieu selon une ou plusieurs des revendications 1 à 10, **caractérisé en ce qu'**il comprend un ou plusieurs composé(s) de la formule II-3, comme il a été indiqué selon la revendication 5.

**12.** Affichage électro-optique ou composant électro-optique, **caractérisé en ce qu'**il contient un milieu cristallin liquide selon une ou plusieurs des revendications 1 à 11.

**13.** Affichage selon la revendication 12, **caractérisé en ce qu'**il est basé sur l'effet VA ou ECB.

**14.** Affichage selon la revendication 12 ou 13, **caractérisé en ce qu'**il comporte un dispositif d'adressage par matrice active.

**15.** Utilisation d'un milieu selon au moins l'une des revendications 1 à 11 dans un affichage électro-optique ou dans un composant électro-optique.

**16.** Procédé pour la préparation d'un milieu cristallin liquide selon une ou plusieurs des revendications 1 à 11, **caractérisé en ce qu'**un ou plusieurs composé(s) de la formule I est/sont mélangé(s) avec un ou plusieurs composé(s) des formules II et III et en option avec un ou plusieurs composé(s) de la formule IV, comme il a été indiqué selon la revendication 9.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009129911 A1
- EP 2182046 A1
- WO 2008009417 A1
- WO 2009021671 A1
- WO 2009115186 A1
- JP S55023169 A
- JP H05117324 A
- WO 0218515 A1
- JP H09291282 A
- EP 11784442 A1
- EP 2514800 B1
- WO 2013182271 A1
- EP 0240379 A1


### In der Beschreibung aufgeführte Nicht-Patentliteratur


- **M.F. SCHIECKEL ; K. FAHRENSCHON.** Deformation of nematic liquid crystals with vertical orientation in electrical fields. *Appl. Phys. Lett.,* 1971, vol. 19, 3912
- **J.F. KAHN.** *Appl. Phys. Lett.,* 1972, vol. 20, 1193
- **G. LABRUNIE ; J. ROBERT.** *J. Appl. Phys.,* 1973, vol. 44, 4869
- **J. ROBERT ; F. CLERC.** *SID 80 Digest Techn. Papers,* 1980, 30
- **J. DUCHENE.** *Displays,* 1986, vol. 7, 3
- **H. SCHAD.** *SID 82 Digest Techn. Papers,* 1982, 244
- **S.H.LEE ; S. L. LEE ; H. Y. KIM.** *Appl. Phys. Lett.,* 1998, vol. 73 (20), 2881-2883
- **TOGASHI, S. ; SEKIGUCHI, K. ; TANABE, H. ; YAMAMOTO, E. ; SORIMACHI, K. ; TAJIMA, E. ; WATANABE, H. ; SHIMIZU, H.** A 210-288 Matrix LCD Controlled by Double Stage Diode Rings. *Proc. Eurodisplay,* September 1984, vol. 84, 141 ff
- **STROMER, M.** Design of Thin Film Transistors for Matrix Adressing of Television Liquid Crystal Displays. *Proc. Eurodisplay,* September 1984, vol. 84, 145 ff
- **YEO, S.D.** A LC Display for the TV Application. *SID 2004 International Symposium, Digest of Technical Papers,* vol. II, 758, , 759
- **YOSHIDE, H. et al.** MVA LCD for Notebook or Mobile PCs ... *SID 2004 International Symposium, Digest of Technical Papers, XXXV,* vol. I, 6-9
- **LIU, C.T. et al.** A 46-inch TFT-LCD HDTV Technology ... *SID 2004 International Symposium, Digest of Technical Papers,* vol. XXXV (II), 750-753
- **KIM, SANG SOO.** Super PVA Sets New State-of-the-Art for LCD-TV. *SID 2004 International Symposium, Digest of Technical Papers, XXXV,* vol. II, 760-763
- **SHIGETA, MITZUHIRO ; FUKUOKA, HIROFUMI.** Development of High Quality LCDTV. *SID 2004 International Symposium, Digest of Technical Papers,* vol. XXXV (II), 754-757
- Recent Advances in LCD Technology. **SOUK, JUN.** SID Seminar. Seminar Lecture Notes, 2004, M-6, , 1-M-6, 26
- LCD-Television. **MILLER, LAN.** SID Seminar. Seminar Lecture Notes, 2004, M-7, , 1-M-7, 32
- **KIM, HYEON KYEONG et al.** A 57-in. Wide UXGA TFT-LCD for HDTV Application. *SID 2004 International Symposium, Digest of Technical Papers,* vol. XXXV (I
- **OHKATSU, Y.** *J. of Japan Petroleum Institute,* 2008, vol. 51, 191-204
- Merck Liquid Crystals, Physical Properties of Liquid Crystals. Merck KGaA, November 1997